# EUROPEAN PATENT APPLICATION

(11) **EP 4 583 543 A1**
(43) Date of publication of application: **09.07.2025**
(21) Application number: 23859512.8
(22) Date of filing: 04.09.2023
(51) Int. Cl.: H04W 4/02

(54) **APPARATUS ASSEMBLY AND DEVICE SYSTEM**

(30) Priority: 02.09.2022 CN 202211071636; 23.05.2023 CN 202310587245
(71) Applicant: Positec Power Tools (Suzhou) Co., Ltd., Suzhou, Jiangsu 215123 (CN)
(72) Inventor: LV, Shaofeng, Suzhou, Jiangsu 215123 (CN); WANG, Tao, Suzhou, Jiangsu 215123 (CN); WU, Hongbing, Suzhou, Jiangsu 215123 (CN); JIAO, Shiping, Suzhou, Jiangsu 215123 (CN)
(74) Representative: Kilburn & Strode LLP
(86) International application number: PCT/CN2023/116783
(87) International publication number: WO 2024/046486

(57) **Abstract**

The present application provides an apparatus assembly and a device system. The apparatus assembly comprises a battery pack and an apparatus which is provided with a wireless communication module; the battery pack can communicate with the apparatus; the battery pack is provided with a battery pack wireless communication module; data of the battery pack can be directly transmitted to a user terminal by means of the battery pack wireless communication module, and can also be transmitted to the apparatus and then to the user terminal by means of the wireless communication module of the apparatus. The device system comprises an electric tool, a battery pack, and a hub device which is provided with a wireless communication module; the battery pack can communicate with the hub device; the electric tool can communicate with the battery pack; the hub device can receive the data of the battery pack and data of the electric tool stored in the battery pack, and transmit the data of the battery pack and the data of the electric tool to the user terminal by means of the wireless communication module of the hub device. The reliability of data interaction between devices in the apparatus assembly and the device system and the user terminal can be effectively improved, so that a user can effectively monitor and manage the devices, and low costs can be realized.

## Description

### TECHNICAL FIELD

The present application relates to the technical field of device communication, and in particular, to an apparatus assembly and a device system.

### BACKGROUND

Electric tools feature environmental friendliness and cleanness. Compared with fuel oil-powered tools, electric tools generate relatively little noise. Accordingly, electric tools are becoming increasingly popular with electric tool users. Electric gardening tools are widely applied to lawn trimming, landscaping, garden maintenance, and other operations. For large-scale outdoor operations, a gardening team typically consists of multiple operators. Since electric gardening tools are powered by battery packs, their runtime is often relatively short. Therefore, in outdoor operation scenarios, in order to improve work efficiency, gardening teams usually equip themselves not only with electric gardening tools but also with battery packs, charging apparatuses, and other equipment for on-site operations. However, during the use of electric gardening tools, battery packs, charging apparatuses, and other equipment, the devices are typically operated and controlled by the operator, and only the operator can obtain partial information about the operating state of the devices. This makes it difficult for the gardening team to monitor and manage numerous devices more comprehensively.

### Summary

In view of this, the present application aims to provide an apparatus assembly and a device system. Each device in the apparatus assembly and the device system can perform data interaction with a user terminal, such that the user can comprehensively monitor and manage each device in the apparatus assembly and the device system through the user terminal.

In a first aspect, the present application provides an apparatus assembly, comprising a battery pack and an apparatus provided with an apparatus wireless communication module, wherein the apparatus is configured to be electrically connected to the battery pack for power transmission, the battery pack is configured to communicate with the apparatus, and the battery pack is provided with a battery pack wireless communication module; the battery pack is configured with a first battery pack communication mode and a second battery pack communication mode; in the first battery pack communication mode, data of the battery pack is directly transmitted to a user terminal through the battery pack wireless communication module; in the second battery pack communication mode, the apparatus receives the data of the battery pack and transmits the data to the user terminal through the apparatus wireless communication module; the apparatus wireless communication module is configured to perform data transmission between the apparatus and the user terminal within a first preset communication distance, and the battery pack wireless communication module is configured to perform data transmission between the battery pack and the user terminal within a second preset communication distance, wherein the first preset communication distance is greater than the second preset communication distance.

In a possible embodiment, the apparatus is configured as an energy-storage-type charging apparatus, and the energy-storage-type charging apparatus comprises a battery module and a charging module provided with a charging interface, wherein the battery module is electrically connected to the charging module, and the charging module converts electric energy of the battery module and outputs the electric energy through the charging interface to charge the battery pack connected to the charging interface.

In a possible embodiment, the apparatus is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least configured to connect to an external alternating current (AC) power source and convert electric energy input from the external AC power source into direct current for outputting through the battery pack charging interface, thus charging the battery pack connected to the battery pack charging interface.

In a possible embodiment, in the second battery pack communication mode, the apparatus communicates with the battery pack in a wired communication mode to receive the data of the battery pack.

In a possible embodiment, the data of the battery pack received by the apparatus comprises real-time data of the battery pack and historical data stored in the battery pack; the battery pack comprises a first battery pack terminal, and the apparatus comprises a first apparatus terminal, wherein the first battery pack terminal is electrically connected to the first apparatus terminal to form a data transmission path, and both the real-time data of the battery pack and the historical data stored in the battery pack are transmitted to the apparatus through the data transmission path.

In a possible embodiment, the first battery pack terminal is configured as a serial port terminal, the first apparatus terminal is configured as a serial port terminal, the first battery pack terminal is configured to be electrically connected to the first apparatus terminal to form a serial port signal transmission path, and both the real-time data of the battery pack and the historical data stored in the battery pack are transmitted to the apparatus through the serial port signal transmission path.

In a possible embodiment, the first battery pack terminal and the first apparatus terminal are both configured as CAN terminals, CAN terminals of the battery pack comprise a first CAN terminal and a second CAN terminal, and CAN terminals of the apparatus comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the apparatus through the differential signal transmission path.

In a possible embodiment, the battery pack comprises a serial port terminal and a pair of CAN terminals, and the apparatus comprises a serial port terminal and a pair of CAN terminals; when that the battery pack is connected to the apparatus, the serial port terminal of the battery pack and the serial port terminal of the apparatus are electrically connected to form a serial port signal transmission path, and the pair of CAN terminals of the battery pack and the pair of CAN terminals of the apparatus are electrically connected to form a differential signal transmission path, wherein the battery pack and the apparatus choose one of the serial port signal transmission path and the differential signal transmission path to transmit the real-time data of the battery pack and the historical data stored in the battery pack.

In a possible embodiment, during the power transmission when that the battery pack is connected to the apparatus, the real-time data of the battery pack and the historical data stored in the battery pack are transmitted at different time periods.

In a possible embodiment, the battery pack is configured to be connected to an electric tool and supply power to the electric tool, and the electric tool is configured to communicate with the battery pack; the battery pack is configured to receive data of the electric tool and transmit the data to the user terminal through the battery pack wireless communication module.

In a possible embodiment, data of the apparatus is transmitted to the user terminal through the apparatus wireless communication module; the apparatus and/or the battery pack is configured to receive control instruction data sent by the user terminal; wherein the apparatus receives apparatus control instruction data sent by the user terminal through the apparatus wireless communication module; the battery pack receives battery pack control instruction data sent by the user terminal through the battery pack wireless communication module, or the apparatus receives the battery pack control instruction data sent by the user terminal through the apparatus wireless communication module and transmits the battery pack control instruction data to the battery pack.

In a second aspect, the present application provides a device system, comprising a first device, a battery pack, and a hub device provided with a first wireless communication module, wherein the battery pack is configured to be connected to the first device and supply power for the operation of the first device and the battery pack is configured to communicate with the first device, and the hub device and the first device are configured as devices that perform different work tasks; the hub device is configured to be electrically connected to the battery pack for power transmission, and the battery pack is configured to communicate with the hub device; both data of the first device and data of the battery pack are transmitted to a user terminal through the first wireless communication module of the hub device; when that the battery pack is connected to the first device, the battery pack receives and stores the data of the first device, and when that the battery pack is in communication connection with the hub device, the hub device receives the data of the battery pack and the data of the first device stored in the battery pack and transmits the data of the battery pack and the data of the first device stored in the battery pack to the user terminal through the first wireless communication module; the first device is configured as an electric tool.

In a possible embodiment, the device system further comprises a second device, and data of the second device is also transmitted to the user terminal through the first wireless communication module of the hub device; the second device is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least configured to connect to an external alternating current (AC) power source and convert alternating current input from the external AC power source into direct current for outputting through the battery pack charging interface, thus charging the battery pack connected to the battery pack charging interface; the battery pack charger is configured to communicate with the battery pack; when that the battery pack is connected to the battery pack charger, the battery pack receives and stores data of the battery pack charger, and when that the battery pack is in communication connection with the hub device, the hub device receives the data of the battery pack and the data of the battery pack charger stored in the battery pack and transmits the data of the battery pack and the data of the battery pack charger stored in the battery pack to the user terminal through the first wireless communication module.

In a possible embodiment, the first device and the second device communicate with the battery pack in a wired communication mode.

In a possible embodiment, the hub device communicates with the battery pack in a wired communication mode.

In a possible embodiment, the device system further comprises a third device, wherein the first wireless communication module comprises a short-distance wireless communication module and a long-distance wireless communication module, the third device is provided with a second wireless communication module that is matched and connected with the short-distance wireless communication module, and the third device only communicates with the hub device through the second wireless communication module and the short-distance wireless communication module; data of the third device is transmitted to the hub device through the second wireless communication module and the short-distance wireless communication module and then transmitted to the user terminal through the long-distance wireless communication module of the hub device.

In a possible embodiment, the third device is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least configured to connect to an external AC power source and convert alternating current input from the external AC power source into direct current for outputting through the battery pack charging interface, thus charging the battery pack connected to the battery pack charging interface; data of the battery pack charger is be transmitted to the hub device through the second wireless communication module and the short-distance wireless communication module and then transmitted to the user terminal through the long-distance wireless communication module of the hub device.

In a possible embodiment, the third device is configured as a power manager, the power manager comprising: a power manager housing; an AC input end arranged on the power manager housing and configured to connected to an external AC power source; a plurality of AC output ends arranged on the power manager housing and configured to connected to external electrical devices to supply alternating current to the external electrical devices; and a control module and a switch circuit arranged in the power manager housing, wherein the control module is electrically connected to the switch circuit, and the switch circuit is configured to receive control signals output by the control module and control, based on the control signals, conduction to be enabled or disabled between the AC input end and the plurality of AC output ends, separately; data of the power manager is transmitted to the hub device through the second wireless communication module and the short-distance wireless communication module and then transmitted to the user terminal through the long-distance wireless communication module of the hub device.

In a possible embodiment, the third device is configured as an inverter, and the inverter comprises an inverter housing, an inverter battery pack interface arranged on the inverter housing, an AC output interface, and an inverter circuit arranged in the inverter housing, wherein the inverter circuit is configured to convert direct current (DC) electric energy of the battery pack connected to the inverter battery pack interface into AC electric energy for outputting through the AC output interface; data of the inverter is transmitted to the hub device through the second wireless communication module and the short-distance wireless communication module and then transmitted to the user terminal through the long-distance wireless communication module of the hub device.

In a possible embodiment, the device system comprises a battery pack charger, wherein the battery pack charger comprises a charger housing, a battery pack charging interface arranged on the charger housing, and a charging circuit arranged in the charger housing, wherein the charging circuit is electrically connected to the battery pack charging interface and the charging circuit is at least configured to connect to an external power source and convert electric energy from the external power source into direct current for outputting through the battery pack charging interface; the battery pack comprises a terminal pole seat provided with several terminals, and the terminal pole seat is electrically connected to the battery pack charging interface to obtain DC electric energy; and
an inverter, wherein the inverter comprises an inverter housing, an inverter battery pack interface arranged on the inverter housing, an AC output interface, and an inverter circuit arranged in the inverter housing, wherein the terminal pole seat of the battery pack is configured to be electrically connected to the inverter battery pack interface, and the inverter circuit is configured to convert DC electric energy of the battery pack into AC electric energy for outputting through the AC output interface; wherein the battery pack is configured to be connected to the electric tool to provide the DC electric energy for the electric tool, and the battery pack is configured to be connected to the inverter battery pack interface to provide the AC electric energy for an AC tool connected to the AC output interface.

In a possible embodiment, the battery pack is provided with a battery pack wireless communication module; the electric tool is configured with a first tool communication mode and a second tool communication mode; in the first tool communication mode, the battery pack receives and stores data of the electric tool, and when that the battery pack is in communication connection with the hub device, the hub device receives the data of the electric tool stored in the battery pack and transmits the data of the electric tool to the user terminal through the first wireless communication module; in the second tool communication mode, the battery pack receives the data of the electric tool and directly transmits the data of the electric tool to the user terminal through the battery pack wireless communication module; the first wireless communication module is configured to perform data transmission between the hub device and the user terminal within a first preset communication distance, and the battery pack wireless communication module is configured to perform data transmission between the battery pack and the user terminal within a second preset communication distance, wherein the first preset communication distance is greater than the second preset communication distance.

In a possible embodiment, the battery pack is provided with a battery pack wireless communication module; the battery pack charger is configured with a first charger communication mode and a second charger communication mode, wherein in the first charger communication mode, the battery pack receives and stores the data of the battery pack charger, and when that the battery pack is in communication connection with the hub device, the hub device receives the data of the battery pack charger stored in the battery pack and transmits the data of the battery pack charger to the user terminal through the first wireless communication module; in the second charger communication mode, the battery pack receives the data of the battery pack charger and directly transmits the data of the battery pack charger to the user terminal through the battery pack wireless communication module; the first wireless communication module is configured to perform data transmission between the hub device and the user terminal within a first preset communication distance, and the battery pack wireless communication module is configured to perform data transmission between the battery pack and the user terminal within a second preset communication distance, wherein the first preset communication distance is greater than the second preset communication distance.

In a possible embodiment, the battery pack charger is configured with a first battery pack charger communication mode and a second battery pack charger communication mode; in the first battery pack charger communication mode, the data of the battery pack charger is directly transmitted to the user terminal through the second wireless communication module; in the second battery pack charger communication mode, the data of the battery pack charger is transmitted to the hub device through the second wireless communication module and the short-distance wireless communication module and then transmitted to the user terminal through the long-distance wireless communication module of the hub device; the long-distance wireless communication module is configured to perform data transmission between the hub device and the user terminal within a first preset communication distance, and the second wireless communication module is configured to perform data transmission between the battery pack charger and the user terminal within a charger preset communication distance, wherein the first preset communication distance is greater than the charger preset communication distance.

In a possible embodiment, the power manager is configured with a first manager communication mode and a second manager communication mode; in the first manager communication mode, the data of the power manager is directly transmitted to the user terminal through the second wireless communication module; in the second manager communication mode, the data of the power manager is transmitted to the hub device through the second wireless communication module and the short-distance wireless communication module and then transmitted to the user terminal through the long-distance wireless communication module of the hub device; the long-distance wireless communication module is configured to perform data transmission between the hub device and the user terminal within a first preset communication distance, and the second wireless communication module is configured to perform data transmission between the power manager and the user terminal within a power manager preset communication distance, wherein the first preset communication distance is greater than the power manager preset communication distance.

In a possible embodiment, the inverter is configured with a first inverter communication mode and a second inverter communication mode; in the first inverter communication mode, the data of the inverter is directly transmitted to the user terminal through the second wireless communication module; in the second inverter communication mode, the data of the inverter is c transmitted to the hub device through the second wireless communication module and the short-distance wireless communication module and then transmitted to the user terminal through the long-distance wireless communication module of the hub device; the long-distance wireless communication module is configured to perform data transmission between the hub device and the user terminal within a first preset communication distance, and the second wireless communication module is configured to perform data transmission between the inverter and the user terminal within an inverter preset communication distance, wherein the first preset communication distance is greater than the inverter preset communication distance.

In a possible embodiment, the hub device is configured as an energy-storage-type charging apparatus, and the energy-storage-type charging apparatus comprises a battery module and a charging module provided with a charging interface, wherein the battery module is electrically connected to the charging module, and the charging module converts electric energy of the battery module and outputs the electric energy through the charging interface.

In a possible embodiment, the hub device is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least configured to connect to an external AC power source and convert alternating current input from the external AC power source into direct current for outputting through the battery pack charging interface, thus charging the battery pack connected to the battery pack charging interface.

In a possible embodiment, the hub device is configured as an inverter, and the inverter comprises an inverter housing, an inverter battery pack interface arranged on the inverter housing, an AC output interface, and an inverter circuit arranged in the inverter housing, wherein the inverter circuit is configured to convert direct current of the battery pack connected to the inverter battery pack interface into alternating current for outputting through the AC output interface.

In a possible embodiment, the data of the battery pack received by the hub device comprises real-time data of the battery pack and historical data stored in the battery pack; the battery pack comprises a first battery pack terminal, and the hub device comprises a first apparatus terminal, wherein the first battery pack terminal is electrically connected to the first apparatus terminal to form a data transmission path, and both the real-time data of the battery pack and the historical data stored in the battery pack are transmitted to the hub device through the data transmission path.

In a possible embodiment, the first battery pack terminal is configured as a serial port terminal, the first apparatus terminal is configured as a serial port terminal, the first battery pack terminal is configured to be electrically connected to the first apparatus terminal to form a serial port signal transmission path, and both the real-time data of the battery pack and the historical data stored in the battery pack are transmitted to the hub device through the serial port signal transmission path.

In a possible embodiment, the first battery pack terminal and the first apparatus terminal are both configured as CAN terminals, CAN terminals of the battery pack comprise a first CAN terminal and a second CAN terminal, and CAN terminals of the hub device comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the hub device through the differential signal transmission path.

In a possible embodiment, the battery pack comprises a serial port terminal and a pair of CAN terminals, and the hub device comprises a serial port terminal and a pair of CAN terminals; when that the battery pack is connected to the hub device, the serial port terminal of the battery pack and the serial port terminal of the hub device are electrically connected to form a serial port signal transmission path, and the pair of CAN terminals of the battery pack and the pair of CAN terminals of the hub device are electrically connected to form a differential signal transmission path, wherein the battery pack and the hub device choose one of the serial port signal transmission path and the differential signal transmission path to transmit the real-time data of the battery pack and the historical data stored in the battery pack.

In a possible embodiment, during the power transmission when that the battery pack is connected to the hub device, the real-time data of the battery pack and the historical data stored in the battery pack are transmitted at different time periods; comprises an inverter housing, an inverter battery pack interface arranged on the inverter housing, an AC output interface, and an inverter circuit arranged in the inverter housing, wherein the inverter circuit is used to convert DC electric energy of the battery pack connected to the inverter battery pack interface into AC electric energy for outputting through the AC output interface.

Based on the above, in the technical solutions provided by the present application, by reasonably configuring the communication module for each device in the apparatus assembly and the device system and reasonably configuring the communication mode between the devices, the communication modules can be effectively utilized, and the reliability of data interaction between each device in the apparatus assembly and the device system and the user terminal can be improved, such that the user can effectively monitor and manage each device in the apparatus assembly and the device system, and low costs can be achieved.

The present application aims to provide an energy system and a device system. Each device in the energy system and the device system can perform data interaction with a user terminal, such that the user can comprehensively monitor and manage each device in the energy system and the device system through the user terminal.

In a first aspect, the present application provides an energy system. The energy system comprises a battery pack and a charging apparatus, where the charging apparatus can charge the battery pack, and the battery pack can communicate with the charging apparatus, where the charging apparatus is provided with a first wireless communication module, and the battery pack is provided with a second wireless communication module; the battery pack is configured with a first battery pack communication mode and a second battery pack communication mode; in the first battery pack communication mode, data of the battery pack is directly transmitted to a user terminal through the second wireless communication module; in the second battery pack communication mode, the charging apparatus receives the data of the battery pack and transmits the data to the user terminal through the first wireless communication module; the first wireless communication module is configured to enable data transmission between the charging apparatus and the user terminal within a first preset communication distance, and the second wireless communication module is configured to enable data transmission between the battery pack and the user terminal within a second preset communication distance, where the first preset communication distance is greater than the second preset communication distance.

In a possible embodiment, the charging apparatus is configured as an energy-storage-type charging apparatus, and the energy-storage-type charging apparatus comprises a battery module and a charging module provided with a charging interface, wherein the battery module is electrically connected to the charging module, and the charging module converts electric energy of the battery module and outputs the electric energy through the charging interface.

In a possible embodiment, in the second battery pack communication mode, the charging apparatus communicates with the battery pack in a wired communication mode to receive the data of the battery pack; and the data of the battery pack received by the charging apparatus comprises real-time data of the battery pack and historical data stored in the battery pack.

In a possible embodiment, the wired communication mode between the battery pack and the charging apparatus is a CAN interface communication mode or a serial port communication mode.

In a possible embodiment, the user terminal includes an interactive terminal and a cloud server, the interactive terminal is configured with a third wireless communication module, and the interactive terminal can perform data interaction with the cloud server;
the battery pack can perform data interaction with the third wireless communication module of the interactive terminal through the second wireless communication module; the charging apparatus can perform data interaction with the cloud server through the first wireless communication module.

In a possible embodiment, the battery pack includes a first battery pack terminal, and the charging apparatus includes a first charging apparatus terminal, wherein the first battery pack terminal is electrically connected to the first charging apparatus terminal to form a data transmission path, and both the real-time data of the battery pack and the historical data stored in the battery pack are transmitted to the charging apparatus through the data transmission path.

In a possible embodiment, the first battery pack terminal is configured as a serial port terminal, the first charging apparatus terminal is configured as a serial port terminal, the first battery pack terminal is configured to be electrically connected to the first charging apparatus terminal to form a serial port signal transmission path, and both the real-time data of the battery pack and the historical data stored in the battery pack are transmitted to the charging apparatus through the serial port signal transmission path.

In a possible embodiment, the first battery pack terminal and the first charging apparatus terminal are both configured as CAN terminals, CAN terminals of the battery pack comprise a first CAN terminal and a second CAN terminal, and CAN terminals of the charging apparatus comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the charging apparatus through the differential signal transmission path.

In a possible embodiment, the battery pack comprises a serial port terminal and a pair of CAN terminals, and the charging apparatus comprises a serial port terminal and a pair of CAN terminals; when that the battery pack is connected to the charging apparatus, the serial port terminal of the battery pack and the serial port terminal of the charging apparatus are electrically connected to form a serial port signal transmission path, and the pair of CAN terminals of the battery pack and the pair of CAN terminals of the charging apparatus are electrically connected to form a differential signal transmission path, wherein the battery pack and the charging apparatus choose one of the serial port signal transmission path and the differential signal transmission path to transmit the real-time data of the battery pack and the historical data stored in the battery pack.

In a possible embodiment, during the charging process when that the battery pack is connected to the charging apparatus, the real-time data of the battery pack and the historical data stored in the battery pack are transmitted at different time periods.

In a possible embodiment, when the battery pack performs data interaction with the charging apparatus, one piece of data is transmitted completely before the next piece of data is transmitted.

In a possible embodiment, the battery pack can be connected to an electric tool in a matching manner and supply power to the electric tool, and the electric tool can communicate with the battery pack; the battery pack can receive data of the electric tool and transmit the data to the user terminal through the second wireless communication module, and the data of the electric tool includes operating state data.

In a possible embodiment, the operation state data of the charging apparatus is transmitted to the user terminal through the first wireless communication module; the charging apparatus and/or the battery pack is configured to receive control instruction data sent by the user terminal; wherein the charging apparatus receives charging apparatus control instruction data sent by the user terminal through the first wireless communication module; the battery pack receives battery pack control instruction data sent by the user terminal through the second wireless communication module, or the charging apparatus receives the battery pack control instruction data sent by the user terminal through the first wireless communication module and transmits the battery pack control instruction data to the battery pack.

In a possible embodiment, the operating state data of the battery pack includes one or more of current state information, charging/discharging parameter information, and battery pack fault information of the battery pack;
the current state information of the battery pack includes the charging/discharging state information and the number of charging-discharging cycles of the battery pack, and the charging/discharging state information is used to represent that the battery pack is in a charging state, a discharging state, or a non-charging/discharging state;
the charging/discharging parameter information includes one or more of battery cell voltage, charging/discharging current, battery cell temperature, SOC, SOP, SOH, elapsed charging time, and remaining charging time.

In a possible embodiment, the operating state data of the charging apparatus includes one or more of current state information, charging/discharging parameter information, and charging apparatus fault information of the charging apparatus;
the current state information of the charging apparatus includes the charging/discharging state information and the number of charging-discharging cycles of the charging apparatus, and the charging/discharging state information is used to represent that the charging apparatus is in a charging state, a discharging state, or a non-charging/discharging state; wherein the charging/discharging state information includes one or more of voltage, current, temperature, SOC, SOP, SOH, elapsed charging time, and remaining charging time.

In a possible embodiment, the first wireless communication module includes one of a 3G module, a 4G module, a 5G module, a Lora module, a sigfox module, and an NB-IOT module.

In a possible embodiment, the second wireless communication module includes one of a Bluetooth module, a WiFi module, a Zigbee module, a sub-1G module, and an RF433 module.

In a second aspect, the present application provides a device system comprising a peripheral apparatus system and an energy system;
the peripheral apparatus system includes an electric tool;
the energy system includes a battery pack and a charging apparatus, wherein the charging apparatus can charge the battery pack, and the battery pack can communicate with the charging apparatus, wherein the charging apparatus is provided with a first wireless communication module;
the battery pack can be connected to the electric tool in a matching manner and supply power to the electric tool, and the battery pack can communicate with the electric tool;
both the data of the electric tool and the data of the battery pack can be transmitted to the user terminal through the first wireless communication module of the charging apparatus;
when the battery pack is connected to the electric tool in a matching manner, the battery pack receives and stores data of the electric tool, and when the battery pack is in communication connection with the charging apparatus, the charging apparatus receives the data of the battery pack and the data of the electric tool stored in the battery pack and transmits the data of the battery pack and the data of the electric tool stored in the battery pack to the user terminal through the first wireless communication module.

In a possible embodiment, the peripheral apparatus system further comprises a battery pack charger, and the battery pack charger comprises a charger housing, a battery pack charging interface arranged on the charger housing, and a charging circuit arranged in the charger housing, wherein the charging circuit is electrically connected to the charging interface, and the charging circuit is configured to connect to an external alternating current (AC) power source and convert alternating current input from the external AC power source into direct current for outputting through the charging interface, thus charging the battery pack connected to the charging interface;
the battery pack charger is configured to communicate with the battery pack;
data of the battery pack charger is transmitted to the user terminal through the first wireless communication module of the charging apparatus;
when that the battery pack is connected to the battery pack charger, the battery pack receives and stores data of the battery pack charger, and when that the battery pack is in communication connection with the charging device, the charging device receives the data of the battery pack and the data of the battery pack charger stored in the battery pack and transmits the data of the battery pack and the data of the battery pack charger stored in the battery pack to the user terminal through the first wireless communication module.

In a possible embodiment, the peripheral apparatus system further comprises a power manager, and the power manager comprises a power manager housing; an AC input end arranged on the power manager housing and configured to connected to an external AC power source; a plurality of AC output ends arranged on the power manager housing and configured to be connected to external electrical devices to supply alternating current to the external electrical devices; and a control module and a switch circuit arranged in the power manager housing, wherein the control module is electrically connected to the switch circuit, and the switch circuit is configured to receive control signals output by the control module and control, based on the control signals, conduction to be enabled or disabled between the AC input end and the plurality of AC output ends, separately; the power manager is provided with a power manager wireless communication module, and the charging apparatus is provided with a charging apparatus wireless communication module that is matched with the power manager wireless communication module; data of the power manager is transmitted to the charging apparatus through the power manager wireless communication module and the charging apparatus wireless communication module and then transmitted to the user terminal through the first wireless communication module of the charging apparatus.

In a possible embodiment, the power manager is configured with a first manager communication mode and a second manager communication mode; in the first manager communication mode, the data of the power manager is directly transmitted to the user terminal through the power manager wireless communication module; in the second manager communication mode, the data of the power manager is transmitted to the charging apparatus through the power manager wireless communication module and the charging apparatus wireless communication module and then transmitted to the user terminal through the first wireless communication module of the charging apparatus;
the first wireless communication module is configured to perform data transmission between the charging apparatus and the user terminal within a first preset communication distance, and the power manager wireless communication module is configured to perform data transmission between the power manager and the user terminal within a power manager preset communication distance, wherein the first preset communication distance is greater than the power manager preset communication distance.

In a possible embodiment, the battery pack is provided with a second wireless communication module; the electric tool is configured with a first tool communication mode and a second tool communication mode; in the first tool communication mode, the battery pack receives and stores data of the electric tool, and when that the battery pack is in communication connection with the charging apparatus, the charging apparatus receives the data of the electric tool stored in the battery pack and transmits the data of the electric tool to the user terminal through the first wireless communication module; in the second tool communication mode, the battery pack receives the data of the electric tool and directly transmits the data of the electric tool to the user terminal through the second wireless communication module; the first wireless communication module is configured to perform data transmission between the charging apparatus and the user terminal within a first preset communication distance, and the battery pack wireless communication module is configured to perform data transmission between the battery pack and the user terminal within a second preset communication distance, wherein the first preset communication distance is greater than the second preset communication distance.

In a possible embodiment, the battery pack is provided with a second wireless communication module; the battery pack charger is configured with a first charger communication mode and a second charger communication mode, wherein in the first charger communication mode, the battery pack receives and stores the data of the battery pack charger, and when that the battery pack is in communication connection with the charging apparatus, the charging apparatus receives the data of the battery pack charger stored in the battery pack and transmits the data of the battery pack charger to the user terminal through the first wireless communication module; in the second charger communication mode, the battery pack receives the data of the battery pack charger and directly transmits the data of the battery pack charger to the user terminal through the second wireless communication module; the first wireless communication module is configured to perform data transmission between the charging apparatus and the user terminal within a first preset communication distance, and the second wireless communication module is configured to perform data transmission between the battery pack and the user terminal within a second preset communication distance, wherein the first preset communication distance is greater than the second preset communication distance.

In a possible embodiment, the data of the electric tool includes one or more of operating control data of the electric tool, remaining electric quantity in an operating state, remaining tool use time, number of switching times, accumulated operating time, tool use records, and tool fault information.

In a possible embodiment, the data of the battery pack charger includes one or more of charger operating parameters, charging capacity in the charging state, remaining charging time, accumulated charging time and times of charging, charging records, and charger fault information of the battery pack charger.

In a possible embodiment, the charging apparatus is configured as an energy-storage-type charging apparatus, and the energy-storage-type charging apparatus comprises a battery module and a charging module provided with a charging interface, wherein the battery module is electrically connected to the charging module, and the charging module converts electric energy of the battery module and outputs the electric energy through the charging interface.

In a possible embodiment, in the second battery pack communication mode, the charging apparatus communicates with the battery pack in a wired communication mode to receive the data of the battery pack; and the data of the battery pack received by the apparatus comprises real-time data of the battery pack and historical data stored in the battery pack.

In a possible embodiment, the wired communication mode between the battery pack and the charging apparatus is a CAN interface communication mode or a serial port communication mode.

In a possible embodiment, the user terminal includes an interactive terminal and a cloud server, the interactive terminal is configured with a third wireless communication module, and the interactive terminal can perform data interaction with the cloud server;
the battery pack can perform data interaction with the third wireless communication module of the interactive terminal through the second wireless communication module; the charging apparatus can perform data interaction with the cloud server through the first wireless communication module.

In a possible embodiment, the battery pack includes a first battery pack terminal, and the charging apparatus includes a first charging apparatus terminal, wherein the first battery pack terminal is electrically connected to the first charging apparatus terminal to form a data transmission path, and both the real-time data of the battery pack and the historical data stored in the battery pack are transmitted to the charging apparatus through the data transmission path.

In a possible embodiment, the first battery pack terminal is configured as a serial port terminal, the first charging apparatus terminal is configured as a serial port terminal, the first battery pack terminal is configured to be electrically connectable to the first charging apparatus terminal to form a serial port signal transmission path, and both the real-time data of the battery pack and the historical data stored in the battery pack are transmitted to the charging apparatus through the serial port signal transmission path.

In a possible embodiment, the first battery pack terminal and the first charging apparatus terminal are both configured as CAN terminals, CAN terminals of the battery pack comprise a first CAN terminal and a second CAN terminal, and CAN terminals of the charging apparatus comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the charging apparatus through the differential signal transmission path.

In a possible embodiment, the battery pack comprises a serial port terminal and a pair of CAN terminals, and the charging apparatus comprises a serial port terminal and a pair of CAN terminals; when that the battery pack is connected to the charging apparatus, the serial port terminal of the battery pack and the serial port terminal of the charging apparatus are electrically connected to form a serial port signal transmission path, and the pair of CAN terminals of the battery pack and the pair of CAN terminals of the charging apparatus are electrically connected to form a differential signal transmission path, wherein the battery pack and the charging apparatus choose one of the serial port signal transmission path and the differential signal transmission path to transmit the real-time data of the battery pack and the historical data stored in the battery pack.

Based on the above, in the technical solutions provided by the present application, by reasonably configuring the communication module for each device in the energy system and the device system and reasonably configuring the communication mode between the devices, the communication modules can be effectively utilized, and the reliability of data interaction between each device in the energy system and the device system and the user terminal can be improved, such that the user can effectively monitor and manage each device in the energy system and the device system, and low costs can be achieved.

### BRIEF DESCRIPTION OF THE DRAWINGS

In order to more clearly illustrate the technical solutions in the embodiments of the present disclosure or in the prior art, the drawings required to be used in the description of the embodiments or the prior art are briefly introduced below. It is apparent that the drawings in the description below are some embodiments of the present disclosure, and those of ordinary skill in the art can obtain other drawings according to these drawings without creative efforts.
FIG. 1 is a schematic diagram showing the communication between an apparatus assembly and a user terminal provided according to an embodiment of the present application;
FIG. 2 is a schematic diagram showing the communication between an electric tool, an apparatus assembly, and a user terminal provided according to an embodiment of the present application;
FIG. 3 is a schematic diagram showing the communication between a battery pack charger, an apparatus assembly, and a user terminal provided according to an embodiment of the present application;
FIG. 4 is an overall structural diagram of an energy-storage-type charging apparatus provided according to an embodiment of the present application;
FIG. 5 is a circuit block diagram of the energy-storage-type charging apparatus provided according to an embodiment of the present application;
FIG. 6 is a schematic diagram of a scenario where the energy-storage-type charging apparatus charges a battery pack provided according to an embodiment of the present application;
FIG. 7 is a schematic diagram of a scenario where the energy-storage-type charging apparatus charges a gardening robot tool provided according to an embodiment of the present application;
FIG. 8 is a schematic diagram of a scenario where the battery pack is used for supplying power to an electric tool provided according to an embodiment of the present application;
FIG. 9 is a schematic diagram of a scenario where the battery pack charger charges the battery pack provided according to an embodiment of the present application;
FIG. 10 is a terminal arrangement diagram of a charging interface of the charging apparatus provided according to an embodiment of the present application;
FIG. 11 is a terminal arrangement diagram of a charging interface of the battery pack provided according to an embodiment of the present application;
FIG. 12 is a flowchart of a communication method between the battery pack and the charging apparatus provided according to an embodiment of the present application;
FIG. 13 is an interaction diagram showing the interaction between the battery pack and the charging apparatus for real-time data of the battery pack provided according to an embodiment of the present application;
FIG. 14 is an interaction diagram showing the interaction between the battery pack and the charging apparatus for historical data of the battery pack provided according to an embodiment of the present application;
FIG. 15 is a schematic diagram showing the communication between a device system and a user terminal provided according to an embodiment of the present application;
FIG. 16 is a schematic diagram showing the communication between a device system and a user terminal provided according to yet another embodiment of the present application;
FIG. 17 is a schematic diagram showing the communication between a device system and a user terminal provided according to yet another embodiment of the present application;
FIG. 18 is a schematic diagram showing the communication between a device system and a user terminal provided according to yet another embodiment of the present application;
FIG. 19 is a schematic diagram showing the communication between a device system and a user terminal provided according to yet another embodiment of the present application;
FIG. 20 is a circuit block diagram of a power manager provided according to an embodiment of the present application;
FIG. 21 is a structural diagram of the power manager provided according to an embodiment of the present application;
FIG. 22 is a circuit block diagram of an energy-storage-type charging apparatus provided according to yet another embodiment of the present application;
FIG. 23 is a flowchart of a charging mode switching method of an energy-storage-type charging apparatus provided according to an embodiment of the present application;
FIG. 24 is a flow chart of an economical charging method for an energy-storage-type charging apparatus provided according to an embodiment of the present application;
FIG. 25 is a block diagram showing the control principle of the battery pack finding function provided according to an embodiment of the present application;
FIG. 26 is schematic diagram showing the communication in the device system provided according to yet another embodiment of the present application;
FIG. 27 is a schematic diagram showing the communication in the device system provided according to yet another embodiment of the present application;
FIG. 28 is a schematic diagram showing the communication in the device system provided according to yet another embodiment of the present application;
FIG. 29 is a schematic diagram showing the communication in the device system provided according to yet another embodiment of the present application;
FIG. 30 is a schematic diagram showing the communication in the device system provided according to yet another embodiment of the present application;

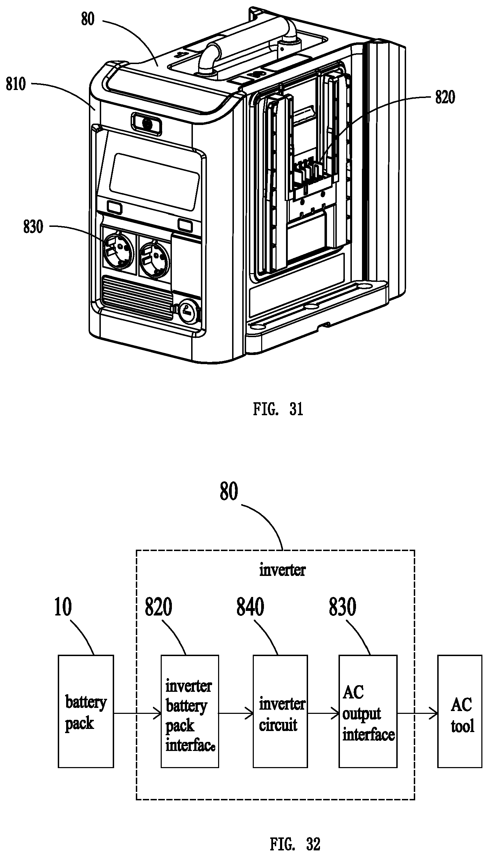

FIG. 31 is a structural diagram of an inverter provided according to an embodiment of the present application; and
FIG. 32 is a circuit block diagram of the inverter provided according to an embodiment of the present application.

### DETAILED DESCRIPTION

The technical solutions in embodiments of the present application will be described clearly and completely with reference to the drawings in the embodiments of the present application. It is apparent that the described embodiments are merely part of the embodiments of the present application, but not all of the embodiments. All other embodiments obtained, based on the embodiments in the present application, by those of ordinary skill in the art without creative efforts shall all fall within the protection scope of the present application.

With the application of the Internet of Things (IoT) technology in the field of electric tools, numerous devices of a gardening team can communicate with a user terminal by arranging a communication module, such that data interaction is realized, and a user can monitor and manage the operating state of the devices through the user terminal. However, in the prior art, the communication mode between the devices and the user terminal is often single, with either a communication module capable of realizing long-distance communication or a communication module capable of realizing short-distance communication being adopted. The long-distance communication mode features high reliability, but the cost of the communication module is high and the market competitiveness of a product is influenced; the short-distance communication mode features low communication module cost, but its communication reliability is low, and the device cannot communicate with the user terminal when the communication distance is exceeded. Therefore, the cost of communication modules often makes it challenging to achieve both reliable communication and cost-effectiveness in practical applications.

In order to solve the above technical problems, the present application provides an apparatus assembly. The apparatus assembly includes a battery pack and an apparatus provided with an apparatus wireless communication module, wherein the apparatus can be electrically connected to the battery pack for power transmission, the battery pack can communicate with the apparatus, and the battery pack is provided with a battery pack wireless communication module.

The battery pack is configured with a first battery pack communication mode and a second battery pack communication mode. In the first battery pack communication mode, data of the battery pack is directly transmitted to a user terminal (also called a mobile terminal) through the battery pack wireless communication module; in the second battery pack communication mode, the apparatus receives the data of the battery pack and transmits the data to the user terminal through the apparatus wireless communication module. Wherein the apparatus wireless communication module is configured to enable data transmission between the apparatus and the user terminal within a first preset communication distance, and the battery pack wireless communication module is configured to enable data transmission between the battery pack and the user terminal within a second preset communication distance, wherein the first preset communication distance is greater than the second preset communication distance.

By reasonably configuring communication modules for the battery pack and the apparatus, as well as reasonably configuring the communication mode between the battery pack and the user terminal and that between the apparatus and the user terminal, the communication reliability between the battery pack and the user terminal and that between the apparatus and the user terminal can be effectively improved. This makes the user to effectively monitor and manage the battery pack and the apparatus, while also achieving low costs.

It can be understood that the apparatus may be configured as a charging apparatus capable of being electrically connected to the battery pack and charging the battery pack, or as another apparatus capable of being electrically connected to the battery pack and being powered by the battery pack, such as an electric tool.

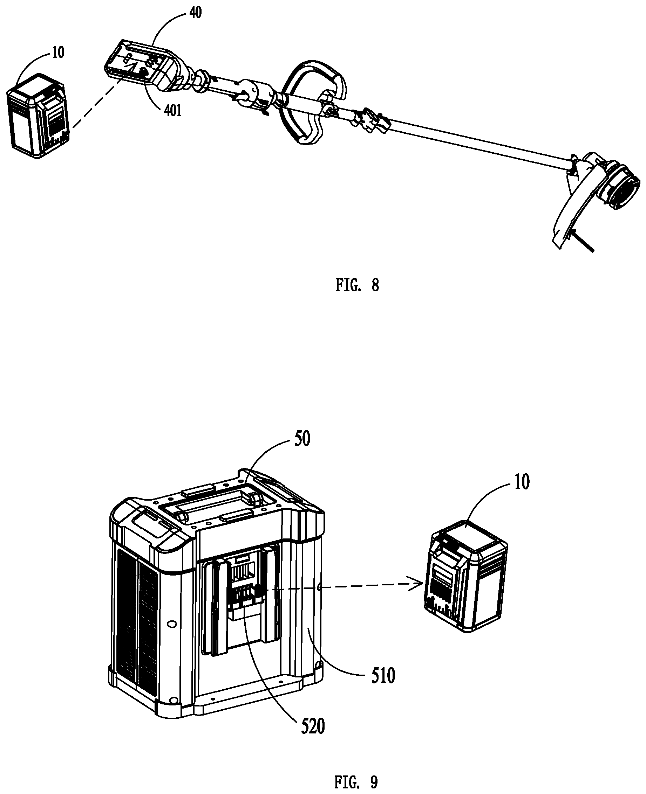

The battery pack 10 may be used at least as a power source of an electric tool. In practical applications, the electric tool may be any one of a lawn mower, a brush cutter, a trimmer, a pruning shear, a high-pressure cleaner, a blower, a chainsaw, a hand-mower, a multi-task tool, and a sprayer. Certainly, the electric tool may also be other electric tools requiring a separate power module for supplying power, which will not be listed here one by one. As shown in the scenario of FIG. 8, the battery pack 10, when connected to an electric tool in a matching manner, can provide electric energy to the connected electric tool.

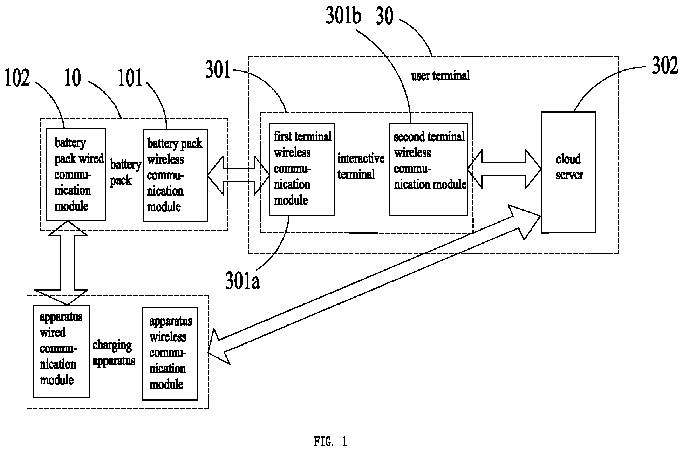

Referring to FIG. 1, an embodiment of the present application provides an apparatus assembly. The apparatus assembly includes a battery pack 10 and an apparatus configured as a charging apparatus. The charging apparatus can be electrically connected to the battery pack 10 and charge the battery pack 10, and the charging apparatus can communicate with the battery pack 10 (when the apparatus is configured as a charging apparatus, the apparatus assembly is an energy system). The charging apparatus is provided with an apparatus wireless communication module, and the battery pack 10 is provided with a battery pack wireless communication module 101.

Further, the charging apparatus communicates with the battery pack 10 in a wired communication mode to receive data of the battery pack 10. Specifically, the battery pack 10 and the charging apparatus are provided with matching wired communication modules. When the battery pack 10 is connected to the charging apparatus in a matching manner, the two perform data interaction in a wired communication mode. Specifically, the charging apparatus is configured with an apparatus wired communication module, and the battery pack 10 is configured with a battery pack wired communication module 102. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the wired communication modules of the charging apparatus and the battery pack 10 use serial port communication modules or CAN communication modules.

The battery pack 10 is configured with a first battery pack communication mode and a second battery pack communication mode. In the first battery pack communication mode, the data of the battery pack is directly transmitted to a user terminal 30 through the battery pack wireless communication module 101; in the second battery pack communication mode, the charging apparatus receives the data of the battery pack and transmits the data to the user terminal through a first wireless communication module 201. The apparatus wireless communication module is configured to enable data transmission between the charging apparatus and the user terminal 30 within a first preset communication distance, and the battery pack wireless communication module 101 is configured to enable data transmission between the battery pack 10 and the user terminal 30 within a second preset communication distance, wherein the first preset communication distance is greater than the second preset communication distance.

In this embodiment, the apparatus wireless communication module may be a wireless communication module capable of realizing long-distance communication, and the battery pack wireless communication module 101 may be a wireless communication module capable of realizing short-distance communication. The charging apparatus can communicate with the user terminal 30 at a long distance through the apparatus wireless communication module, and the battery pack 10 can communicate with the user terminal 30 at a short distance through the battery pack wireless communication module 101. Specifically, the apparatus wireless communication module may be one of a 3G module, a 4G module, a 5G module, a Lora module, a sigfox module, and an NB-IOT module. The battery pack wireless communication module 101 may be one of a Bluetooth module, a Zigbee module, a sub-1G module, and an RF433 module. Preferably, in this embodiment, the apparatus wireless communication module uses a 4G module, and the battery pack wireless communication module 101 uses a Bluetooth module.

In the above embodiment, the charging apparatus may be configured as an energy-storage-type charging apparatus 20 and may also be configured as a battery pack charger 50.

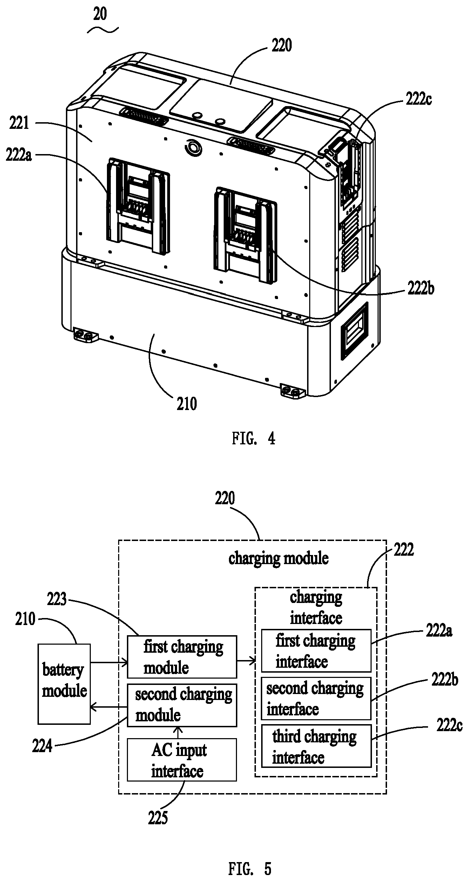

Referring to FIG. 4 and FIG. 5, when the charging apparatus is configured as the energy-storage-type charging apparatus 20, the apparatus assembly includes the battery pack 10 and the energy-storage-type charging apparatus 20. The energy-storage-type charging apparatus 20 can be electrically connected to the battery pack 10 and charge the battery pack 10, and the battery pack 10 can communicate with the energy-storage-type charging apparatus. The energy-storage-type charging apparatus 20 is provided with a first charging apparatus wireless communication module 201 (i.e., the aforementioned apparatus wireless communication module of the charging apparatus).

In the first battery pack communication mode, the data of the battery pack is directly transmitted to the user terminal 30 through the battery pack wireless communication module 101; in the second battery pack communication mode, the energy-storage-type charging apparatus 20 receives the data of the battery pack and transmits the data to the user terminal through the first charging apparatus wireless communication module 201.

Further, the energy-storage-type charging apparatus 20 is further configured with a charging apparatus wired communication module 202 (i.e., the aforementioned apparatus wired communication module of the charging apparatus). When the battery pack wired communication module 102 of the battery pack 10 is connected to the charging apparatus wired communication module 202 of the energy-storage-type charging apparatus 20 in a matching manner, the battery pack 10 and the energy-storage-type charging apparatus 20 can perform data interaction in a wired communication mode.

As an example, the first charging apparatus wireless communication module 201 may be one of a 3G module, a 4G module, a 5G module, a Lora module, a sigfox module, and an NB-IOT module. The battery pack wireless communication module 101 may be one of a Bluetooth module, a Zigbee module, a sub-1G module, and an RF433 module. Preferably, in this embodiment, the first charging apparatus wireless communication module 201 uses a 4G module, and the battery pack wireless communication module 101 uses a Bluetooth module.

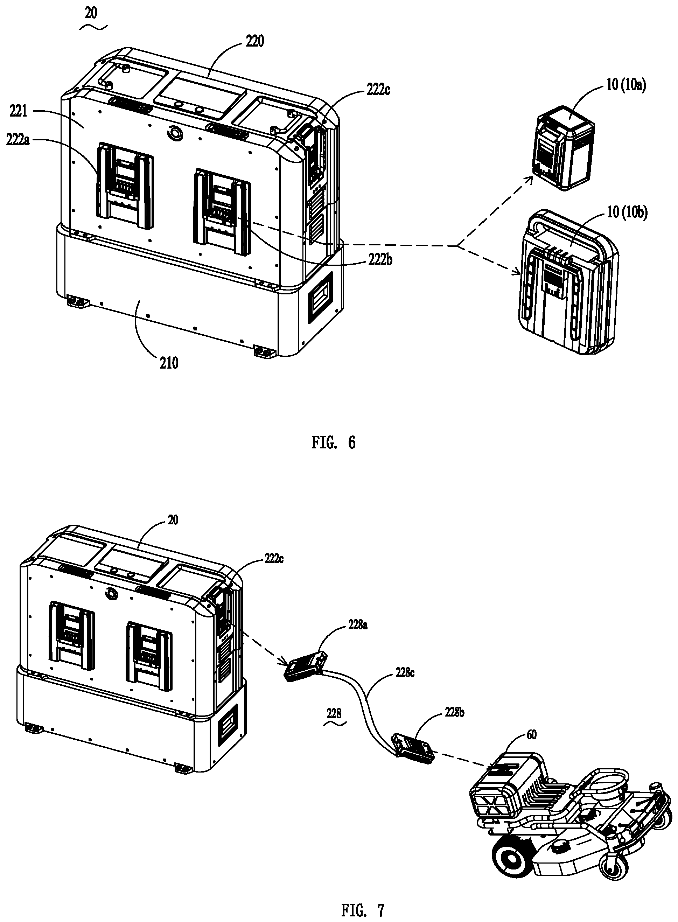

The energy-storage-type charging apparatus 20 is generally used as a portable charging source. The energy-storage-type charging apparatus 20 includes a battery module 210 and a charging module 220. The charging module 220 is provided with a charging interface 222, and the battery module 210 is electrically connected to the charging module 220. The charging module 220 is at least used to convert the electric energy of the battery module 210 and output the electric energy through the charging interface 222, so as to charge the battery pack 10 connected to the charging interface 222 in a matching manner. As shown in the scenario of FIG. 6, illustratively, the battery pack 10 may be a handheld battery pack 10a, a backpack battery pack 10b, or in other forms. It can be understood that the energy-storage-type charging apparatus 20, through the arrangement of the battery module 210, makes the charging process of the battery pack 10 no longer depend on an alternating current (AC) power source, and thus can meet the power demand of the gardening team during outdoor work.

Specifically, the battery module 210 and the charging module 220 of the energy-storage-type charging apparatus 20 are detachably connected. The charging module 220 is provided with a charging module housing 221, and the charging module 220 further includes a first charging module 223, a second charging module 224, and an AC input interface 225. The charging interface 222 includes a first charging interface 222a, a second charging interface 222b, and a third charging interface 222c, and the first charging interface 222a, the second charging interface 222b, and the third charging interface 222c are all arranged on the charging module housing 221. In detail, any one of the first charging interface 222a, the second charging interface 222b, and the third charging interface 222c can be connected to the battery pack 10 to charge the battery pack 10. Further, the third charging interface 222c may be further connected to an inverter for outputting AC electric energy to adapt to devices requiring AC electric energy, and the third charging interface may also be connected to an adapter to charge devices having different charging interfaces. For example, as shown in FIG. 7, the third charging interface 222c may charge a gardening robot tool 60 by connecting to an adapter 228. Specifically, the adapter 228 includes a first interface 228a, a second interface 228b, and a first cable 228c connecting the first interface 228a and the second interface 228b. The first interface 228a is used to connect to the third charging interface 222c of the charging apparatus 20 in a matching manner, and the second interface 228b is configured to be connected to the charging interface of the gardening robot tool 60 in a matching manner. The energy-storage-type charging apparatus 20 can output electric energy through the third charging interface 222c and transmit the electric energy to the gardening robot tool 60 through the adapter 228 for charging the gardening robot tool. The input end of the first charging module 223 is connected to the battery module 210, and the output end is connected to the first charging interface 222a, the second charging interface 222b, and the third charging interface 222c. The first charging module 223 is used to convert the direct current (DC) electric energy stored in the battery module 210 to charge the battery pack 10 or supply electric energy to other devices. Generally, the first charging module 223 is used to perform voltage conversion to convert the voltage received at the input end into an output voltage suitable for the battery pack 10. The input end of the second charging module 224 is connected to the AC input interface 225 for connecting to the mains supply, and the output end is connected to the battery module 210. The second charging module 224 is used to convert the AC electric energy provided by the mains supply into DC electric energy to charge the battery module 210. The energy-storage-type charging apparatus 20 provided in this embodiment can charge the battery pack 10 by using the DC electric energy of the battery module 210 and can also charge the battery module 210 by using the AC power source, thereby meeting the user requirements in different scenarios.

Referring to FIG. 9, when the charging apparatus is configured as a battery pack charger 50, the apparatus assembly includes a battery pack 10 and a battery pack charger 50. The battery pack charger 50 can be electrically connected to the battery pack 10 and charge the battery pack 10, and the battery pack 10 can communicate with the battery pack charger 50. The battery pack charger 50 is configured with a first charger wireless communication module 502 (i.e., the aforementioned apparatus wireless communication module of the charging apparatus).

In the first battery pack communication mode, the data of the battery pack is directly transmitted to the user terminal 30 through the battery pack wireless communication module 101; in the second battery pack communication mode, the battery pack charger 50 receives the data of the battery pack and transmits the data to the user terminal through the first charger wireless communication module 502.

Further, the battery pack charger 50 is further configured with a charger wired communication module 501 (i.e., the aforementioned apparatus wired communication module of the charging apparatus). When the battery pack wired communication module 102 of the battery pack 10 is connected to the charger wired communication module 501 of the battery pack charger 50 in a matching manner, the battery pack 10 and the battery pack charger 50 can perform data interaction in a wired communication mode.

The battery pack charger 50 is generally used to connect to the battery pack 10 in a matching manner to charge the battery pack 10. The battery pack charger 50 includes a charger housing 510, a battery pack charging interface 520 arranged on the charger housing 510, and a charging circuit arranged in the charger housing 510. The charging circuit is electrically connected to the battery pack charging interface 520 and is used to connect to an external AC power source and convert input alternating current into direct current to be output through the battery pack charging interface 520, thus charging the battery pack 10 connected to the battery pack charging interface 520 in a matching manner.

As an example, the first charger wireless communication module 502 may be one of a 3G module, a 4G module, a 5G module, a Lora module, a sigfox module, and an NB-IOT module. The battery pack wireless communication module 101 may be one of a Bluetooth module, a Zigbee module, a sub-1G module, and an RF433 module. Preferably, in this embodiment, the first charger wireless communication module 502 uses a 4G module, and the battery pack wireless communication module 101 uses a Bluetooth module.

It can be understood that in the above embodiment, the user terminal 30 is used to perform data interaction with the apparatus and the battery pack 10 in the apparatus assembly as well as with other devices in the embodiments described hereinafter and provide an interface for human-machine interaction to a user. The human-machine interaction includes displaying state information of the apparatus, the battery pack 10, and other devices in the embodiments described hereinafter to the user, and/or receiving control instructions input by the user with respect to the apparatus, the battery pack 10, and other devices in the embodiments described hereinafter.

Further, as shown in FIG. 1, the user terminal 30 includes an interactive terminal 301 and a cloud server 302.

The interactive terminal 301 may be configured as a smartphone and may also be configured as a tablet computer, a notebook computer, or other smart wearable devices, such as a smart watch, a smart bracelet, or the like. Preferably, the interactive terminal 301 is configured as a smartphone with a touch screen that can be used for human-machine interaction. The specific types of the interactive terminal 301 will not be listed here one by one, and any interactive terminal that is within the scope of the core idea of the present disclosure also falls within the protection scope of the present disclosure.

In this embodiment, the interactive terminal 301 is configured with a first terminal wireless communication module 301a capable of realizing short-distance communication and a second terminal wireless communication module 301b capable of realizing long-distance communication. As described above, the battery pack 10 is configured with a battery pack wireless communication module 101 capable of realizing short-distance communication, and the battery pack wireless communication module 101 is configured to match with the first terminal wireless communication module 301a, and the battery pack 10 can communicate with the interactive terminal 301 through the battery pack wireless communication module 101 and the first terminal wireless communication module 301a, thus realizing data interaction between the battery pack 10 and the interactive terminal 301. Preferably, the first terminal wireless communication module 301a is a Bluetooth module matched with the battery pack wireless communication module, and the second terminal wireless communication module 301b may be configured as a 4G module, a 5G module, a WiFi module, or the like.

For the cloud server 302, a server having functions of data storage, information interaction, device control, and the like may be selected according to practical application requirements, such as a cloud server based on an AWS cloud service platform. The specific implementation of the cloud server 302 will not be listed here one by one, and any cloud server that is within the scope of the core idea of the present disclosure also falls within the protection scope of the present disclosure.

In this embodiment, the cloud server 302 is configured to be capable of accessing the Internet through a network communication module. The apparatus can access the Internet through the apparatus wireless communication module capable of realizing long-distance communication, and the communication connection between the apparatus and the cloud server 302 can be realized through the Internet, thus realizing data interaction between the apparatus and the cloud server 302. Specifically, the network communication module may be a wired communication form such as optical fiber communication and may also be other wireless communication forms such as 4G, 5G, WiFi, and the like which is not limited here. Preferably, the cloud server 302 accesses the Internet in an optical fiber communication mode.

The interactive terminal 301 may also access the Internet through the second terminal wireless communication module 301b capable of realizing long-distance communication, such that data interaction with the cloud server 302 can be realized through the Internet, and thus corresponding data sharing is realized. On this basis, because the data storage capacity of the cloud server 302 is usually large, the interactive terminal 301 may also upload the interactive data received by itself to the cloud server 302, so as to realize data backup and ensure data storage security.

It can be understood that the battery pack 10 communicates with the user terminal 30 through different communication modes in different scenarios.

For the first battery pack communication mode, take the example where the interactive terminal 301 is a smartphone, in a working scenario, the device operator of the gardening team often holds the electric tool in the working area to work; when the device operator carries around the interactive terminal 301, the interactive terminal 301 of the device operator has established a relationship with the battery pack 10 connected to the held electric tool in a matching manner, and the Bluetooth function of the interactive terminal 301 of the device operator is enabled, and at this time the interactive terminal 301 is within a communication distance of the second wireless communication module 101 of the battery pack 10, the battery pack 10 can establish communication with the user terminal 30 through the battery pack wireless communication module 101, and in this case, the battery pack 10 can communicate with the user terminal 30 through the first battery pack communication mode. The data of the battery pack 10 is directly transmitted to the user terminal 30 through the first battery pack communication mode. In addition, there may also be a use scenario where the battery pack 10 is connected to the battery pack charger 50 in a matching manner for charging, and the battery pack 10 is within the working area and its distance from the interactive terminal 301 of the device operator is still within the communication distance of the battery pack wireless communication module 101; there may also be a scenario where the battery pack 10 is not connected to any electric tool 40 or battery pack charger 50, the battery pack 10 is within the working area and its distance from the interactive terminal 301 of the device operator is still within the communication distance of the battery pack wireless communication module 101, and in this case, the battery pack 10 transmits data of the battery pack 10 stored inside to the user terminal 30 through the first battery pack communication mode; there may also be other application scenarios for the battery pack 10 during actual use, which will not be listed here one by one. Among them the communication distance of the battery pack wireless communication module 101 is the communication distance of the Bluetooth module.

For the second battery pack communication mode, when the battery pack 10 is low in power and needs to be charged, the battery pack 10 is detached from the electric tool 40 and is connected to the charging apparatus for charging. In this case, the battery pack 10 and the charging apparatus can establish communication in a wired communication mode. Since the charging apparatus can establish communication with the user terminal 30 through the apparatus wireless communication module, in this case, the battery pack 10 can communicate with the user terminal 30 through the second battery pack communication mode. The data of the battery pack 10 is transmitted to the charging apparatus through the wired communication mode, and then transmitted to the user terminal 30 through the apparatus wireless communication module of the charging apparatus. There may also be other application scenarios for the battery pack 10 during actual use, which will not be listed here one by one.

In addition, it can be understood that the data transmission between the battery pack 10 and the user terminal 30 is bidirectional, including the data transmission from the battery pack 10 to the user terminal 30 and the data transmission from the user terminal 30 to the battery pack 10 as well. The data transmission between the charging apparatus and the user terminal 30 is also bidirectional, including the data transmission from the charging apparatus to the user terminal 30 and the data transmission from the user terminal 30 to the charging apparatus as well.

As an example, the battery pack 10 transmits the battery pack operating state data to the user terminal 30 and receives the battery pack control instruction data sent by the user terminal 30 through the battery pack wireless communication module 101. Alternatively, the charging apparatus receives the battery pack operating state data and transmits the data to the user terminal 30 through the apparatus wireless communication module, and the charging apparatus receives the battery pack control instruction data sent by the user terminal 30 through the apparatus wireless communication module and transmits the data to the battery pack 10. The charging apparatus transmits the charging apparatus operating state data to the user terminal 30 and receives the charging apparatus control instruction data sent by the user terminal 30 through the apparatus wireless communication module.

In the apparatus assembly of the present application, the battery pack 10 is configured with a first battery pack communication mode and a second battery pack communication mode. The first battery pack communication mode realizes short-distance communication of the battery pack, and the second battery pack communication mode realizes long-distance communication of the battery pack by means of the apparatus wireless communication module of the apparatus. Compared with the prior art, two data interaction methods are provided between the battery pack 10 and the user terminal 30. These two methods can enable data interaction between the battery pack 10 and the user terminal 30 in different scenarios, which can improve the reliability of data interaction between the battery pack and the user terminal and thereby ensure that users can effectively monitor and manage the battery pack 10.

Further, in the short-distance communication mode, when the user carries the interactive terminal 301 and moves far away from the battery pack 10 and is beyond the communication distance of the battery pack wireless communication module 101, the battery pack 10 cannot establish communication with the interactive terminal 301, and at this time the battery pack is thus in an offline state. In this case, because the battery pack 10 itself has a certain storage space, the battery pack stores the operating state data in the offline state. In practical applications, the battery pack 10 may store its own data, and at the same time, the battery pack may also store the data of the electric tool 40 or the battery pack charger 50 connected to the battery pack 10 in a matching manner. However, since the storage space of the battery pack 10 itself is limited, when the battery pack is offline for a long time, the monitoring and management of the battery pack by the user may be affected due to situations that the data cannot be stored or the data is lost, etc., caused by insufficient storage space. In this case, take the example where the apparatus is configured as a charging apparatus, when the battery pack 10 is connected to the charging apparatus for charging, the battery pack 10 and the charging apparatus establish communication in a wired communication mode, the battery pack may transmit the data stored in the offline state to the charging apparatus, and the data is further transmitted to the cloud server 302 through the apparatus wireless communication module of the charging apparatus, such that the data of the battery pack 10 is transmitted to the cloud server 302 via the charging apparatus. Certainly, the data of the cloud server 302 may also be transmitted to the battery pack 10 through an opposite transmission manner. Further, according to actual situations, if the data received by the cloud server 302 needs to be displayed on the interactive terminal 301 or the data received by the interactive terminal 301 needs to be stored or processed on the cloud server 302, the cloud server 302 and the interactive terminal 301 further perform data interaction. Certainly, when the battery pack 10 is connected to the charging apparatus in a wired communication mode, the battery pack 10 may also transmit the real-time data of the battery pack 10 to the charging apparatus, and further the charging apparatus transmits the real-time data of the battery pack 10 to the cloud server 302 through the apparatus wireless communication module.

In the above embodiment, the data of the battery pack 10 at least includes the operating state data of the battery pack, and the operating state data of the battery pack includes one or more of current state information, charging/discharging parameter information, and battery pack fault information of the battery pack 10. The current state information of the battery pack includes the charging/discharging state information and the number of charging-discharging cycles of the battery pack, and the charging/discharging state information is used to represent that the battery pack 10 is in a charging state, a discharging state, or a non-charging/discharging state. The charging/discharging parameter information includes one or more of battery cell voltage, charging/discharging current, battery cell temperature, SOC, SOP, SOH, elapsed charging time, and remaining charging time. The battery pack fault information includes communication faults, temperature sensor abnormalities, voltage abnormalities, temperature abnormalities, charging/discharging overcurrent faults, battery pack hardware faults, mismatches between the battery pack and tools, and the like.

In the above embodiment, the data of the energy-storage-type charging apparatus 20 at least includes the operating state data of the energy-storage-type charging apparatus, and the operating state data of the energy-storage-type charging apparatus includes one or more of current state information, charging/discharging parameter information, and charging apparatus fault information of the charging apparatus. The current state information of the charging apparatus includes the charging/discharging state information and the number of charging-discharging cycles of the charging apparatus, and the charging/discharging state information is used to represent that the energy-storage-type charging apparatus 20 is in a charging state, a discharging state, or a non-charging/discharging state. The charging and discharging parameter information includes one or more of voltage, current, temperature, SOC, SOP, SOH, elapsed charging time, and remaining charging time. The charging apparatus fault information includes communication abnormalities, relay faults, temperature abnormalities, charging system faults of devices, abnormal current at the charging interface, abnormal charging of the built-in battery pack, abnormal charging of the battery pack at the charging interface, and the like.

In the above embodiment, the data of the battery pack charger at least includes the operating state data of the battery pack charger, and the operating state data of the battery pack charger includes one or more of charger operating parameters, charging capacity in the charging state, remaining charging time, accumulated charging time and times of charging, charging records, and charger fault information of the battery pack charger.

Compared with the prior art, the battery pack 10 is configured with two communication modes, such that the communication between the battery pack and the user terminal 30 can be realized in different scenarios, the reliability of data interaction between the battery pack and the user terminal is improved, it is ensured that users can effectively monitor and manage the battery pack 10, and meanwhile, low costs are achieved; the loss of data stored in the battery pack 10, caused by the limited internal storage space of the battery pack 10 when the battery pack is offline for a long time, can also be avoided. Further, the communication mode in which the data of the battery pack is transmitted to the user terminal via the apparatus also provides a communication link that can transmit the data of the battery pack 10 to the user terminal 30 without being restricted by the use of the interactive terminal 301.

Further, the data of the battery pack is divided into the real-time data of the battery pack and the historical data stored in the battery pack according to the fact whether the data is real-time. The data of the battery pack received by the apparatus includes the real-time data of the battery pack and the historical data stored in the battery pack. It should be noted that the real-time data of the battery pack refers to the current data of the battery pack after the battery pack is plugged into the apparatus, and the historical data stored in the battery pack refers to the data stored in the battery pack before the battery pack is plugged into the apparatus.

As described above, the battery pack 10 communicates with the charging apparatus in a wired communication mode. The charging apparatus is configured with an apparatus wired communication module, and the battery pack 10 is configured with a battery pack wired communication module 102. Further, the battery pack includes a first battery pack terminal, the apparatus includes a first apparatus terminal, and the first battery pack terminal and the first apparatus terminal are electrically connected to form a data transmission path. Both the real-time data of the battery pack and the historical data stored in the battery pack are transmitted to the apparatus through the data transmission path.

In this embodiment, the battery pack 10 includes a charging interface of the battery pack for connecting to the charging interface of the charging apparatus in a matching manner. The charging interface of the battery pack includes a positive terminal, a negative terminal, an analog signal communication terminal, and a digital signal communication terminal. The charging interface of the charging apparatus includes a positive terminal, a negative terminal, an analog signal communication terminal and a digital signal communication terminal that are matched with the charging interface of the battery pack.

As an example, the charging interface of the battery pack includes a digital signal communication terminal, i.e., the aforementioned first battery pack terminal. The charging interface of the charging apparatus also includes a digital signal communication terminal, i.e., the aforementioned first charging apparatus terminal. The first battery pack terminal is electrically connected to the first charging apparatus terminal to form a data transmission path, and both the real-time data of the battery pack 10 and the historical data stored in the battery pack 10 are transmitted to the charging apparatus through the data transmission path.

Specifically, the first battery pack terminal may be configured as a serial port terminal, and the first charging apparatus terminal may be configured as a serial port terminal. The first battery pack terminal is used to be electrically connected to the first charging apparatus terminal to form a serial port signal transmission path, and both the real-time data of the battery pack and the historical data stored in the battery pack 10 are transmitted to the charging apparatus through the serial port signal transmission path.

Alternatively, the first battery pack terminal and the first charging apparatus terminal are both configured as CAN terminals. The CAN terminals of the battery pack 10 include a first CAN terminal and a second CAN terminal, and the CAN terminals of the charging apparatus include a third CAN terminal and a fourth CAN terminal. The first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack 10 are transmitted to the charging apparatus through the differential signal transmission path.

As another example, the charging interface of the battery pack includes two digital signal communication terminals, and the charging interface of the charging apparatus also includes two digital signal communication terminals.

Specifically, the two digital signal communication terminals of the battery pack 10 are a serial port terminal and a pair of CAN terminals, and the two communication terminals of the charging apparatus are a serial port terminal and a pair of CAN terminals. When the battery pack 10 is connected to the energy-storage-type charging apparatus 20 in a matching manner, a serial port terminal of the battery pack 10 and a serial port terminal of the charging apparatus are electrically connected to form a serial port signal transmission path, namely, a serial port signal transmission path, and a pair of CAN terminals of the battery pack 10 and a pair of CAN terminals of the charging apparatus are electrically connected to form a differential signal transmission path. The battery pack 10 and the charging apparatus choose one of the serial port signal transmission path and the differential signal transmission path to transmit real-time data of the battery pack and historical data stored in the battery pack 10. Further, the differential signal transmission path is preferentially selected to transmit the real-time data of the battery pack 10 and the historical data stored in the battery pack 10.

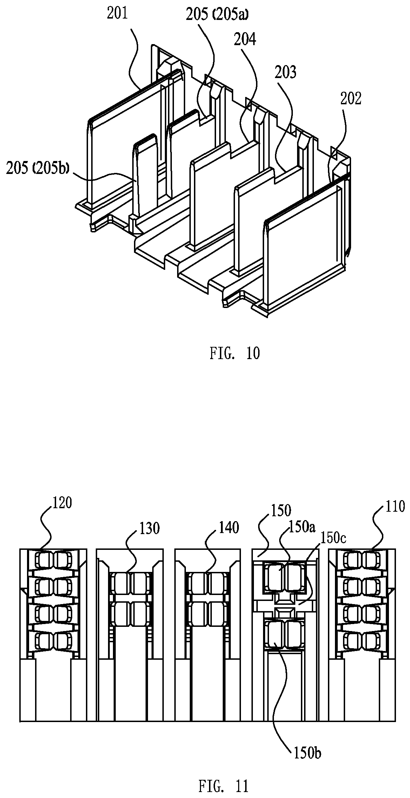

In the above embodiment, the charging apparatus may be configured as the energy-storage-type charging apparatus 20 and may also be configured as the battery pack charger 50. Take the example where the charging apparatus is configured as the energy-storage-type charging apparatus 20, as shown in FIG. 10, in this embodiment, the positive terminal, the negative terminal, the analog signal communication terminal, and the digital signal communication terminal of the charging interface of the energy-storage-type charging apparatus 20 are provided in the form of pole pieces, that is, the positive terminal is configured as a positive pole piece 201, the negative terminal is configured as a negative pole piece 202, the analog signal communication terminal is configured as an analog signal communication pole piece 203, and the communication terminal is configured as a first digital signal communication pole piece 204 and a second digital signal communication pole piece 205. The energy-storage-type charging apparatus 20 has two digital communication modes and can communicate with two different types of battery packs 10. In this embodiment, the communication type of the first digital signal communication pole piece 204 is serial port communication, which corresponds to the serial port terminal of the energy-storage-type charging apparatus 20, and the communication type of the second digital signal communication pole piece 205 is differential communication. In detail, the differential communication may be CAN (Controller Area Network) communication. The second digital signal communication pole piece 205 has two insertion pieces, 205a and 205b, which correspond to the pair of CAN terminals of the energy-storage-type charging apparatus 20. The insertion piece 205a and the insertion piece 205b are independent and insulated from each other. When the energy-storage-type charging apparatus 20 communicates with the battery pack 10, the second digital communication pole piece 205 is preferentially used to perform the digital communication with the battery pack 10; when the second digital signal communication fails, the first digital signal communication pole piece 204 is used to perform the digital communication with the second energy storage module. The energy-storage-type charging apparatus 20 can establish communication with the battery packs 10 with different interface structures, such as the battery pack 10 only including the serial port communication module, the battery pack 10 including both the serial port communication module and the CAN communication module, and the battery pack 10 only including the CAN communication module. Thus, the application range is wider, and the compatibility of the energy-storage-type charging apparatus 20 can be improved.

Accordingly, as shown in FIG. 11, the positive terminal, the negative terminal, the analog signal communication terminal, and the digital signal communication terminal of the charging interface of the battery pack provided in this embodiment are provided in the form of contacts, that is, the positive terminal is configured as a positive contact 110, the negative terminal is configured as a negative contact 120, the analog signal communication terminal is configured as an analog signal communication contact 130, and the digital signal communication terminal is configured as a first digital signal communication contact 140 and a second digital signal communication contact 150. In this embodiment, the communication type of the first digital signal communication contact 304 is serial port communication, which corresponds to the serial port terminal of the battery pack 10, and the communication type of the second digital signal communication contact 150 is differential communication. In detail, the differential communication may be CAN communication. The second digital signal communication contact 150 includes two independent contacts, i.e., a contact 150a and a contact 150b, which correspond to the pair of CAN terminals of the battery pack 10. The contact 150a and the contact 150b are arranged in the same terminal slot, and an insulating member is arranged between the contact 150a and the contact 150b. When the battery pack 10 is directly plugged into the charging interface of the charging apparatus 20, the positive pole piece 201, the negative pole piece 202, the analog signal communication pole piece 203, the first digital signal communication pole piece 204, and the second digital signal communication pole piece 205 are respectively butted against the positive contact 110, the negative contact 120, the analog signal communication contact 130, the first digital signal communication contact 140, and the second digital signal communication contact 150.

Specifically, the charging interface of the energy-storage-type charging apparatus 20 is provided with charging pole pieces, the charging interface of the battery pack 10 is provided with interface slots, and each interface slot is provided with a charging contact. When the battery pack 10 is plugged into the energy-storage-type charging apparatus 20, the charging pole pieces of the energy-storage-type charging apparatus 20 can be inserted into the interface slots of the battery pack 10 and electrically connected to the charging contacts in a one-to-one correspondence manner.

Further, the real-time data of the battery pack received by the charging apparatus may include charging/discharging state information, number of charging-discharging cycles, requested charging current, battery cell voltage, battery cell temperature, SOC, SOP, SOH, elapsed charging time, remaining charging time, real-time fault information, etc., of the battery pack 10. It should be noted that the requested charging current is the aforementioned charging/discharging current data of the battery pack 10. The data is the requested charging current in the charging state of the battery pack 10, and it is the discharging current in the discharging state of the battery pack 10, that is, the data is the requested charging current in the situation where the battery pack 10 is connected to the charging apparatus for charging. The historical data stored in the battery pack 10 may include historical faults of the battery pack 10, historical faults of electric tools stored in the battery pack 10, historical faults of the battery pack charger stored in the battery pack 10, electric tool use records stored in the battery pack 10, operating control data of electric tools stored in the battery pack 10, charging records of the battery pack charger stored in the battery pack 10, and the like.

Both the real-time data of the battery pack and the historical data stored in the battery pack 10 described above are transmitted to the apparatus through one data transmission path. Further, during the power transmission when the battery pack 10 is connected to the apparatus in a matching manner, the real-time data of the battery pack 10 and the historical data stored in the battery pack 10 are transmitted at different time periods. Take the example where the apparatus is a charging apparatus, during the charging process when the battery pack 10 is connected to the charging apparatus 20 in a matching manner, the real-time data of the battery pack and the historical data stored in the battery pack 10 are transmitted at different time periods. It can be understood that by transmitting the real-time data of the battery pack and the historical data stored in the battery pack 10 through one data transmission path, the number of the communication terminals between the battery pack 10 and the apparatus can be reduced, and the terminal structure can be simplified, which helps to reduce the overall cost. Further, during the power transmission when the battery pack 10 is connected to the apparatus in a matching manner, the real-time data of the battery pack and the historical data stored in the battery pack 10 are transmitted at different time periods, such that the idle period of the data transmission path can be fully utilized to transmit data, and the data transmission efficiency is improved.

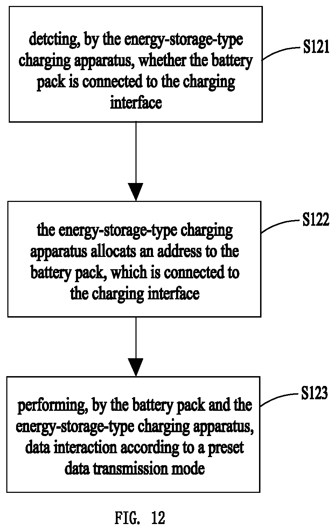

Referring to FIG. 12, in this embodiment, a communication method between the battery pack 10 and the charging apparatus includes:
step S121, identifying, by the charging apparatus, whether the battery pack 10 is connected to the charging interface by detecting the analog signal of the analog signal communication pole piece of the charging interface;
step S122, establishing, by the charging apparatus, communication with the battery pack 10 when identifying that the battery pack 10 is connected to the charging interface, and allocating an address to the battery pack 10; and
step S123, performing, by the battery pack 10 and the charging apparatus, data interaction according to a preset data transmission mode.

Further, in step S121, when it is identified that the voltage value of the analog signal of the analog signal communication pole piece is within a set voltage interval and maintains for a set time or longer, it is determined that the battery pack 10 is connected to the charging interface of the charging apparatus; preferably, when the voltage interval is 0.98-2.2 V and the duration is no less than 500 ms, it is determined that the battery pack 10 is connected to the charging interface of the charging apparatus.

Further, in step S122, the charging apparatus and the battery pack 10 preferentially perform digital communication through the CAN terminals, and they perform digital communication through the serial port terminals when the CAN communication fails.

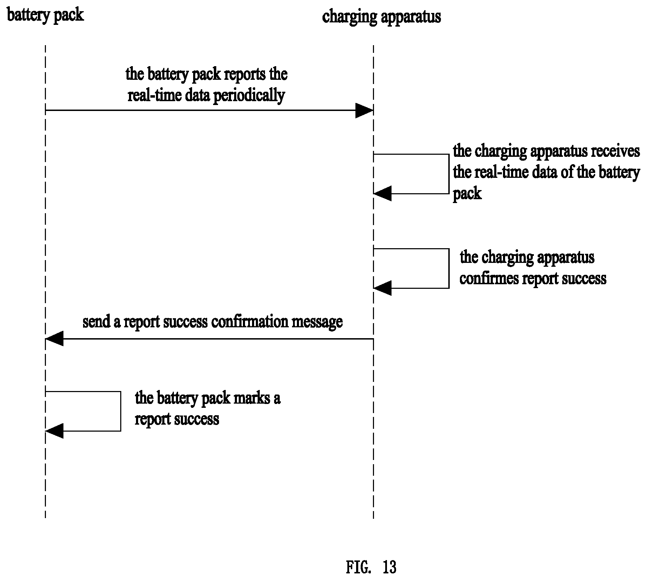

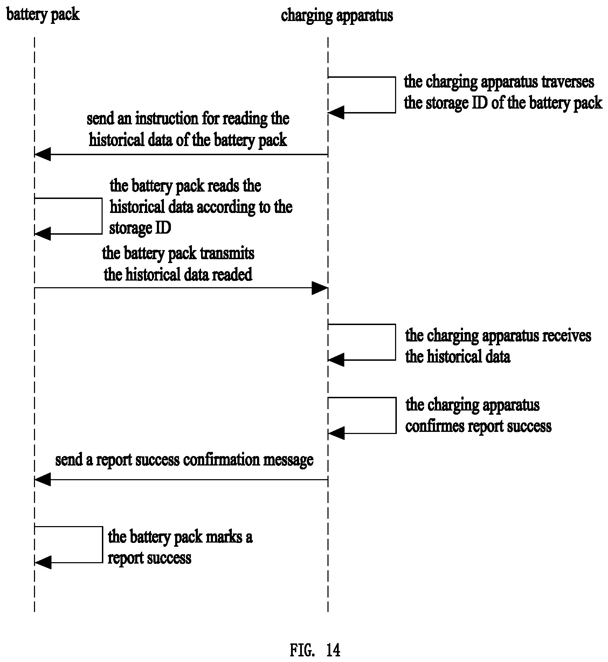

Further, in step S123, the preset data transmission mode may include that the battery pack 10 actively sends various real-time data of the battery pack 10 to the charging apparatus according to a set period, and the historical data of the battery pack 10 is transmitted to the charging apparatus in the idle period of the data transmission path in response to the query command of the charging apparatus. Specifically, as shown in FIG. 13, a data reporting period is set for each type of real-time data of the battery pack 10. For example, the data reporting period of the data of requested charging current may be 500 ms; the battery pack 10 reports the real-time data periodically, and the charging apparatus, after receiving the real-time data of the battery pack 10, sends a report success confirmation message to the battery pack 10, and the battery pack 10 marks a report success state of the real-time data, thus completing the transmission of the real-time data of the battery pack 10. As shown in FIG. 14, when the data transmission path is idle, the charging apparatus traverses the storage ID of the battery pack and sends an instruction for reading the historical data of the battery pack 10 to the battery pack 10, the battery pack 10 receives and responds to the instruction, reads the historical data according to the storage ID, and transmits the historical data to the charging apparatus. The charging apparatus, after receiving the historical data, sends a report success confirmation message to the battery pack 10, and the battery pack 10 marks a report success state of the historical data, thus completing the transmission of the historical data of the battery pack 10.

Further, in order to avoid data transmission errors, when the battery pack 10 performs data interaction with the charging apparatus, one piece of data is transmitted completely before the next piece of data is transmitted.

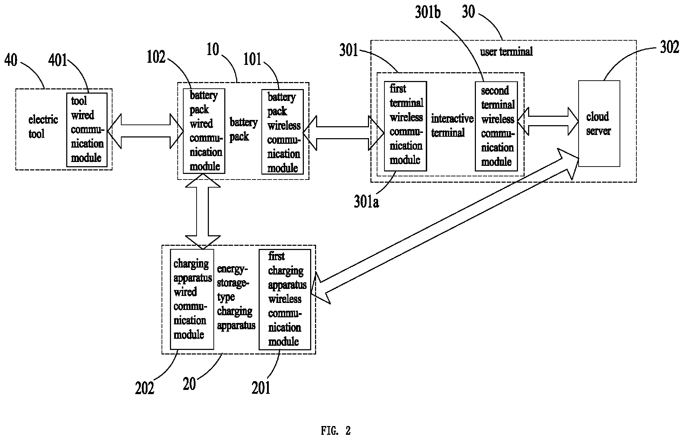

Based on the aforementioned embodiments, further, referring to FIG. 2 and FIG. 8, the battery pack 10 can be connected to the electric tool 40 in a matching manner and supplies power to the electric tool 40, and the electric tool 40 can communicate with the battery pack 10. The battery pack 10 can receive data of the electric tool 40 and transmit the data to the user terminal 30 through the battery pack wireless communication module 101.

As an example, the electric tool 40 and the battery pack 10 communicate in a wired communication mode when connected in a matching manner. Specifically, the electric tool 40 and the battery pack 10 are provided with matching wired communication modules. When the electric tool 40 is connected to the battery pack 10 in a matching manner, the two perform data interaction in a wired communication mode. The battery pack 10 is configured with a battery pack wired communication module 102, and the electric tool 40 is configured with a tool wired communication module 401. The battery pack 10 receives data of the electric tool through the battery pack wired communication module 102 and the tool wired communication module 401 and transmits the data to the user terminal 30 through the battery pack wireless communication module 101. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the battery pack wired communication module 102 and the tool wired communication module 401 use serial port communication modules.

When the electric tool 40 is connected to the battery pack 10 in a matching manner, the battery pack 10 supplies power to the electric tool 40, such that the electric energy requirement of the electric tool 40 in the operation process is met. In practical applications, the electric tool 40 may be configured as one or more of a lawn mower, a brush cutter, a trimmer, a pruning shear, a high-pressure cleaner, a blower, a chainsaw, a hand-mower, a multi-task tool, and a sprayer. Certainly, the electric tool may be configured as other electric tools 40 that require a separate power module, which will not be listed here one by one, and also fall within the protection scope of the present disclosure in the case that they are within the scope of the core idea of the present disclosure.

In this embodiment, the battery pack 10 may receive data of the electric tool 40 and transmit the data to the user terminal 30 through the battery pack wireless communication module 101. The electric tool 40 can realize data interaction with the user terminal 30 without a wireless communication module, and thus the production and/or use cost can be effectively reduced.

Further, two communication modes are also configured between the electric tool 401 and the user terminal 30. The first mode is a communication link that data of the electric tool is transmitted to the battery pack 10 in a wired communication mode and then transmitted to the user terminal 30 through the battery pack wireless communication module 101 of the battery pack 10; the second mode is a communication link that data of the electric tool 40 is transmitted to the battery pack 10 in a wired communication mode, then transmitted from the battery pack 10 to the charging apparatus in a wired communication mode, and then transmitted to the user terminal 30 through the apparatus wireless communication module of the charging apparatus.

In this embodiment, the charging apparatus may be the energy-storage-type charging apparatus 20 or may be the battery pack charger 50. FIG. 2 is an example where the charging apparatus is the energy-storage-type charging apparatus 20, but the examples are not limited thereto. The specific implementation of the energy-storage-type charging apparatus 20 and the battery pack charger 50 may refer to the previous embodiments, which will not be repeated here.

It can be understood that the electric tool 40 communicates with the user terminal 30 through different communication links in different scenarios.

Referring to FIG. 2, take the example where the electric tool 40 transmits data to the user terminal 30 and the interactive terminal 301 is a smartphone:
in a working scenario, the device operator of the gardening team often holds the electric tool in the working area to work; when the device operator carries around the interactive terminal 301, the interactive terminal 301 of the device operator has established a relationship with the battery pack 10 connected to the held electric tool in a matching manner, and the Bluetooth function of the interactive terminal 301 of the device operator is enabled, and at this time the interactive terminal 301 is within a communication distance of the battery pack wireless communication module 101 of the battery pack 10, and the battery pack 10 can establish communication with the user terminal 30 through the battery pack wireless communication module 101. In a use scenario where the battery pack 10 is connected to the electric tool 40 in a matching manner to supply power to the electric tool 40, the data of the electric tool 40 can be transmitted to the battery pack 10 in a wired communication mode and then transmitted to the user terminal 30 through the battery pack wireless communication module 101 of the battery pack 10, that is, the battery pack 10 receives the data of the electric tool 40 and transmits the data to the user terminal 30 in real time. There may also be other application scenarios for the electric tool 40 during actual use, which will not be listed here one by one.

Accordingly, when the device operator does not carry around the interactive terminal 301, or the interactive terminal 301 of the device operator has not established a relationship with the battery pack 10 connected to the held electric tool in a matching manner, or the Bluetooth function of the interactive terminal 301 of the device operator is disabled, the distance from the interactive terminal 301 to the battery pack 10 is beyond a communication distance of the battery pack wireless communication module 101, and in this case, the battery pack 10 cannot establish communication with the user terminal 30 through the battery pack wireless communication module 101. In a use scenario where the battery pack 10 is connected to the electric tool 40 in a matching manner to supply power to the electric tool 40, since the battery pack 10 itself has a certain storage space, the battery pack 10 can receive and store data of the electric tool 40, that is, data of the electric tool 40 can be transmitted to the battery pack 10 for storage in a wired communication mode, and then when the battery pack 10 establishes communication with the user terminal 30 again, the stored data of the electric tool 40 is sent to the user terminal 30. It can be understood that for the scenarios that the battery pack 10 establishes communication with the user terminal 30 again described above, the scenario may be that the battery pack 10 establishes communication with the user terminal 30 again through the battery pack wireless communication module 101, or the scenario may be that when the battery pack 10 is low in power and needs to be charged, the battery pack 10 is detached from the electric tool 40 and connected to a charging apparatus for charging, and in this case, the battery pack 10 and the charging apparatus can establish communication in a wired communication mode, and because the charging apparatus can establish communication with the user terminal 30 through the apparatus wireless communication module, data of the electric tool 40 stored in the battery pack 10 can be transmitted to the charging apparatus in a wired communication mode and then transmitted to the user terminal 30 through the apparatus wireless communication module of the charging apparatus. There may also be other application scenarios for the electric tool 40 during actual use, which will not be listed here one by one.

In addition, it can be understood that the data transmission between the electric tool 40 and the user terminal 30 is bidirectional, including the data transmission from the electric tool 40 to the user terminal 30 and the data transmission from the user terminal 30 to the electric tool 40 as well.

As an example, the electric tool 40 transmits the operating state data to the user terminal 30 through the battery pack 10 and receives the electric tool control instruction data sent by the user terminal 30 through the battery pack 10.

Further, the data of the electric tool 40 includes one or more of operating control data of the electric tool 40, remaining electric quantity in an operating state, remaining tool use time, number of switching times, accumulated operating time, tool use records, and tool fault information. The tool fault information includes circuit faults, communication faults, current faults, voltage faults, temperature faults, and the like.

Compared with the prior art, the electric tool 40 is configured with two communication modes, such that the communication between the electric tool 40 and the user terminal 30 can be realized in different scenarios, the reliability of data interaction between the electric tool 40 and the user terminal 30 is improved, it is ensured that users can effectively monitor and manage the electric tool 40, and meanwhile, low costs are achieved. Further, the loss of data of the electric tool stored in the battery pack 10, caused by the limited internal storage space of the battery pack 10 when the battery pack 10 is offline for a long time, can also be avoided. Further, the communication mode in which the data of the electric tool 40 is transmitted to the user terminal via the battery pack and the charging apparatus also provides a communication link that can transmit the data of the electric tool 40 to the user terminal 30 without being restricted by the use of the interactive terminal 301.

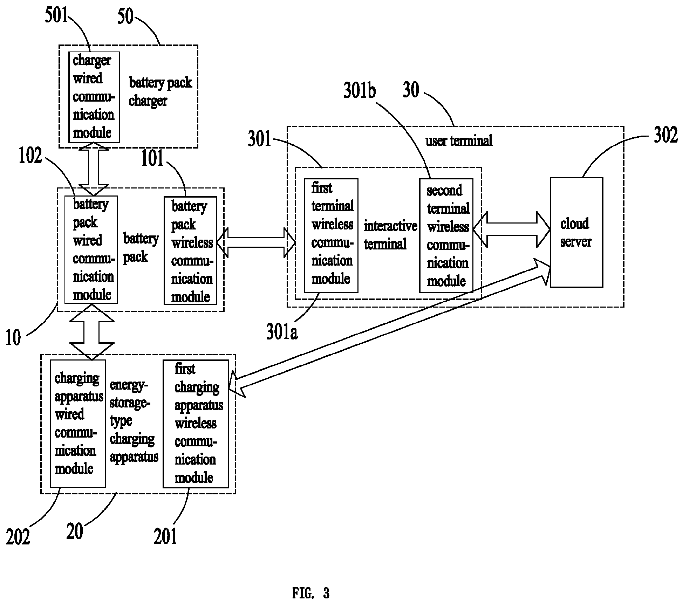

Based on the aforementioned embodiments, further, referring to FIG. 3 and FIG. 9, the battery pack 10 can be connected to the battery pack charger 50 in a matching manner and charged by the battery pack charger 50, and the battery pack charger 50 can communicate with the battery pack 10. The battery pack 10 can receive data of the battery pack charger 50 and transmit the data to the user terminal 30 through the battery pack wireless communication module 101.

As an example, the battery pack charger 50 communicates with the battery pack 10 in a wired communication mode when connected in a matching manner. Specifically, the battery pack charger 50 and the battery pack 10 are provided with matching wired communication modules. When the battery pack charger 50 is connected to the battery pack 10 in a matching manner, the two perform data interaction in a wired communication mode. The battery pack 10 is configured with a battery pack wired communication module 102, and the battery pack charger 50 is configured with a charger wired communication module 501. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the battery pack wired communication module 102 and the charger wired communication module 501 use serial port communication modules or CAN communication modules.

The specific implementation of the battery pack charger 50 may refer to the previous embodiments, which will not be repeated here.

In this embodiment, the battery pack 10 may receive data of the battery pack charger 50 and transmit the data to the user terminal 30 through the battery pack wireless communication module 101. The battery pack charger 50 can realize data interaction with the user terminal 30 without a wireless communication module, and thus the production and/or use cost can be effectively reduced.

Further, two communication modes are also configured between the battery pack charger 50 and the user terminal 30. The first mode is a communication link that data of the battery pack charger 50 is transmitted to the battery pack 10 in a wired communication mode and then transmitted to the user terminal 30 through the battery pack wireless communication module 101 of the battery pack 10; the second mode is a communication link that data of the battery pack charger 50 is transmitted to the battery pack 10 in a wired communication mode, then transmitted from the battery pack 10 to the apparatus in a wired communication mode, and then transmitted to the user terminal 30 through the first wireless communication module of the apparatus.

In this embodiment, the charging apparatus may be an energy-storage-type charging apparatus 20. The specific implementation of the energy-storage-type charging apparatus 20 may refer to the previous embodiments, which will not be repeated here.

It can be understood that the battery pack charger 50 communicates with the user terminal 30 through different communication modes in different scenarios.

Referring to FIG. 3, take the example where the battery pack charger 50 transmits data to the user terminal 30 and the interactive terminal 301 is a smartphone:
in a working scenario, the device operator of the gardening team often works within the working area, and the battery packs 10, the battery pack chargers 50, etc., carried by the gardening team are usually placed at somewhere nearby in the working area; when the device operator carries around the interactive terminal 301, the interactive terminal 301 of the device operator has established a relationship with the battery pack 10, and the Bluetooth function of the interactive terminal 301 of the device operator is enabled, and at this time the interactive terminal 301 is within a communication distance of the battery pack wireless communication module 101 of the battery pack 10, and the battery pack 10 can establish communication with the user terminal 30 through the battery pack wireless communication module 101. **In** a use scenario where the battery pack 10 is connected to the battery pack charger 50 for charging, the data of the battery pack charger 50 can be transmitted to the battery pack 10 in a wired communication mode and then transmitted to the user terminal 30 through the battery pack wireless communication module 101 of the battery pack 10, that is, the battery pack 10 receives the data of the battery pack charger 50 and transmits the data to the user terminal 30 in real time. There may also be other application scenarios for the battery pack charger 50 during actual use, which will not be listed here one by one.

Accordingly, when the device operator does not carry around the interactive terminal 301, or the interactive terminal 301 of the device operator has not established a relationship with the battery pack 10, or the Bluetooth function of the interactive terminal 301 of the device operator is disabled, the distance from the interactive terminal 301 to the battery pack 10 is beyond a communication distance of the second wireless communication module 101, and in this case, the battery pack 10 cannot establish communication with the user terminal 30 through the battery pack wireless communication module 101. In a use scenario where the battery pack 10 is connected to the battery pack charger 50 for charging, since the battery pack 10 itself has a certain storage space, the battery pack 10 can receive and store data of the battery pack charger 50, that is, data of the battery pack charger 50 can be transmitted to the battery pack 10 for storage in a wired communication mode, and then when the battery pack 10 establishes communication with the user terminal 30 again, the stored data of the battery pack charger 50 is sent to the user terminal 30. It can be understood that for the scenarios that the battery pack 10 establishes communication with the user terminal 30 again described above, the scenario may be that the battery pack 10 establishes communication with the user terminal 30 again through the battery pack wireless communication module 101, or the scenario may be that when the battery pack 10 is low in power and needs to be charged, the battery pack 10 is detached from the electric tool 40 and connected to a charging apparatus for charging, and in this case, the battery pack 10 and the charging apparatus can establish communication in a wired communication mode. Because the charging apparatus can establish communication with the user terminal 30 through the apparatus wireless communication module, data of the battery pack charger 50 stored in the battery pack 10 can be transmitted to the charging apparatus in a wired communication mode and then transmitted to the user terminal 30 through the apparatus wireless communication module of the charging apparatus. There may also be other application scenarios for the battery pack charger 50 during actual use, which will not be listed here one by one.

In addition, it can be understood that the data transmission between the battery pack charger 50 and the user terminal 30 is bidirectional, including the data transmission from the battery pack charger 50 to the user terminal 30 and the data transmission from the user terminal 30 to the battery pack charger 50 as well.

As an example, the battery pack charger 50 transmits the operating state data to the user terminal 30 through the battery pack 10 and receives the battery pack charger control instruction data sent by the user terminal 30 through the battery pack 10.

Further, the data of the battery pack charger 50 includes one or more of the charger operating parameters, the charging capacity in the charging state, the remaining charging time, the accumulated charging time and the times of charging, the charging records, and the charger fault information of the battery pack charger 50. The charger fault information includes communication faults, circuit abnormalities, temperature abnormalities, battery compartment abnormalities, and the like.

Compared with the prior art, the battery pack charger 50 is configured with two communication modes, such that the communication between the battery pack charger 50 and the user terminal 30 can be realized in different scenarios, the reliability of data interaction between the battery pack charger 50 and the user terminal 30 is improved. It is ensured that users can effectively monitor and manage the battery pack charger 50, and meanwhile, low costs are achieved; further, the loss of data of the battery pack charger stored in the battery pack 10, caused by the limited internal storage space of the battery pack 10 when the battery pack 10 is offline for a long time, can also be avoided. Further, the communication mode in which the data of the battery pack charger 50 is transmitted to the user terminal via the battery pack and the charging apparatus also provides a communication link that can transmit the data of the battery pack charger 50 to the user terminal 30 without being restricted by the use of the interactive terminal 301.

In summary, by configuring the apparatus with an apparatus wireless communication module capable of realizing long-distance communication, configuring the battery pack 10 with a battery pack wireless communication module capable of realizing short-distance communication, as well as reasonably configuring the communication mode between the battery pack and the user terminal and that between the apparatus and the user terminal, the apparatus assembly can effectively improve the communication reliability between the battery pack and the user terminal and that between the apparatus and the user terminal. This enables the user to effectively monitor and manage the battery pack and the apparatus; additionally, through the efficient utilization of communication modules, low costs can be achieved. Further, in addition to establishing reliable communication between the battery pack 10, the apparatus, and the user terminal 30, data forwarding of the electric tool 40 or the battery pack charger 50 connected to the battery pack 10 can be realized. Based on the above communication mode, at least the display of data of the battery pack 10, the apparatus, the electric tool 40, and the battery pack charger 50 on the user terminal 30 and the function control of the battery pack 10, the apparatus, the electric tool 40, and the battery pack charger 50 by the user terminal 30 can be realized. This is beneficial for the comprehensive monitoring and management of the battery pack 10, the apparatus, the electric tool 40, and the battery pack charger 50 by the user. For example, by monitoring the fault information of the battery pack 10, the apparatus, the electric tool 40, and the battery pack charger 50 during the charging, discharging, or using process and reporting the fault information to the user terminal 30, the user can be informed of the fault state immediately and then enable timely troubleshooting to avoid affecting the normal use of the battery pack 10, the apparatus, the electric tool 40, and the battery pack charger 50. Specifically, the fault information is transmitted in the form of codes, and different faults correspond to different codes.

In other embodiments, in the apparatus assembly of the present application, the apparatus may be configured as the electric tool 40, and the battery pack 10 can be electrically connected to the electric tool 40 and provide the electric tool 40 with the electric energy required for operation. In this embodiment, the electric tool 40 is provided with the apparatus wireless communication module described above, the battery pack 10 is provided with the battery pack wireless communication module 101, and the battery pack 10 can communicate with the electric tool 40 in a wired communication mode. In the first battery pack communication mode, the data of the battery pack is directly transmitted to the user terminal 30 through the battery pack wireless communication module 101; in the second battery pack communication mode, the electric tool 40 receives the data of the battery pack and transmits the data to the user terminal 30 through the apparatus wireless communication module. The electric tool 40, the battery pack 10, the user terminal 30, and the specific communication modes therebetween may refer to the previous embodiments and will not be repeated here.

The present application further provides a device system, which includes a first device, a battery pack, and a hub device provided with a first wireless communication module. The battery pack can be connected to the first device and supply power for the operation of the first device, and the battery pack can communicate with the first device. The hub device and the first device are configured as devices that perform different work tasks. The hub device can be electrically connected to the battery pack for power transmission, and the battery pack can communicate with the hub device.

Both the data of the first device and the data of the battery pack can be transmitted to a user terminal through the first wireless communication module of the hub device. When the battery pack is connected to the first device, the battery pack receives and stores the data of the first device. When the battery pack is in communication connection with the hub device, the hub device receives the data of the battery pack and the data of the first device stored in the battery pack and transmits the data to the user terminal through the first wireless communication module.

Wherein the first device is configured as an electric tool.

It can be understood that the hub device can be configured as a charging apparatus that can be electrically connected to the battery pack and charge the battery pack, or an inverter or other device that can be electrically connected to the battery pack and be powered by the battery pack.

In the present application, besides the hub device provided with the first wireless communication module, the device system further includes a first type of device that can communicate directly with the hub device in a wired communication mode, a second type of device that can communicate with the first type of device in a wired communication mode, and a third type of device that can communicate with the hub device in a wireless communication mode. Certainly, the device system may selectively include one or more of the first type of device, the second type of device, and the third type of device.

The data of the first type of device is directly transmitted to the hub device in a wired communication mode and then transmitted to the user terminal through the first wireless communication module of the hub device. The data of the second type of device is transmitted to the first type of device in a wired communication mode for storage, then transmitted by the first type of device to the hub device in a wired communication mode, and subsequently transmitted to the user terminal through the first wireless communication module of the hub device. The third type of device is provided with a wireless communication module, and the hub device is provided with a second wireless communication module that can be matched and connected with the wireless communication module of the third type of device. The data of the third type of device can be transmitted to the hub device through the wireless communication module of the third type of device and the second wireless communication module, and then transmitted to the user terminal through the first wireless communication module of the hub device.

The electric tool 40 may be one or more of a lawn mower, brush cutter, trimmer, pruning shears, high-pressure washer, blower, chainsaw, hand-mower, multi-task tool, or sprayer. Certainly, the electric tool may also be other electric tools that require an independent power module, which will not be listed here one by one.

The battery pack 10 can at least be used as a power source for the electric tool 40. In the application scenario shown in FIG. 8, when the battery pack 10 is connected to the electric tool 40 in a matching manner, the battery pack 10 can provide electric energy to the connected electric tool 40.

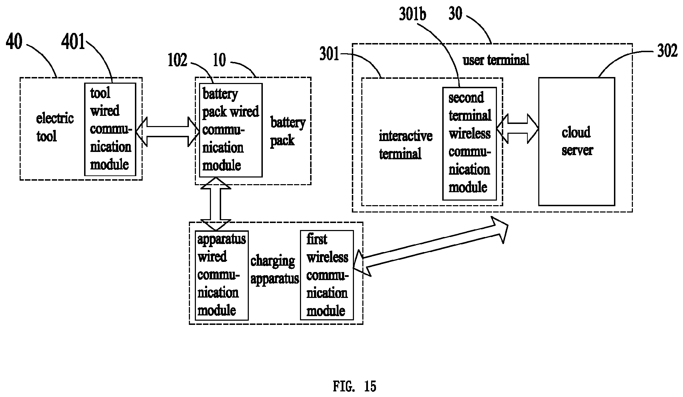

Referring to FIG. 15, one embodiment of the present application provides a device system, which includes an electric tool, a battery pack, and a hub device provided with a first wireless communication module. The hub device is configured as a charging apparatus (i.e., the device system includes a peripheral apparatus system and an energy system, wherein the peripheral apparatus system includes an electric tool, and the energy system includes a battery pack and a charging apparatus). The battery pack can be connected to the electric tool and supply power for the operation of the electric tool, and the battery pack can communicate with the electric tool. The charging apparatus can be electrically connected to the battery pack and charge the battery pack, and the battery pack can communicate with the charging apparatus. Further, the battery pack 10 communicates with the electric tool 40 in a wired communication mode to receive data of the electric tool 40, and the charging apparatus communicates with the battery pack 10 in a wired communication mode to receive data of the battery pack 10.

Specifically, the battery pack 10 and the electric tool 40 are provided with matching wired communication modules. When the electric tool 40 is connected to the battery pack 10 in a matching manner, the two perform data interaction in a wired communication mode. In detail, the battery pack 10 is configured with a battery pack wired communication module 102, and the electric tool 40 is configured with a tool wired communication module 401. The battery pack 10 receives data of the electric tool through the battery pack wired communication module 102 and the tool wired communication module 401, and transmits the data to the user terminal 30 through a battery pack wireless communication module 101. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the battery pack wired communication module 102 and the tool wired communication module 401 use serial port communication modules.

The battery pack 10 and the charging apparatus are provided with matching wired communication modules. When the battery pack 10 is connected to the charging apparatus in a matching manner, the two perform data interaction in a wired communication mode. In detail, the charging apparatus is configured with an apparatus wired communication module, and the battery pack 10 is configured with a battery pack wired communication module 102. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the wired communication modules of the charging apparatus and the battery pack 10 use serial port communication modules or CAN communication modules.

Both the data of the electric tool and the data of the battery pack can be transmitted to the user terminal 30 through the first wireless communication module of the charging apparatus. When the battery pack 10 is connected to the electric tool 40, the battery pack 10 receives and stores data of the electric tool 40. When the battery pack 10 is in communication connection with the charging apparatus, the charging apparatus receives the data of the battery pack and the data of the electric tool stored in the battery pack 10, and transmits the data to the user terminal 30 through the first wireless communication module. It can be understood that the battery pack belongs to the aforementioned first type of device, and the electric tool belongs to the aforementioned second type of device.

In this embodiment, the first wireless communication module may be configured as a wireless communication module capable of achieving long-distance communication, or the first wireless communication module includes at least a wireless communication module capable of achieving long-distance communication. Specifically, the first wireless communication module may be one of a 3G module, a 4G module, a 5G module, a Lora module, a sigfox module, or an NB-IOT module. Preferably, in this embodiment, the first wireless communication module uses a 4G module.

In the above embodiment, the charging apparatus may be configured as an energy-storage-type charging apparatus 20 and may also be configured as a battery pack charger 50.

Referring to FIG. 4 and FIG. 5, when the charging apparatus is configured as an energy-storage-type charging apparatus 20, the device system includes an electric tool, a battery pack, and an energy-storage-type charging apparatus 20. The battery pack 10 can be connected to the electric tool 40 and supply power for the operation of the electric tool 40, and the battery pack 10 can communicate with the electric tool 40. The energy-storage-type charging apparatus 20 can be electrically connected to the battery pack 10 and charge the battery pack 10, and the battery pack 10 can communicate with the energy-storage-type charging apparatus 20. The energy-storage-type charging apparatus 20 is provided with a first charging apparatus wireless communication module 201 (i.e., the aforementioned first wireless communication module of the charging apparatus).

Both the data of the electric tool and the data of the battery pack can be transmitted to the user terminal 30 through the first charging apparatus wireless communication module 201 of the energy-storage-type charging apparatus 20. When the battery pack 10 is connected to the electric tool 40, the battery pack 10 receives and stores data of the electric tool 40. When the battery pack 10 is in communication connection with the energy-storage-type charging apparatus 20, the energy-storage-type charging apparatus 20 receives the data of the battery pack and the data of the electric tool stored in the battery pack 10, and transmits the data to the user terminal 30 through the first charging apparatus wireless communication module 201.

Further, the energy-storage-type charging apparatus 20 is further configured with a charging apparatus wired communication module 202 (i.e., the aforementioned apparatus wired communication module of the charging apparatus). When the battery pack wired communication module 102 of the battery pack 10 is connected to the charging apparatus wired communication module 202 of the energy-storage-type charging apparatus 20 in a matching manner, the battery pack 10 and the energy-storage-type charging apparatus 20 can perform data interaction in a wired communication mode.

Preferably, in this embodiment, the first charging apparatus wireless communication module 201 is configured as a 4G module. The charging apparatus wired communication module 202 and the battery pack wired communication module 102 use serial port communication modules and/or CAN communication modules.

The energy-storage-type charging apparatus 20 is generally used as a portable charging source. The energy-storage-type charging apparatus 20 includes a battery module 210 and a charging module 220. The charging module 220 is provided with a charging interface 222, and the battery module 210 is electrically connected to the charging module 220. The charging module 220 is at least used to convert the electric energy of the battery module 210 and output the electric energy through the charging interface 222, so as to charge the battery pack 10 connected to the charging interface 222 in a matching manner. As shown in the scenario of FIG. 6, illustratively, the battery pack 10 may be a handheld battery pack 10a, a backpack battery pack 10b, or in other forms. It can be understood that the energy-storage-type charging apparatus 20, through the arrangement of the battery module 210, makes the charging process of the battery pack 10 no longer depend on an alternating current (AC) power source, and thus can meet the power demand of the gardening team during outdoor work. For a more specific implementation of the energy-storage-type charging apparatus 20, reference may be made to the previously mentioned apparatus assembly embodiments, which will not be repeated here.

Referring to FIG. 9, when the charging apparatus is configured as a battery pack charger 50, the device system includes an electric tool, a battery pack, and a battery pack charger 50. The battery pack 10 can be connected to the electric tool 40 and supply power for the operation of the electric tool 40, and the battery pack 10 can communicate with the electric tool 40. The battery pack charger 50 can be electrically connected to the battery pack 10 and charge the battery pack 10, and the battery pack 10 can communicate with the battery pack charger 50. The battery pack charger 50 is provided with a first charger wireless communication module 502 (i.e., the aforementioned first wireless communication module of the charging apparatus).

Both the data of the electric tool and the data of the battery pack can be transmitted to the user terminal 30 through the first charger wireless communication module 502 of the battery pack charger 50. When the battery pack 10 is connected to the electric tool 40, the battery pack 10 receives and stores data of the electric tool 40. When the battery pack 10 is in communication connection with the energy-storage-type charging apparatus 20, the battery pack charger 50 receives the data of the battery pack and the data of the electric tool stored in the battery pack 10, and transmits the data to the user terminal 30 through the first charger wireless communication module 502.

Further, the battery pack charger 50 is further configured with a charger wired communication module 501 (i.e., the aforementioned apparatus wired communication module of the charging apparatus). When the battery pack wired communication module 102 of the battery pack 10 is connected to the charger wired communication module 501 of the battery pack charger 50 in a matching manner, the battery pack 10 and the battery pack charger 50 can perform data interaction in a wired communication mode.

Preferably, in this embodiment, the first charger wireless communication module 502 is configured as a 4G module. The charger wired communication module 501 and the battery pack wired communication module 102 use serial port communication modules and/or CAN communication modules.

The battery pack charger 50 is generally used to connect to the battery pack 10 in a matching manner to charge the battery pack 10. The battery pack charger 50 includes a charger housing 510, a battery pack charging interface 520 arranged on the charger housing 510, and a charging circuit arranged in the charger housing 510. The charging circuit is electrically connected to the battery pack charging interface 520 and is used to connect to an external AC power source and convert input alternating current into direct current to be output through the battery pack charging interface 520, thus charging the battery pack 10 connected to the battery pack charging interface 520 in a matching manner.

It can be understood that, in the above embodiment, the user terminal 30 is used for data interaction with the electric tool 40, the battery pack 10, the hub device, and other devices mentioned in later embodiments within the device system, and the user terminal provides to the user an interface for human-machine interaction. The human-machine interaction includes displaying the state information of the electric tool 40, the battery pack 10, the hub device, and the other devices mentioned in later embodiments, and/or receiving user inputs of control instructions for the electric tool 40, the battery pack 10, the hub device, and the other devices mentioned in later embodiments. For a specific implementation of the user terminal 30, reference may be made to the previously mentioned apparatus assembly embodiments, which will not be repeated here.

The specific application scenario of the embodiment is as follows: When the battery pack 10 is connected to the electric tool 40 in a matching manner, the battery pack 10 provides the electric energy required for the operation of the electric tool 40. When the battery pack 10 cannot establish communication with the user terminal 30, in this case, the battery pack 10 receives and stores data of the electric tool 40 in a wired communication mode, while also storing the battery pack 10's own data. When the battery pack 10 is detached from the electric tool 40 and connected to the charging apparatus in a matching manner for charging, the charging apparatus receives the data of the electric tool 40 stored in the battery pack 10 and the battery pack 10's own data in a wired communication mode and transmits the data to the user terminal 30 through the first wireless communication module. This achieves the off-line transmission of data of the electric tool 40 and the battery pack 10. Neither the battery pack 10 nor the electric tool 40 need to be configured with a wireless communication module. By using the first wireless communication module of the charging apparatus, the data of the electric tool 40 and the battery pack 10 can be transmitted to the user terminal 30, effectively reducing communication costs. In addition, it should be noted that the inability of the battery pack 10 to establish communication with the user terminal 30 could be due to the battery pack 10 not having a communication module capable of communicating with the user terminal 30, or it could be that the battery pack 10 does have a communication module capable of communicating with the user terminal 30, but the distance between the battery pack 10 and the user terminal 30 exceeds the communication distance of the communication module, thus making it impossible to establish a communication scenario.

In addition, it can be understood that the data transmission between the battery pack 10, the electric tool 40, and the user terminal 30 is bidirectional, which includes both the battery pack 10 and the electric tool 40 transmitting data to the user terminal 30, as well as the user terminal 30 transmitting data to the battery pack 10 and the electric tool 40, such as control instructions for the battery pack 10 and the electric tool 40. The operating state data of the charging apparatus itself may also be transmitted to the user terminal 30 through the first wireless communication module. Moreover, the data transmission between the charging apparatus and the user terminal 30 is also bidirectional, which includes both the charging apparatus transmitting data to the user terminal 30, as well as the user terminal 30 transmitting data to the charging apparatus, such as control instructions for the charging apparatus.

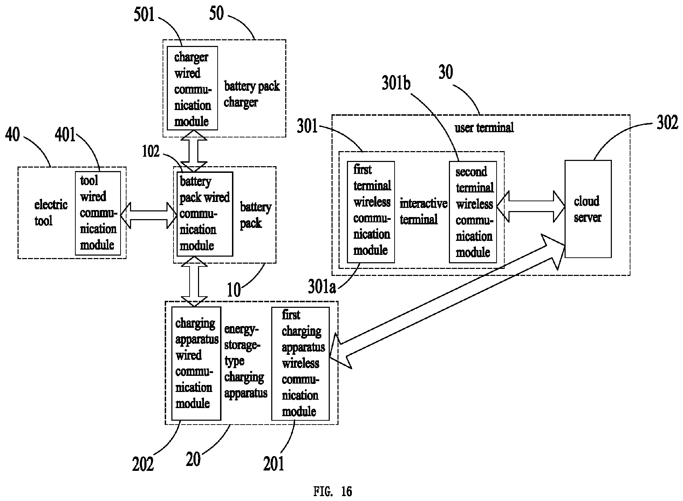

Based on the above embodiment, and referring to FIG. 9 and FIG. 16, the device system further includes a second device. The data of this second device can also be transmitted to the user terminal 30 through the first wireless communication module of the hub device. The second device is configured as the battery pack charger 50 (i.e., the peripheral apparatus system further includes a battery pack charger), and the battery pack charger 50 can communicate with the battery pack 10.

The battery pack charger 50 includes a charger housing 510, a battery pack charging interface 520 arranged on the charger housing 510, and a charging circuit arranged in the charger housing 510. The charging circuit is electrically connected to the battery pack charging interface 520 and is used to connect to an external AC power source and convert input alternating current into direct current to be output through the battery pack charging interface 520, thus charging the battery pack 10 connected to the battery pack charging interface 520 in a matching manner.

When the battery pack 10 is connected to the battery pack charger 50, the battery pack 10 receives and stores data of the battery pack charger 50. When the battery pack 10 is in communication connection with the hub device, the hub device receives the data of the battery pack and the data of the battery pack charger stored in the battery pack and transmits the data to the user terminal through the first wireless communication module. It can be understood that the battery pack charger in the embodiment belongs to the aforementioned second type of device.

Further, the second device as well as the first device and the hub device are configured to perform different work tasks. In this embodiment, the first device is configured as an electric tool 40, and the hub device is configured as an energy-storage-type charging apparatus 20. The specific implementation of the energy-storage-type charging apparatus 20 may refer to the previous embodiments, which will not be repeated here.

Further, the battery pack 10 communicates with the battery pack charger 50 in a wired communication mode to receive data of the battery pack charger 50. Specifically, the battery pack 10 and the battery pack charger 50 are provided with matching wired communication modules. When the battery pack 10 is connected to the battery pack charger 50 in a matching manner, the two perform data interaction in a wired communication mode. Specifically, the battery pack charger 50 is configured with a charger wired communication module 501, and the battery pack 10 is configured with a battery pack wired communication module 102. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the charger wired communication module 501 and the battery pack wired communication module 102 use serial port communication modules or CAN communication modules.

Both the data of the battery pack 10 and the data of the battery pack charger 50 can be transmitted to the user terminal 30 through the first charging apparatus wireless communication module 201 of the energy-storage-type charging apparatus 20.

Specifically, when the battery pack 10 is connected to the battery pack charger 50, the battery pack 10 receives and stores the data of the battery pack charger 50 in a wired communication mode, while also storing its own data. When the battery pack 10 is in communication connection with the energy-storage-type charging apparatus 20, the energy-storage-type charging apparatus 20 receives the data of the battery pack and the data of the battery pack charger stored in the battery pack, and transmits the data to the user terminal 30 through the first charging apparatus wireless communication module 201. This achieves the off-line transmission of data of the battery pack 10 and the battery pack charger 50.

The specific application scenario of the embodiment is as follows: When the battery pack 10 is connected to the battery pack charger 50 in a matching manner, the battery pack charger 50 charges the battery pack 10. When the battery pack 10 cannot establish communication with the user terminal 30, in this case, the battery pack 10 receives and stores data of the battery pack charger 50 in a wired communication mode, while also storing the battery pack 10's own data. When the battery pack 10 is detached from the battery pack charger 50 and reconnected to the charging interface 222 of the energy-storage-type charging apparatus 20 in a matching manner for charging, the energy-storage-type charging apparatus 20 receives the data of the battery pack charger 50 stored in the battery pack 10 and the battery pack 10's own data in a wired communication mode and transmits the data to the user terminal 30 through the first charging apparatus wireless communication module 201. Neither the battery pack 10 nor the battery pack charger 50 needs to be configured with a wireless communication module. By using the first charging apparatus wireless communication module 201 of the energy-storage-type charging apparatus 20, the data of the battery pack charger 50 and the battery pack 10 can be transmitted to the user terminal 30, effectively reducing communication costs. In addition, it should be noted that the inability of the battery pack 10 to establish communication with the user terminal 30 could be due to the battery pack 10 not having a communication module capable of communicating with the user terminal 30, or it could be that the battery pack 10 does have a communication module capable of communicating with the user terminal 30, but the distance between the battery pack 10 and the user terminal 30 exceeds the communication distance of the communication module, thus making it impossible to establish a communication scenario.

In another embodiment, based on the previous embodiments, the device system further includes a third device. The first wireless communication module includes a short-distance wireless communication module and a long-distance wireless communication module. The third device is provided with a second wireless communication module that can be matched and connected with the short-distance wireless communication module. The third device can only communicate with the hub device through the second wireless communication module and the short-distance wireless communication module.

The data of the third device is transmitted to the hub device through the second wireless communication module and the short-distance wireless communication module and then transmitted to the user terminal through the long-distance wireless communication module of the hub device. It can be understood that the communication distance of the long-distance wireless communication module is greater than that of the short-distance wireless communication module, and the third device belongs to the aforementioned third type of device.

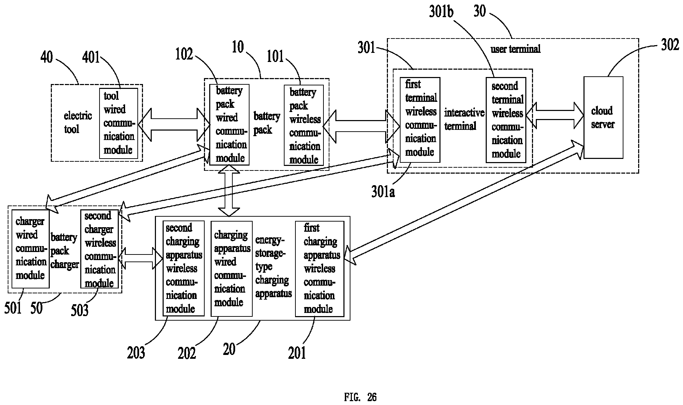

As an example, referring to FIG. 26, the third device is configured as the battery pack charger 50. The battery pack charger 50 is provided with a second charger wireless communication module 503 (i.e., the aforementioned second wireless communication module of the third device).

The battery pack charger 50 includes a charger housing 510, a battery pack charging interface 520 arranged on the charger housing 510, and a charging circuit arranged in the charger housing 510. The charging circuit is electrically connected to the battery pack charging interface 520 and is used to connect to an external AC power source and convert input alternating current into direct current to be output through the battery pack charging interface 520, thus charging the battery pack 10 connected to the battery pack charging interface 520 in a matching manner.

The data of the battery pack charger 50 can be transmitted to the hub device through the second wireless communication module and the short-distance wireless communication module, and then transmitted to the user terminal through the long-distance wireless communication module of the hub device.

In this embodiment, the hub device is configured as the energy-storage-type charging apparatus 20. The energy-storage-type charging apparatus 20 includes the first charging apparatus wireless communication module 201 (i.e., the aforementioned long-distance wireless communication module of the first wireless communication module) and the second charging apparatus wireless communication module 203 (i.e., the aforementioned short-distance wireless communication module of the first wireless communication module).

The data of the battery pack charger can be transmitted to the energy-storage-type charging apparatus 20 through the second charger wireless communication module 503 and the second charging apparatus wireless communication module 203, and then transmitted to the user terminal through the first charging apparatus wireless communication module 201 of the energy-storage-type charging apparatus 20.

Further, the first charging apparatus wireless communication module 201 can be configured as a wireless communication module capable of long-distance communication, and the first charging apparatus wireless communication module may be one of a 3G module, a 4G module, a 5G module, a Lora module, a sigfox module, or an NB-IOT module. Preferably, in this embodiment, the first charging apparatus wireless communication module 201 uses a 4G module. The second charger wireless communication module 503 and the second charging apparatus wireless communication module 203 can be configured as wireless communication modules capable of short-distance communication, and they may be one of Bluetooth modules, Zigbee modules, sub-1 G modules, or RF433 modules. Preferably, in this embodiment, the second charger wireless communication module 503 and the second charging apparatus wireless communication module 203 use Bluetooth modules.

In this embodiment, the battery pack charger 50, by adding a second charger wireless communication module 503, can enable on-line communication with the user terminal. This can meet the need for post-sale maintenance data collection in a first aspect; send a power-off anomaly alert to the user in a second aspect; and facilitate OTA upgrades, i.e., remote firmware or software updates, for the battery pack charger 50 in a third aspect.

Further, the battery pack charger is configured with a first battery pack charger communication mode and a second battery pack charger communication mode. In the first battery pack charger communication mode, the data of the battery pack charger is directly transmitted to the user terminal through the second wireless communication module. In the second battery pack charger communication mode, the data of the battery pack charger can be transmitted to the hub device through the second wireless communication module and the short-distance wireless communication module and then transmitted to the user terminal through the long-distance wireless communication module of the hub device.

The long-distance wireless communication module is configured to enable data transmission between the hub device and the user terminal within a first preset communication distance, and the second wireless communication module is configured to enable data transmission between the battery pack charger and the user terminal within a charger preset communication distance, wherein the first preset communication distance is greater than the charger preset communication distance.

Specifically, in this embodiment, in the first battery pack charger communication mode, the data of the battery pack charger is directly transmitted to the user terminal through the second charger wireless communication module 503. In the second battery pack charger communication mode, the data of the battery pack charger can be transmitted to the energy-storage-type charging apparatus 20 through the second charger wireless communication module 503 and the second charging apparatus wireless communication module 203, and then transmitted to the user terminal through the first charging apparatus wireless communication module 201 of the energy-storage-type charging apparatus 20.

It can be understood that the battery pack charger 50 communicates with the user terminal 30 through different communication modes in different scenarios.

Referring to FIG. 26, take the example where the battery pack charger transmits data to the user terminal 30, the interactive terminal 301 is a smartphone, and both the second charger wireless communication module 503 and the second charging apparatus wireless communication module 203 use Bluetooth modules:
For the first battery pack charger communication mode, in a working scenario, the device operator of the gardening team often holds the electric tool in the working area to work; when the device operator carries around the interactive terminal 301, with the Bluetooth function of the interactive terminal 301 of the device operator enabled, and the distance between the interactive terminal 301 and the battery pack charger is within the communication distance of the second charger wireless communication module 503, in this case, the battery pack charger can establish communication with the user terminal 30 through the second charger wireless communication module 503. In this case, the data of the battery pack charger can be directly transmitted to the user terminal 30 through the second charger wireless communication module 503. There may also be other application scenarios for the battery pack charger 50 during actual use, which will not be listed here one by one.

For the second battery pack charger communication mode, when both the battery pack charger 50 and the energy-storage-type charging apparatus 20 are on the work site, if the distance between the battery pack charger and the energy-storage-type charging apparatus 20 is within the communication distance of the Bluetooth module, the battery pack charger can communicate with the energy-storage-type charging apparatus 20 through the second charger wireless communication module 503 and the second charging apparatus wireless communication module 203. In this case, the data of the battery pack charger can be transmitted to the energy-storage-type charging apparatus 20 through the second charger wireless communication module 503 and the second charging apparatus wireless communication module 203 by using the Bluetooth modules, and then transmitted to the user terminal 30 through the first charging apparatus wireless communication module 201 of the energy-storage-type charging apparatus 20. There may also be other application scenarios for the battery pack charger during actual use, which will not be listed here one by one.

Compared with the prior art, the battery pack charger is configured with two communication modes, which not only can enable communication between the battery pack charger and the user terminal 30 in different scenarios, thereby improving the reliability of data interaction between the battery pack charger and the user terminal 30, ensuring that users can effectively monitor and manage the battery pack charger, but also achieve a low cost. Further, the communication mode where the data of the battery pack charger is transmitted to the user terminal 30 via the energy-storage-type charging apparatus 20 also provides a communication link that allows the data of the battery pack charger to be transmitted to the user terminal 30 without being limited by the use of the interactive terminal 301.

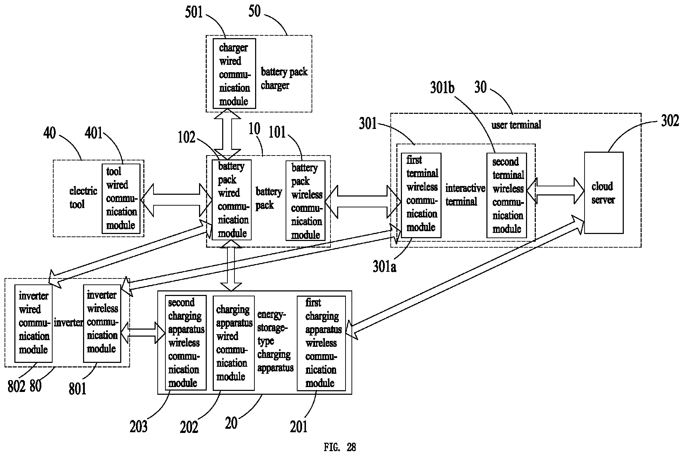

As another example, referring to FIG. 28, the third device is configured as an inverter 80. The inverter includes an inverter housing 810, an inverter battery pack interface 820 arranged on the inverter housing 810, an AC output interface 830, and an inverter circuit 840 arranged in the inverter housing 810. The inverter circuit 840 is used to convert the DC electric energy of the battery pack connected to the inverter battery pack interface 820 into AC electric energy, which is output through the AC output interface 830. The inverter 80 is provided with an inverter wireless communication module 801 (i.e., the aforementioned second wireless communication module of the third device).

The data of the inverter 80 can be transmitted to the hub device through the second wireless communication module and the short-distance wireless communication module, and then transmitted to the user terminal through the long-distance wireless communication module of the hub device.

When working outdoors, a gardening team often requires mobile AC power sources to meet the needs of using AC tools in outdoor scenarios, as well as to meet the team's living electricity needs. The inverter 80 in the embodiment is powered by the battery pack 10 and can convert the DC electric energy of the battery pack 10 into AC electric energy, which is output through the AC output interface. Moreover, the inverter is mobile and can meet the AC power source requirements of the gardening team.

In this embodiment, the hub device is configured as the energy-storage-type charging apparatus 20. The energy-storage-type charging apparatus 20 includes the first charging apparatus wireless communication module 201 (i.e., the aforementioned long-distance wireless communication module of the first wireless communication module) and the second charging apparatus wireless communication module 203 (i.e., the aforementioned short-distance wireless communication module of the first wireless communication module).

The data of the inverter 80 can be transmitted to the energy-storage-type charging apparatus 20 through the inverter wireless communication module 801 and the second charging apparatus wireless communication module 203, and then transmitted to the user terminal through the first charging apparatus wireless communication module 201 of the energy-storage-type charging apparatus 20.

Further, the first charging apparatus wireless communication module 201 can be configured as a wireless communication module capable of long-distance communication, and the first charging apparatus wireless communication module may be one of a 3G module, a 4G module, a 5G module, a Lora module, a sigfox module, or an NB-IOT module. Preferably, in this embodiment, the first charging apparatus wireless communication module 201 uses a 4G module. The inverter wireless communication module 801 and the second charging apparatus wireless communication module 203 can be configured as wireless communication modules capable of short-distance communication, and they may be one of Bluetooth modules, Zigbee modules, sub-1G modules, or RF433 modules. Preferably, in this embodiment, the inverter wireless communication module 801 and the second charging apparatus wireless communication module 203 use Bluetooth modules.

Further, in this embodiment, the inverter 80 and the battery pack 10 can communicate in a wired communication mode when connected in a matching manner. The inverter 80 and the battery pack 10 are provided with wired communication modules capable of matching and connecting. When the inverter 80 is connected to the battery pack 10 in a matching manner, the two perform data interaction in a wired communication mode. Specifically, the battery pack 10 is configured with a battery pack wired communication module 102, and the inverter 80 is configured with an inverter wired communication module 802. The wired communication module described in this embodiment may be any one of a serial port communication module and a CAN communication module. Certainly, the wired communication module may also be a wired transmission module in other forms, which also falls within the protection scope of the present disclosure in the case that it is within the scope of the core idea of the present disclosure. Preferably, the inverter wired communication module 802 and the battery pack wired communication module 102 use serial port communication modules or CAN communication modules.

Further, the inverter is configured with a first inverter communication mode and a second inverter communication mode. In the first inverter communication mode, the data of the inverter can be directly transmitted to the user terminal through the second wireless communication module. In the second inverter communication mode, the data of the inverter can be transmitted to the hub device through the second wireless communication module and the short-distance wireless communication module and then transmitted to the user terminal through the long-distance wireless communication module of the hub device.

The long-distance wireless communication module is configured to enable data transmission between the hub device and the user terminal within a first preset communication distance, and the second wireless communication module is configured to enable data transmission between the inverter and the user terminal within an inverter preset communication distance, wherein the first preset communication distance is greater than the inverter preset communication distance.

Specifically, in this embodiment, in the first inverter communication mode, the data of the inverter 80 can be directly transmitted to the user terminal 30 through the inverter wireless communication module 801. In the second inverter communication mode, the data of the inverter 80 can be transmitted to the energy-storage-type charging apparatus 20 through the inverter wireless communication module 801 and the second charging apparatus wireless communication module 203, and then transmitted to the user terminal 30 through the first charging apparatus wireless communication module 201 of the energy-storage-type charging apparatus 20.

It can be understood that the inverter communicates with the user terminal 30 through different communication modes in different scenarios.

Referring to FIG. 28, take the example where the inverter transmits data to the user terminal 30, the interactive terminal 301 is a smartphone, and both the inverter wireless communication module 801 and the second charging apparatus wireless communication module 203 use Bluetooth modules:
For the first inverter communication mode, in a working scenario, the device operator of the gardening team often holds the electric tool in the working area to work; when the device operator carries around the interactive terminal 301, with the Bluetooth function of the interactive terminal 301 of the device operator enabled, and the distance between the interactive terminal 301 and the inverter 80 is within the communication distance of the inverter wireless communication module, in this case, the inverter 80 can establish communication with the user terminal 30 through the inverter wireless communication module 801. In this case, the data of the inverter 80 can be directly transmitted to the user terminal 30 through the inverter wireless communication module 801. There may also be other application scenarios for the inverter 80 during actual use, which will not be listed here one by one.

For the second inverter communication mode, when both the inverter 80 and the energy-storage-type charging apparatus 20 are on the work site, if the distance between the inverter and the energy-storage-type charging apparatus 20 is within the communication distance of the Bluetooth module, the inverter 80 can communicate with the energy-storage-type charging apparatus 20 through the inverter wireless communication module 801 and the second charging apparatus wireless communication module 203. In this case, the data of the inverter can be transmitted to the energy-storage-type charging apparatus 20 through the inverter wireless communication module 801 and the second charging apparatus wireless communication module 203, and then transmitted to the user terminal 30 through the first charging apparatus wireless communication module 201 of the energy-storage-type charging apparatus 20. There may also be other application scenarios for the inverter 80 during actual use, which will not be listed here one by one.

Compared with the prior art, the inverter is configured with two communication modes, which not only can enable communication between the inverter 80 and the user terminal 30 in different scenarios, thereby improving the reliability of data interaction between the inverter 80 and the user terminal 30, ensuring that users can effectively monitor and manage the inverter 80, but also achieve a low cost. Further, the communication mode where the data of the inverter 80 is transmitted to the user terminal 30 via the energy-storage-type charging apparatus 20 also provides a communication link that allows the data of the inverter to be transmitted to the user terminal 30 without being limited by the use of the interactive terminal 301.

Specifically, the data of the inverter includes an inversion state, a switch state, an input/output voltage, a current, a power, a fault, an event, and the like. The fault includes short circuits, overloads, output over-voltage, output under-voltage, input over-voltage, over-temperature, and the like. The event includes battery pack plug/unplug times, switch on/off events, and the like.

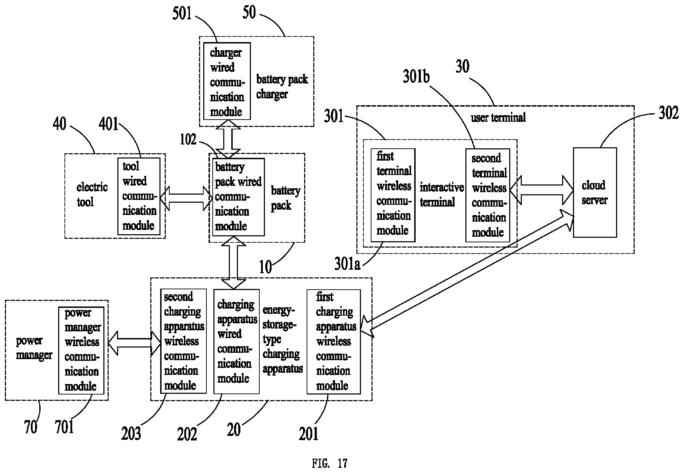

As another example, referring to FIG. 17, the third device is configured as a power manager 70 (i.e., the peripheral apparatus system further includes a power manager), and the power manager 70 is provided with a power manager wireless communication module 701.

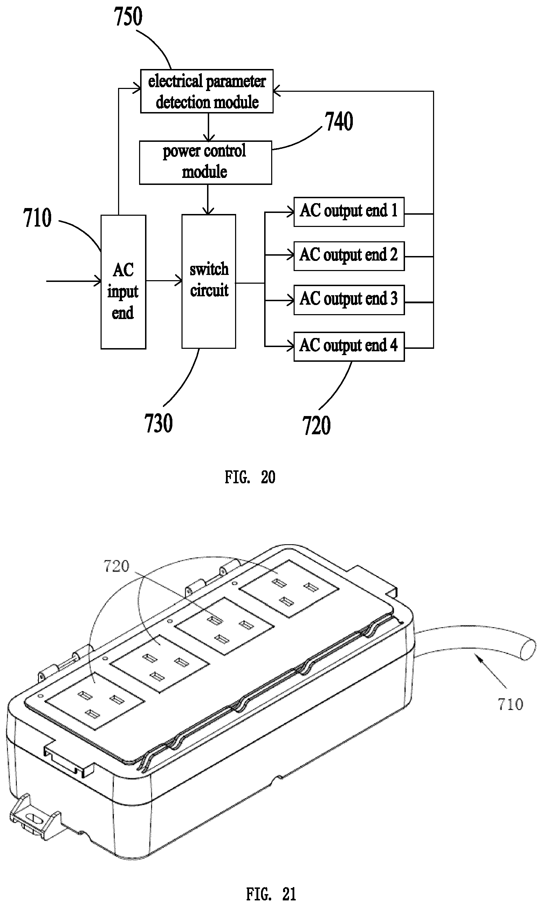

As shown in FIG. 20 and FIG. 21, the power manager 70 includes a power manager housing, an AC input end 710, a plurality of AC output ends 720, a switch circuit 730, and a power control module 740. The AC input end 710 is arranged on the power manager housing and is used to connect to an external AC power source. The plurality of AC output ends 720 are arranged in the power manager housing and are used to connect to external electrical devices to supply power to the external electrical devices. The switch circuit 730 and the power control module 740 are arranged in the power manager housing. The power control module 740 is electrically connected to the switch circuit 730. The switch circuit 730 is used to receive control signals output by the power control module 740, and control, based on the control signals, conduction to be enabled or disabled between the AC input end 710 and the plurality of AC output ends 720, separately.

The data of the power manager 70 can be transmitted to the hub device through the second wireless communication module and the short-distance wireless communication module, and then transmitted to the user terminal 30 through the long-distance wireless communication module of the hub device.

In this embodiment, the hub device is configured as the energy-storage-type charging apparatus 20. The energy-storage-type charging apparatus 20 includes the first charging apparatus wireless communication module 201 (i.e., the aforementioned long-distance wireless communication module of the first wireless communication module) and the second charging apparatus wireless communication module 203 (i.e., the aforementioned short-distance wireless communication module of the first wireless communication module).

The data of the power manager 70 can be transmitted to the energy-storage-type charging apparatus 20 through the power manager wireless communication module 701 and the second charging apparatus wireless communication module 203, and then transmitted to the user terminal through the first charging apparatus wireless communication module 201 of the energy-storage-type charging apparatus 20.

Further, the first charging apparatus wireless communication module 201 can be configured as a wireless communication module capable of long-distance communication, and the first charging apparatus wireless communication module may be one of a 3G module, a 4G module, a 5G module, a Lora module, a sigfox module, or an NB-IOT module. Preferably, in this embodiment, the first charging apparatus wireless communication module 201 uses a 4G module. The power manager wireless communication module 701 and the second charging apparatus wireless communication module 203 can be configured as wireless communication modules capable of short-distance communication, and they may be one of Bluetooth modules, Zigbee modules, sub-1 G modules, or RF433 modules. Preferably, in this embodiment, the power manager wireless communication module 701 and the second charging apparatus wireless communication module 203 use Bluetooth modules.

Further, the power manager 70 further includes an electrical parameter detection module 750. The electrical parameter detection module 750 is electrically connected to the power control module 740 and is used to detect the electrical parameters of at least one of the AC input end 710 and the plurality of AC output ends 720.

In this embodiment, the power manager 70 includes one AC input end and four AC output ends. The power manager 70 may be connected to external electrical devices, such as the charging apparatus 20 and the battery pack charger 50, to supply power to the external electrical devices. The electrical parameter detection module is used to detect current parameters. The power control module obtains the current parameters of each AC output end from the electrical parameter detection module and determines the target AC output end to supply power to based on the current parameters of each AC output end. Then, the power control module, based on the determined target AC output end, outputs control signals to control the action of the switch circuit, thus enabling the conduction in the corresponding target AC output end and supplying power to the corresponding external electrical device. Specifically, the power control module determines the target AC output end to supply power to based on the electrical parameters. This process can be configured according to the user's actual needs, which will not be listed here one by one.

Power manager wireless communication module, power manager wireless communication module, charging apparatus wireless communication module, power manager wireless communication module, charging apparatus wireless communication module. The power manager 70 is provided with a power manager wireless communication module 701, and the charging apparatus 20 is provided with a charging apparatus wireless communication module 203, which matches the power manager wireless communication module 701. Data of the power manager can be transmitted to the charging apparatus 20 through the power manager wireless communication module 701 and the charging apparatus wireless communication module 203, and then transmitted to the user terminal 30 through the first wireless communication module 201 of the charging apparatus 70.

Further, the data of the power manager includes port state data and fault data. The port state data is used to indicate whether each AC output end is powered and whether each AC output end is connected to an external electrical device, which specifically includes the following states: no device and not energized, no device but energized, device connected but not energized, and device connected and energized. The fault data includes at least one of port overload, AC input under-voltage, AC input over-voltage, and abnormal charging interruption information. Port overload refers to the overload of an AC output end.

One application scenario of the power manager 70 is used as an example.

When a gardening team works outdoors, there are often few AC power outlets available in the outdoor environment. When a plurality of electrical devices need to use AC power sources, the power manager 70 may be used to distribute one line of AC power to a plurality of AC output ends 720, thereby providing AC power sources to the plurality of electrical devices. Take the example where both the power manager wireless communication module 701 and the charging apparatus wireless communication module 203 use Bluetooth modules. When the charging apparatus 20 needs to charge, the charging apparatus 20 is connected to the AC output end 720 of the power manager 70. In this case, the distance between the power manager 70 and the charging apparatus 20 is within the communication distance of the Bluetooth modules, and thus the power manager 70 and the charging apparatus 20 can communicate through the Bluetooth modules. Therefore, the data of the power manager 70 can be transmitted to the charging apparatus 20 through the Bluetooth module and then transmitted to the user terminal 30 through the first wireless communication module 201 of the charging apparatus 20, enabling data interaction between the power manager 70 and the user terminal 30. Specifically, the power manager 70 reports the aforementioned port state information and fault information to the user terminal 30, allowing the user to monitor the port state of the AC output end 720 and the charging state of the electrical device.

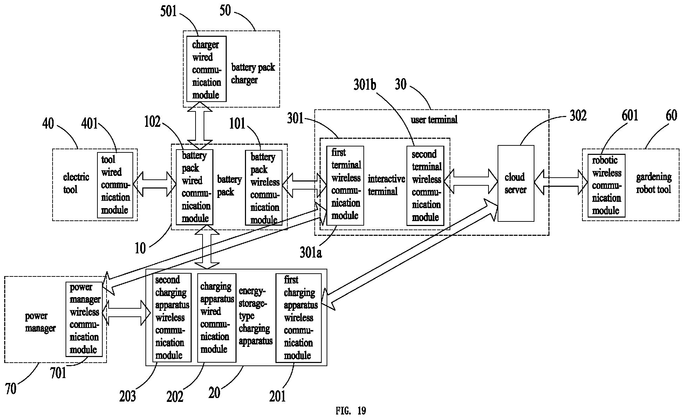

Further, referring to FIG. 19, the power manager 70 is configured with a first manager communication mode and a second manager communication mode. In the first manager communication mode, the data of the power manager can be directly transmitted to the user terminal through the second wireless communication module. In the second manager communication mode, the data of the power manager can be transmitted to the hub device through the second wireless communication module and the short-distance wireless communication module and then transmitted to the user terminal through the long-distance wireless communication module of the hub device.

The long-distance wireless communication module is configured to enable data transmission between the hub device and the user terminal within a first preset communication distance, and the second wireless communication module is configured to enable data transmission between the power manager and the user terminal within a power manager preset communication distance, wherein the first preset communication distance is greater than the power manager preset communication distance.

Specifically, in this embodiment, in the first manager communication mode, the data of the power manager can be directly transmitted to the user terminal 30 through the power manager wireless communication module 701. In the second manager communication mode, the data of the power manager can be transmitted to the energy-storage-type charging apparatus 20 through the power manager wireless communication module 701 and the second charging apparatus wireless communication module 203 and then transmitted to the user terminal 30 through the first charging apparatus wireless communication module 201 of the energy-storage-type charging apparatus 20.

Further, the user terminal is configured with an application. In the case where the power manager 70 is connected to a charging apparatus 20 in a matching manner, the application can choose the mode of data interaction between the user terminal 30 and the power manager 70. The mode of data interaction between the user terminal 30 and the power manager 70 includes at least: the user terminal 30 directly performing data interaction with the power manager 70, and the user terminal 30 performing data interaction with the power manager 70 through the charging apparatus 20.

Specifically, when the power manager 70 establishes communication with the user terminal 30 in a data interaction mode, if a switch is needed, the user can manually switch through the application on the user terminal 30. For example, when the power manager 70 first establishes communication directly with the user terminal 30 through the power manager wireless communication module 701, if the user needs to switch to the data interaction mode where the power manager 70 communicates with the user terminal 30 through the charging apparatus 20, the switch may be manually performed through the application on the user terminal 30.

It can be understood that the power manager 70 communicates with the user terminal 30 through different communication modes in different scenarios.

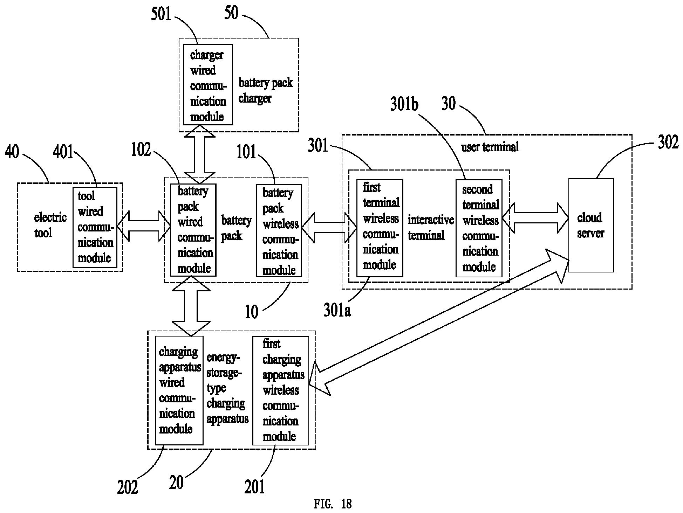

Referring to FIG. 18, take the example where the power manager 70 transmits data to the user terminal 30, the interactive terminal 301 is a smartphone, and both the power manager wireless communication module 701 and the charging apparatus wireless communication module 203 use Bluetooth modules:
For the first manager communication mode, in a working scenario, the device operator of the gardening team often holds the electric tool in the working area to work; when the device operator carries around the interactive terminal 301, with the Bluetooth function of the interactive terminal 301 of the device operator activated, and the distance between the interactive terminal 301 and the power manager 70 is within the communication distance of the Bluetooth module, in this case, the power manager 70 can establish communication with the user terminal 30 through the power manager wireless communication module 701, and in this case, the data of the power manager 70 can be directly transmitted to the user terminal 30 through the power manager wireless communication module 701. There may also be other application scenarios for the power manager 70 during actual use, which will not be listed here one by one.

For the second manager communication mode, when the energy-storage-type charging apparatus 20 is low on power and needs to be connected to the power manager 70 for charging, in this case, the distance between the power manager 70 and the energy-storage-type charging apparatus 20 is within the communication distance of the Bluetooth module, and the power manager 70 and the energy-storage-type charging apparatus 20 can communicate through the power manager wireless communication module 701 and the second charging apparatus wireless communication module 203. Therefore, the data of the power manager 70 can be transmitted to the energy-storage-type charging apparatus 20 through the power manager wireless communication module 701 and the second charging apparatus wireless communication module 203 and then transmitted to the user terminal 30 through the first charging apparatus wireless communication module 201 of the energy-storage-type charging apparatus 20. There may also be other application scenarios for the power manager 70 during actual use, which will not be listed here one by one.

Compared with the prior art, the power manager 70 is configured with two communication modes, which not only can enable communication between the power manager 70 and the user terminal 30 in different scenarios, thereby improving the reliability of data interaction between the power manager 70 and the user terminal 30, ensuring that users can effectively monitor and manage the power manager 70, but also achieve a low cost. Further, the communication mode where the data of the power manager 70 is transmitted to the user terminal 30 through the energy-storage-type charging apparatus 20 also provides a communication link that allows the data of the power manager 70 to be transmitted to the user terminal 30 without being limited by the use of the interactive terminal 301.

Based on the above embodiment, and referring to FIG. 18, further, the battery pack 10 is provided with a battery pack wireless communication module 101, and the electric tool 40 is configured with a first tool communication mode and a second tool communication mode. In the first tool communication mode, the battery pack 10 receives and stores the data of the electric tool 40. When the battery pack 10 is in communication connection with the hub device, the hub device receives the data of the electric tool 40 stored in the battery pack 10 and transmits the data to the user terminal 30 through the first wireless communication module. In the second tool communication mode, the battery pack 10 receives the data of the electric tool 40 and directly transmits the data to the user terminal through the battery pack wireless communication module 101.

The first wireless communication module is configured to enable data transmission between the hub device and the user terminal within a first preset communication distance, and the battery pack wireless communication module 101 is configured to enable data transmission between the battery pack 10 and the user terminal 30 within a second preset communication distance, wherein the first preset communication distance is greater than the second preset communication distance.

In this embodiment, the hub device is configured as an energy-storage-type charging apparatus 20, and the energy-storage-type charging apparatus 20 is provided with a first charging apparatus wireless communication module 201 (i.e., the first wireless communication module of the hub device). Specifically, the battery pack wireless communication module 101 is configured as a wireless communication module capable of short-distance communication with the user terminal. The battery pack wireless communication module may be one of a Bluetooth module, a Zigbee module, a sub-1G module, or an RF433 module. Preferably, in this embodiment, the battery pack wireless communication module 101 uses a Bluetooth module. The first charging apparatus wireless communication module 201 is configured as a wireless communication module capable of long-distance communication with the user terminal, and the first charging apparatus wireless communication module may be one of a 3G module, a 4G module, a 5G module, a Lora module, a sigfox module, or an NB-IOT module. Preferably, in this embodiment, the first charging apparatus wireless communication module 201 uses a 4G module.

In this embodiment, in the first tool communication mode, the battery pack 10 receives and stores the data of the electric tool 40. When the battery pack 10 is in communication connection with the energy-storage-type charging apparatus 20, the energy-storage-type charging apparatus 20 receives the data of the electric tool 40 stored in the battery pack 10 and transmits the data to the user terminal 30 through the first charging apparatus wireless communication module 201. In the second tool communication mode, the battery pack 10 receives data of the power tool 40 and directly transmits the data to the user terminal 30 through the battery pack wireless communication module 101.

It can be understood that the electric tool 40 communicates with the user terminal 30 through different communication modes in different scenarios. For the specific working scenarios of the two communication modules, reference may be made to the definitions in the previously mentioned apparatus assembly embodiments, which will not be repeated here. Wherein the first charging apparatus wireless communication module 201 is the apparatus wireless communication module of the aforementioned apparatus assembly.

Based on the above embodiment, and referring to FIG. 18, further, the battery pack 10 is provided with a battery pack wireless communication module 101, and the battery pack charger 50 is configured with a first charger communication mode and a second charger communication mode. In the first charger communication mode, the battery pack 10 receives and stores the data of the battery pack charger 50. When the battery pack 10 is in communication connection with the hub device, the hub device receives the data of the battery pack charger 50 stored in the battery pack 10 and transmits the data to the user terminal 30 through the first wireless communication module. In the second charger communication mode, the battery pack 10 receives the data of the battery pack charger 50 and directly transmits the data to the user terminal through the battery pack wireless communication module 101.

The first wireless communication module is configured to enable data transmission between the hub device and the user terminal within a first preset communication distance, and the battery pack wireless communication module 101 is configured to enable data transmission between the battery pack 10 and the user terminal 30 within a second preset communication distance, wherein the first preset communication distance is greater than the second preset communication distance.

In this embodiment, the hub device is configured as an energy-storage-type charging apparatus 20, and the energy-storage-type charging apparatus 20 is provided with a first charging apparatus wireless communication module 201 (i.e., the first wireless communication module of the hub device).

Specifically, the battery pack wireless communication module 101 is configured as a wireless communication module capable of short-distance communication with the user terminal. The battery pack wireless communication module may be one of a Bluetooth module, a Zigbee module, a sub-1G module, or an RF433 module. Preferably, in this embodiment, the battery pack wireless communication module 101 uses a Bluetooth module. The first charging apparatus wireless communication module 201 is configured as a wireless communication module capable of long-distance communication with the user terminal, and the first charging apparatus wireless communication module may be one of a 3G module, a 4G module, a 5G module, a Lora module, a sigfox module, or an NB-IOT module. Preferably, in this embodiment, the first charging apparatus wireless communication module 201 uses a 4G module.

In this embodiment, in the first charger communication mode, the battery pack 10 receives and stores the data of the battery pack charger 50. When the battery pack 10 is in communication connection with the energy-storage-type charging apparatus 20, the energy-storage-type charging apparatus 20 receives the data of the battery pack charger 50 stored in the battery pack 10 and transmits the data to the user terminal 30 through the first charging apparatus wireless communication module 201. In the second charger communication mode, the battery pack 10 receives data of the battery pack charger 50 and directly transmits the data to the user terminal 30 through the battery pack wireless communication module 101.

It can be understood that the battery pack charger 50 communicates with the user terminal 30 through different communication modes in different scenarios. For the specific working scenarios of the two communication modules, reference may be made to the definitions in the previously mentioned apparatus assembly embodiments, which will not be repeated here. The first charging apparatus wireless communication module 201 is the apparatus wireless communication module of the aforementioned apparatus assembly.

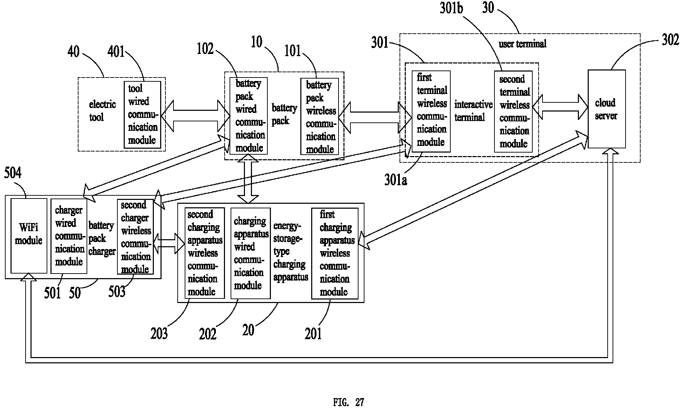

In yet another embodiment, referring to FIG. 27, and based on the above embodiment, the battery pack charger 50 is further provided with a WiFi module 504. The data of the battery pack charger can be directly transmitted to the user terminal 30 through the WiFi module 504.

The battery pack charger 50 typically needs to be connected to an external AC power source for use and is thus generally used in an indoor environment. By adding a WiFi module 504 and using the WiFi network in an indoor environment, the battery pack charger 50 can be directly connected to the Internet and communicate with a cloud server, thereby enabling on-line remote communication between the battery pack charger 50 and the user terminal.

It can be understood that the battery pack charger 50 communicates with the user terminal 30 through different communication modes in different scenarios.

In this embodiment, take the example where the battery pack charger transmits data to the user terminal 30, the interactive terminal 301 is a smartphone, and the second charger wireless communication module 203 uses a Bluetooth module:
When there is a WiFi network available in the environment where the battery pack charger 50 is used, the battery pack charger 50 can be connected to the WiFi network through the WiFi module to achieve remote communication with the user terminal. The data of the battery pack charger 50 can be directly transmitted to the user terminal 30 through the WiFi module. When there is no WiFi network available in the environment where the battery pack charger is used, and the battery pack charger 50 and the user terminal 30 are within the communication range of the Bluetooth module, the data of the battery pack charger 50 can be directly transmitted to the user terminal 30 through the second charger wireless communication module 503.

For other specific implementations of the battery pack charger 50, reference may be made to the previous embodiments, which will not be repeated here.

In one embodiment, referring to FIG. 19, the device system further includes a gardening robot tool 60. The gardening robot tool 60 is configured with a robotic wireless communication module 601, and the gardening robot tool 60 can directly perform data interaction with the user terminal 30 through the robotic wireless communication module 601. Specifically, the data of the gardening robot tool 60 can be transmitted to the user terminal 30 through the robotic wireless communication module 601. The gardening robot tool 60 can also receive configuration data or control instruction data sent by the user terminal 30 through the robotic wireless communication module 601.

As an example, the gardening robot tool 60 may be an intelligent lawnmower, and the robotic wireless communication module 601 is configured as a wireless communication module capable of long-distance communication with the user terminal 30. Specifically, the robotic wireless communication module 601 may be one of a 3G module, a 4G module, a 5G module, a Lora module, a sigfox module, or an NB-IOT module. Preferably, in this embodiment, the robotic wireless communication module 601 uses a 4G module.

In one embodiment, the device system includes a battery pack charger 50, an inverter 80, an electric tool 40, and a battery pack 10.

The battery pack charger 50 includes a charger housing 510, a battery pack charging interface 520 arranged on the charger housing 510, and a charging circuit arranged in the charger housing 510. The charging circuit is electrically connected to the battery pack charging interface 520. The charging circuit is at least used to connect to an external power source and convert the electric energy from the external power source into direct current, which is output through the battery pack charging interface 520. The battery pack 10 includes a terminal pole seat provided with several terminals, and the terminal pole seat is electrically connected to the battery pack charging interface 520 to obtain DC electric energy.

The inverter 80 includes an inverter housing 810, an inverter battery pack interface 820 arranged on the inverter housing 810, an AC output interface 830, and an inverter circuit arranged in the inverter housing 810. The terminal pole seat of the battery pack 10 can be electrically connected to the inverter battery pack interface 820, and the inverter circuit is used to convert the DC electric energy of the battery pack 10 into AC electric energy, which is output through the AC output interface 830.

The battery pack 10 can connect to the electric tool 40 to provide the DC electric energy for the electric tool 40. Moreover, the battery pack 10 can connect to the inverter battery pack interface 820 to provide the AC electric energy for an AC tool connected to the AC output interface 830.

In this embodiment, the battery pack 10 can be respectively connected to the electric tool, the battery pack charger 50, and the inverter 80 in a matching manner to achieve the conversion and transfer of electric energy within the device system, thereby better meeting the electricity needs of the gardening team.

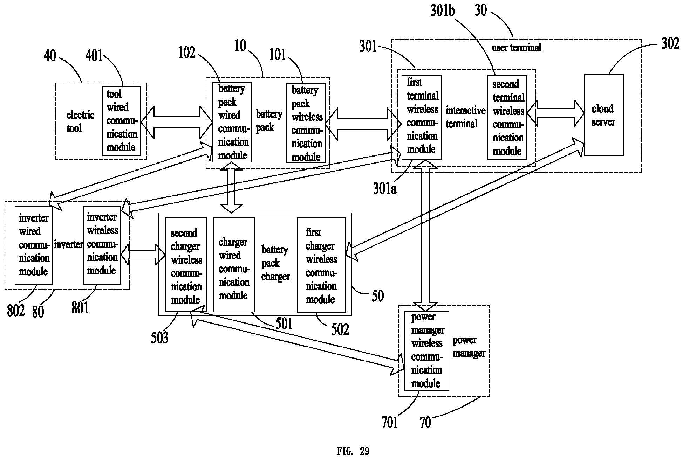

In one embodiment, referring to FIG. 29, the hub device is configured as a battery pack charger 50. The battery pack charger 50 is configured with a first charger wireless communication module 502 (i.e., the aforementioned first wireless communication module or long-distance wireless communication module of the hub device) and a second charger wireless communication module 503 (i.e., the aforementioned short-distance wireless communication module of the hub device).

Further, the first charger wireless communication module 502 may be one of a 3G module, a 4G module, a 5G module, a Lora module, a sigfox module, or an NB-IOT module. The second charger wireless communication module 503 may be one of a Bluetooth module, a Zigbee module, a sub-1G module, and an RF433 module. Preferably, in this embodiment, the first charger wireless communication module 502 uses a 4G module, and the second charger wireless communication module 503 uses a Bluetooth module.

In this embodiment, the device system includes a battery pack charger 50, an electric tool 40, a battery pack 10, a power manager 70, and an inverter 80. The battery pack charger 50 communicates with the battery pack 10 in a wired communication mode and communicates with the inverter 80 and the power manager 70 in a wireless communication mode. Moreover, the electric tool 40 communicates with the battery pack 10 in a wired communication mode. It can be understood that the battery pack belongs to the aforementioned first type of device, the electric tool belongs to the aforementioned second type of device, and the inverter and power manager belong to the aforementioned third type of device. It can be understood that, as in the previous embodiment, the energy-storage-type charging apparatus 20, by configuring a long-distance communication module and a short-distance communication module and capable of communicating with the battery pack 10 in a wired communication mode, can respectively achieve data interaction between the electric tool 40, the battery pack 10, the power manager 70, the inverter 80, i.e., the aforementioned three types of devices, and the user terminal 30. Similarly, the battery pack charger 50 in this embodiment can achieve data interaction between the electric tool 40, the battery pack 10, the power manager 70, the inverter 80, and the user terminal 30 using the same communication mode, which will not be repeated here.

In other embodiments, the battery pack charger 50 may also include one or more combinations of the first charger wireless communication module 201, the second charger wireless communication module 503, and a WiFi module 504. Preferably, the battery pack charger 50 is provided with a Bluetooth module, a 4G module, and a WiFi module. On this basis, the communication modes between the devices in the device system can be inferred by combining the previous embodiments, which will not be repeated here.

It should be noted that the device system in the present application may be any one or more combinations of the previous embodiments.

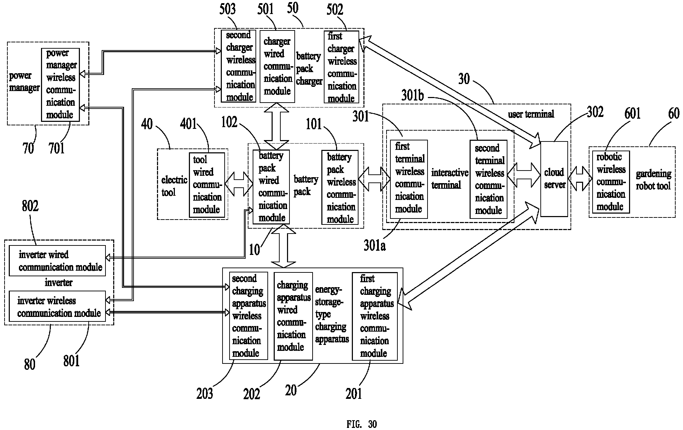

In one embodiment, referring to FIG. 30, the device system in the present application includes an energy-storage-type charging apparatus 20, a battery pack charger 50, an electric tool 40, a battery pack 10, a power manager 70, an inverter 80, and a gardening robot tool 60, that is, all the devices mentioned in the previous embodiments. The battery pack charger 50 and the energy-storage-type charging apparatus 20 are both provided with a long-distance wireless communication module and a short-distance wireless communication module and both can serve as hub devices to achieve data interaction between the aforementioned first type of device, the second type of device, the third type of device, and the user terminal. The communication modes between each device and the user terminal 30 can be inferred by combining with the previous embodiments, which will not be repeated here.

As can be seen from the previous embodiments, in the device system provided by the present application, by arranging in the hub device a wireless communication module capable of long-distance communication, communication between the hub device and the user terminal is established. This enables the transmission of data of the battery pack 10, the electric tool 40, the battery pack charger 50, the power manager 70, and the inverter 80 to the user terminal 30, thereby enabling data interaction between all devices in the device system and the user terminal 30. That is, in the device system, by selecting a suitable device as the hub device and using the hub device as the communication hub of the device system, the aforementioned first type of device, second type of device, and third type of device in the device system can all achieve data interaction with the user terminal via the wireless communication module of the hub device. This allows for the monitoring and management of devices through the user terminal 30 while effectively reducing the communication costs of the system, thus avoiding the cost increase that would result from configuring a wireless communication module for every device in the device system.

In other embodiments, in the device system of the present application, the hub device can also be configured as an inverter 80. The battery pack can be electrically connected to the inverter 80 and discharge through the inverter 80, and the inverter 80 can communicate with the battery pack 10. The battery pack 10 can be connected to the electric tool 40 and supply power to the electric tool 40, and the battery pack 10 can communicate with the electric tool 40. The inverter 80 is provided with an inverter wireless communication module 801.

Both the data of the electric tool 40 and the data of the battery pack 10 can be transmitted to the user terminal 30 through the inverter wireless communication module 801 of the inverter 80. When the battery pack 10 is connected to the electric tool 40, the battery pack 10 receives and stores data of the electric tool 40. When the battery pack 10 is in communication connection with the inverter 80, the inverter 80 receives the data of the battery pack 10 and the data of the electric tool 40 stored in the battery pack 10 and transmits the data to the user terminal 30 through the inverter wireless communication module 801.

The specific implementation of the inverter may refer to the previous embodiments, which will not be repeated here. Further, in this embodiment, the inverter 80 communicates with the battery pack 10 in a wired communication mode. Preferably, a serial port communication module and/or a CAN communication module are used. The inverter wireless communication module 801 uses a Bluetooth module.

In the above embodiment, the types of parameters specifically included in the data of the battery pack, the electric tool, the energy-storage-type charging apparatus, and the battery pack charger can refer to the definitions in the previously mentioned apparatus assembly embodiments, which will not be repeated here.

Further, the data of the battery pack is divided into the real-time data of the battery pack and the historical data stored in the battery pack according to the fact whether the data is real-time. The data of the battery pack received by the apparatus includes the real-time data of the battery pack and the historical data stored in the battery pack. It should be noted that the real-time data of the battery pack refers to the current data of the battery pack after the battery pack is plugged into the apparatus, and the historical data stored in the battery pack refers to the data stored in the battery pack before the battery pack is plugged into the apparatus.

As described above, the battery pack 10 communicates with the charging apparatus in a wired communication mode. The charging apparatus is configured with an apparatus wired communication module, and the battery pack 10 is configured with a battery pack wired communication module 102. Further, the battery pack includes a first battery pack terminal, the apparatus includes a first apparatus terminal, and the first battery pack terminal and the first apparatus terminal are electrically connected to form a data transmission path. Both the real-time data of the battery pack and the historical data stored in the battery pack are transmitted to the apparatus through the data transmission path.

In this embodiment, the battery pack 10 includes a charging interface of the battery pack for connecting to the charging interface of the charging apparatus in a matching manner. The charging interface of the battery pack includes a positive terminal, a negative terminal, an analog signal communication terminal, and a digital signal communication terminal. The charging interface of the charging apparatus includes a positive terminal, a negative terminal, an analog signal communication terminal and a digital signal communication terminal that are matched with the charging interface of the battery pack.

As an example, the charging interface of the battery pack includes a digital signal communication terminal, i.e., the aforementioned first battery pack terminal. The charging interface of the charging apparatus also includes a digital signal communication terminal, i.e., the aforementioned first charging apparatus terminal. The first battery pack terminal is electrically connected to the first charging apparatus terminal to form a data transmission path, and both the real-time data of the battery pack 10 and the historical data stored in the battery pack 10 are transmitted to the charging apparatus through the data transmission path.

Specifically, the first battery pack terminal may be configured as a serial port terminal, and the first charging apparatus terminal may be configured as a serial port terminal. The first battery pack terminal is used to be electrically connected to the first charging apparatus terminal to form a serial port signal transmission path, and both the real-time data of the battery pack and the historical data stored in the battery pack 10 are transmitted to the charging apparatus through the serial port signal transmission path.

Alternatively, the first battery pack terminal and the first charging apparatus terminal are both configured as CAN terminals. The CAN terminals of the battery pack 10 include a first CAN terminal and a second CAN terminal, and the CAN terminals of the charging apparatus include a third CAN terminal and a fourth CAN terminal. The first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack 10 are transmitted to the charging apparatus through the differential signal transmission path.

As another example, the charging interface of the battery pack includes two digital signal communication terminals, and the charging interface of the charging apparatus also includes two digital signal communication terminals.

Specifically, the two digital signal communication terminals of the battery pack 10 are a serial port terminal and a pair of CAN terminals, and the two communication terminals of the charging apparatus are a serial port terminal and a pair of CAN terminals. When the battery pack 10 is connected to the energy-storage-type charging apparatus 20 in a matching manner, a serial port terminal of the battery pack 10 and a serial port terminal of the charging apparatus are electrically connected to form a serial port signal transmission path, namely, a serial port signal transmission path, and a pair of CAN terminals of the battery pack 10 and a pair of CAN terminals of the charging apparatus are electrically connected to form a differential signal transmission path. The battery pack 10 and the charging apparatus choose one of the serial port signal transmission path and the differential signal transmission path to transmit real-time data of the battery pack and historical data stored in the battery pack 10. Further, the differential signal transmission path is preferentially selected to transmit the real-time data of the battery pack 10 and the historical data stored in the battery pack 10.

Further, the specific data types included in the real-time data of the battery pack 10 and the historical data stored in the battery pack 10, the specific implementations of the charging interface of the charging apparatus and the charging interface of the battery pack, the communication method between the battery pack 10 and the charging apparatus, and the specific transmission method of the real-time data of the battery pack 10 and the historical data stored in the battery pack 10 can refer to the definitions in the previously mentioned apparatus assembly embodiments, which will not be repeated here.

It should be noted that the communication links in the embodiments of the device system may be arranged independently or in combination with the communication links of any embodiment. When the combined arrangement mode is adopted, the communication links between the devices in the device system can be enriched, providing more communication paths for device data transmission. This can effectively ensure reliable data transmission and reduce communication costs.

It should be noted that in the above embodiments, the energy-storage-type charging apparatus 20, the battery pack 10, the electric tool 40, the battery pack charger 50, the inverter 80, the power manager 50, the gardening robot tool 60, the interactive terminal 301, and the cloud server 302 are respectively provided with a control module and a storage unit in addition to the communication module. The control module is electrically connected to the communication module and is used to transmit data to other devices through the communication module or receive data transmitted by other devices through the communication module. The control module is electrically connected to the storage unit and is used to store obtained data in the storage unit or retrieve the data stored in the storage unit. Specifically, the control module can be configured as a microcontroller, an MCU, or other device with data receiving, transmitting, and processing functions. The communication module includes the wired communication module and the wireless communication module for each device, which will not be detailed here.

It should be noted that the data of the ×× device mentioned in the present application (such as the data of the battery pack, the data of the electric tool, the data of the battery pack charger, the data of the power manager, or the data of the inverter) should be understood as at least a portion of the data of the ×× device.

Further, in the above embodiments, the electric tool 40, the battery pack 10, the battery pack charger 50, the energy-storage-type charging apparatus 20, the power manager 70, the inverter 80, and the gardening robot tool 60 are all configured with unique identification codes. Through their respective identification codes, the electric tool 40, the battery pack 10, the battery pack charger 50, the energy-storage-type charging apparatus 20, the power manager 70, the inverter 80, and the gardening robot tool 60 can establish associations with the user terminal 30. In this embodiment, the interactive terminal 301 is configured with an application 301c. By using the application 301c, the interactive terminal 301 can be associated with the devices and establish communication via the devices' identification codes. Specifically, the identification code is preferably in the form of a serial number, which has a uniquely corresponding QR code. The QR code is affixed or printed on the device. Through the application 301c, the device can be associated with the application 301c by inputting the device's serial number or by scanning the code. Certainly, other modes, such as the mode of finding the device via Bluetooth, can also be used, which will not be listed here one by one. After the application 301c establishes an association with the device, the device can establish communication with the user terminal 30, and the application 301c can be used to display the state or control the function of the device.

The apparatus assemblies and device systems in the previous embodiments can effectively enhance the communication reliability between the battery pack 10, the energy-storage-type charging apparatus 20, the electric tool 40, the battery pack charger 50, the power manager 70, the inverter 80, and the user terminal 30 by appropriately configuring communication modules for devices in the apparatus assemblies and the device systems and appropriately configuring communication modes among the energy-storage-type charging apparatus 20, the battery pack 10, the electric tool 40, the battery pack charger 50, the power manager 70, and the inverter 80. Consequently, users are able to effectively monitor and manage the energy-storage-type charging apparatus 20, the battery pack 10, the electric tool 40, the battery pack charger 50, the power manager 70, and the inverter 80. Moreover, low cost can be achieved by efficiently utilizing the communication modules. In addition, the user terminal 30 may also be used to conduct wired monitoring and management of the gardening robot tool 60.

The energy-storage-type charging apparatus 20, the battery pack 10, the electric tool 40, the battery pack charger 50, the power manager 70, the inverter 80, and the gardening robot tool 60, through data interaction with the user terminal 30, can achieve the storage of operating state data on the user terminal 30. In the case where the user terminal 30 is provided with a display interface, the display of corresponding device data on the user terminal 30 can be achieved, such that a user can more intuitively learn the running state of the corresponding device. In the case where the user terminal 30 is provided with a control panel or a touch interface, it is possible to remotely control the corresponding device by sending configuration data or control instructions through the user terminal 30, such that various functional controls can be performed on the corresponding device according to actual needs, such as charging control of the device and device finding, thereby facilitating comprehensive monitoring and management of the device by the user.

In one embodiment, based on the aforementioned apparatus assembly or device system, the energy-storage-type charging apparatus 20 can be controlled in terms of its charging mode through the user terminal 30.

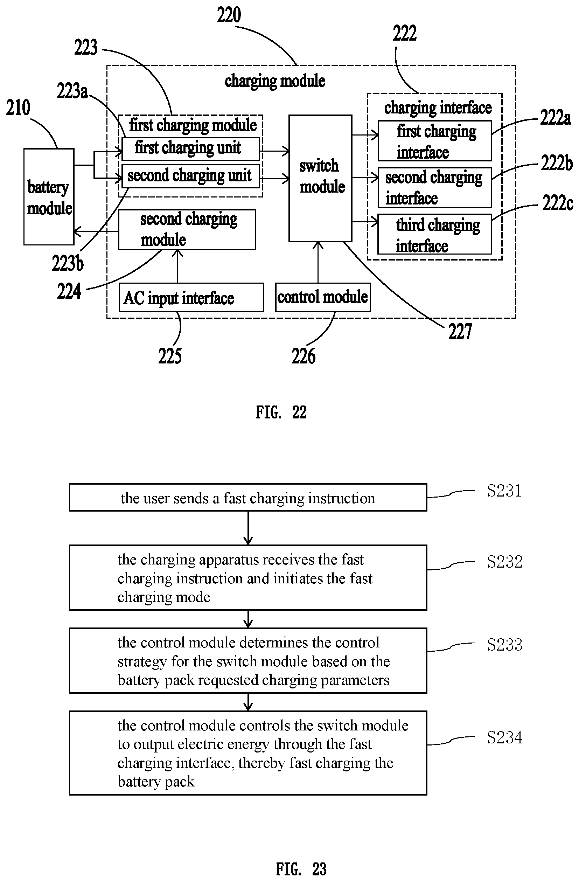

Specifically, referring to FIG. 22 and FIG. 23, the energy-storage-type charging apparatus 20 is configured with a regular charging mode and a fast charging mode. The output power of a single charging interface in the fast charging mode is greater than that in the regular charging mode. When a user urgently needs to use the battery pack, the fast charging mode can be activated. When the user does not urgently need to use the battery pack, the regular charging mode can be activated. This can meet the user's needs in different scenarios.

The interactive terminal 301 is configured with an application 301c, and the application 301c is provided with a fast charging mode trigger switch. When the user activates the fast charging mode trigger switch through the application 301c, the interactive terminal 301 sends a fast charging instruction to the energy-storage-type charging apparatus 20 through a second terminal wireless communication module 301b. When the fast charging mode trigger switch is deactivated, the interactive terminal 301 sends a regular charging instruction to the energy-storage-type charging apparatus 20 through the second terminal wireless communication module 301b.

As described above, the energy-storage-type charging apparatus 20 includes a battery module 210 and a charging module 220. The charging module 220 includes a first charging module 223, a second charging module 224, and a plurality of charging interfaces 222. The plurality of charging interfaces 222 can all be connected to the battery pack 10 to charge the battery pack 10. In this embodiment, further, the first charging module 223 includes a plurality of charging units. The input end of each charging unit is electrically connected to the battery module 210, and the output end of each charging unit is connected to at least one charging interface, allowing the plurality of charging units to charge the battery pack 10 simultaneously or separately. The energy-storage-type charging apparatus 20 further includes a control module 226 and a switch module 227. The switch module 227 is connected between the plurality of charging units and the plurality of charging interfaces and is used to selectively connect the plurality of charging units and the plurality of charging interfaces. The control module 226 is electrically connected to the switch module 227 and is used to output control signals to control the conduction to be enabled or disabled for each switch in the switch module 227. The control module 226 is further used to receive and respond to the charging mode switching instruction sent by the user, controlling the energy-storage-type charging apparatus 20 to switch between the regular charging mode and the fast charging mode, that is, controlling the charging interface of the energy-storage-type charging apparatus 20 to output different power levels to charge the battery pack 10.

Illustratively, the first charging module 223 may include two charging units, and each charging unit is separately connected to one charging interface, or each charging unit is separately connected to two charging interfaces, or one of the charging units is connected to one charging interface while the other charging unit is connected to two charging interfaces. Alternatively, the first charging module 223 may include three charging units, and each charging unit is connected to one or more charging interfaces. The number of charging units and charging interfaces may be set according to the charging requirements and the size of the energy-storage-type charging apparatus 20, which is not limited by the present application.

As a specific example, as shown in FIG. 22, the first charging module 223 includes two charging units, namely the first charging unit 223a and the second charging unit 223b. The charging interface 222 includes three charging interfaces, namely the first charging interface 222a, the second charging interface 222b, and the third charging interface 222c. The switch module 227 may be a switch network composed of a plurality of switches. The control module 226, by controlling the conduction to be enabled or disabled for the plurality of switches in the switch module 227, can control whether the two charging units output electric energy in parallel or individually to a single charging interface or a plurality of charging interfaces.

Controlling the fast charging of the energy-storage-type charging apparatus 20 through the user terminal 30 specifically includes the following steps:
In step S231, when a user activates the fast charging mode trigger switch through the application 301c of the interactive terminal 301, the interactive terminal 301 responds to the user's operation by sending a fast charging instruction to the energy-storage-type charging apparatus 20.
In step S232, the energy-storage-type charging apparatus 20, after receiving the fast charging instruction, initiates the fast charging mode.
In step S233, the control module 226 determines the control strategy for the switch module 227 based on the battery pack requested charging parameters.
In step S234, the control module 226 controls the switch module 227 to output electric energy through the fast charging interface, thereby fast charging the battery pack 10.

Specifically, in step S233, the battery pack requested charging parameters may be the requested charging current, requested charging power, or other parameters representing the charging capability.

It should be noted that the requested charging parameters of the battery pack 10 are determined by combining the maximum charging parameters that the charging apparatus can output and the maximum charging parameters that the battery pack itself allows. Therefore, since in the fast charging mode, the energy-storage-type charging apparatus 20 can make the first charging unit and the second charging unit output in parallel to a single charging interface, while in the regular charging mode, the two charging units need to output to a plurality of charging interfaces, thus the maximum charging parameters that a single charging interface of the energy-storage-type charging apparatus 20 can output in the fast charging mode are greater than the maximum charging parameters that a single charging interface of the energy-storage-type charging apparatus 20 can output in regular charging mode. Thus, the battery pack 10 can select a larger requested charging parameter within the range of its allowable maximum charging parameters to achieve fast charging.

In this embodiment, take the example where the control strategy for the switch module 227 is determined based on the battery pack requested charging power.

In the fast charging mode, the control module 226 obtains the battery pack 10's requested charging power and compares the battery pack 10's requested charging power with the maximum output power of a single charging unit. When the requested charging power is less than or equal to the maximum output power of a single charging unit, the output power of the single charging unit can meet the fast charging need of the battery pack 10, and the control module 226 controls the single charging unit to charge the battery pack 10. When the requested charging power is greater than the maximum output power of a single charging unit, the combined output power of a plurality of charging units is required to meet the fast charging need. In this case, the control module 226 controls at least two charging units to be connected in parallel to charge the battery pack 10. It can be understood that in the fast charging mode, the number of charging units in parallel may be selected based on the battery pack 10's requested charging power, and the number is not limited to two. In the fast charging mode, the maximum power output by the first charging module 223 is not less than 3.6 KW. Illustratively, the maximum output power of the first charging module 223 may be 3.6 KW, 4 KW, 4.8 KW, 6 KW, or 7.2 KW, etc.

Specifically, in step S234, a certain charging interface of the energy-storage-type charging apparatus 20 may be preset as a fast charging interface, or the charging interface may be selected and set by the user when initiating the fast charging mode. In this embodiment, the first charging interface 222a is preset as the fast charging interface. In the fast charging mode, the energy-storage-type charging apparatus 20 rapidly charges the battery pack 10 connected to the first charging interface 222a.

In the regular charging mode, the output power of a single charging unit can meet the charging need of the battery pack 10, so the control module 226 controls the single charging unit to charge the battery pack 10 connected to its charging interface. Illustratively, the energy-storage-type charging apparatus 20 charges the battery pack 10 connected to the first charging interface 222a through the first charging unit 131 and/or alternately charges the battery packs 10 connected to the second charging interface 222b and third charging interface 222c through the second charging unit 132. In the regular charging mode, the maximum output power from the charging unit to a single charging interface is not less than 1.8 KW. Illustratively, the maximum output power of a single charging interface is between 1.8-3.6 KW; for example, the maximum output power may be 1.8 KW, 2 KW, 2.4 KW, 3 KW, or 3.6 KW.

In the regular charging mode, for a 0.2 KWH battery pack 10, the energy-storage-type charging apparatus 20 can fully charge the battery pack within 8-15 min and charge an empty battery pack 10 to 80% of its rated capacity in 5-12 min. For a 0.6 KWH battery pack 10, the energy-storage-type charging apparatus 20 can fully charge the battery pack within 13-25 min and charge an empty battery pack 10 to 80% of its rated capacity in 9-22 min. In the fast charging mode, for a 0.2 KWH battery pack 10, the energy-storage-type charging apparatus can fully charge the battery pack within 4-7 min, and for a 0.6 KWH battery pack 10, the energy-storage-type charging apparatus can fully charge the battery pack within 8-15 min. Therefore, when a gardening team urgently needs to use the battery pack 10, they can activate the fast charging mode to reduce the waiting time for electricity.

Further, in this embodiment, the energy-storage-type charging apparatus 20 can be remotely controlled to switch charging modes through the user terminal 30, facilitating user operation.

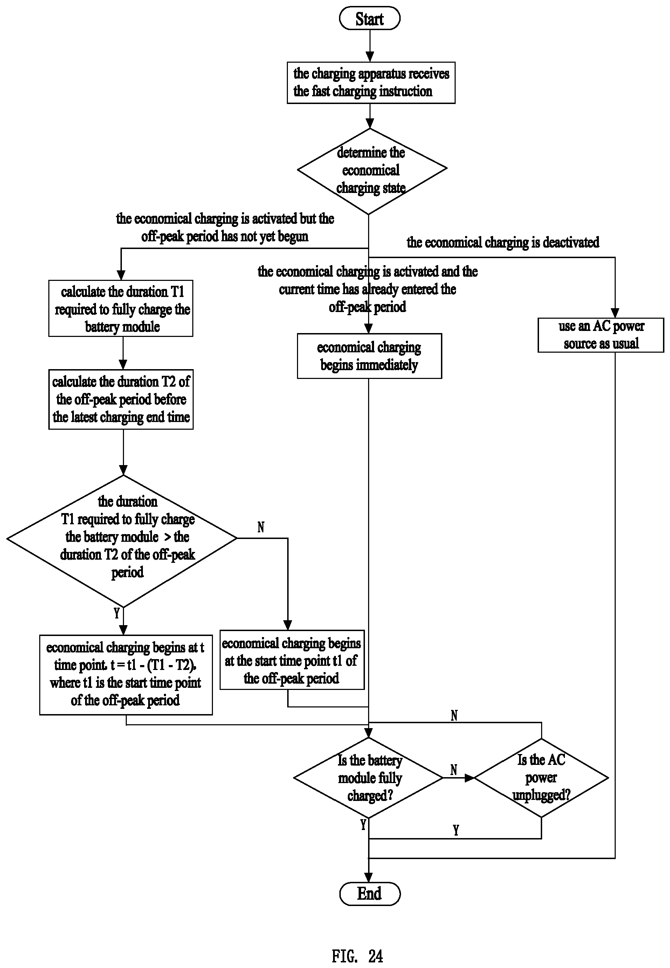

In one embodiment, referring to FIG. 22 and FIG. 24, the energy-storage-type charging apparatus 20 can be controlled for economical charging through the user terminal 30 based on the aforementioned energy system or device system. Since the power grid features peak and off-peak electricity pricing periods, to improve the economical efficiency of charging, the energy-storage-type charging apparatus 20 is configured with an economical charging mode to save on electricity usage costs.

Specifically, the circuit structure of the energy-storage-type charging apparatus 20, as shown in the embodiment in FIG. 20, includes a battery module 210, a second charging module 224, an AC input interface 225, and a control module 226. Preferably, the second charging module 224 uses an ACDC module, and the control module 226 is connected to the second charging module 224 and controls the activation or deactivation of the second charging module.

The interactive terminal 301 is configured with an application 301c, and the application 301c is provided with an entry for configuring economical charging mode data and an entry for triggering the economical charging mode. The entry for configuring economical charging mode data includes an entry for setting the off-peak electricity rate period and an entry for setting the latest charging end time. A user can configure economical charging parameters through the entry for setting the off-peak electricity rate period and the entry for setting the latest charging end time of the application 301c. The latest charging end time is the time point set by the user at which the energy-storage-type charging apparatus 20 needs to be used by the user next time, and the entry for triggering the economical charging mode is used to respond to the user's trigger operation to send an economical charging instruction to the charging apparatus 20.

When the user triggers the entry for triggering the economical charging mode through the application, the interactive terminal 301 sends an economical charging instruction to the energy-storage-type charging apparatus 20 through the second terminal wireless communication module 301b. The energy-storage-type charging apparatus 20 receives the economical charging instruction, saves the economical charging parameters, activates the economical charging mode, and then determines the current economical charging state.

When the economical charging is activated but the off-peak period has not yet begun, the energy-storage-type charging apparatus 20 calculates the duration T1 required to fully charge the battery module 210, as well as the duration T2 of the off-peak period before the latest charging end time, and then compares the two. When the duration T1 required to fully charge the battery module 210 is greater than the duration T2 of the off-peak period before the latest charging end time, the energy-storage-type charging apparatus 20 calculates the start time point for economical charging and begins economical charging at that time point. The start time point for economical charging t is given by: t = t1 - (T1 - T2), wherein t1 is the start time point of the off-peak period. Otherwise, economical charging begins at the start time point t1 of the off-peak period.

When the economical charging is activated and the current time has already entered the off-peak period, economical charging begins immediately.

When the economical charging is deactivated, the battery module 210 is charged using an AC power source as usual.

Specifically, after receiving the economical charging instruction, the energy-storage-type charging apparatus deactivates the second charging module, i.e., the ACDC module. When it is determined that immediate charging is required, or when the calculated start time is reached, the second charging module is activated to begin the economical charging, using AC power to charge the battery module.

In this embodiment, by setting an economical charging mode, the economical efficiency of charging can be effectively improved. Further, the user sets the latest charging time, and based on the off-peak electricity rate period, the latest charging end time, and the battery's own power information, calculates the most economical charging period during which the battery can be fully charged. This can ensure that the battery module 210 of the energy-storage-type charging apparatus 20 can be fully charged before the set latest charging end time, facilitating subsequent use by the user. Further, if the charging for the energy-storage-type charging apparatus 20 does not commence at the calculated charging start time or if a power outage occurs before the charge is complete, the control module 226 will send charging reminder information to the user terminal 30. This reminds the user to check the reason for the failure to start charging or for the abnormal power outage, thus avoiding impacts on subsequent use due to users forgetting to plug in the device or other anomalies that result in the device not being charged.

It should be noted that economical charging control is applicable not only to the energy-storage-type charging apparatus 20 but also to the gardening robot tool 60, which will not be listed here one by one.

In one embodiment, based on the aforementioned apparatus assembly or device system, the device finding function can be implemented through the user terminal 30.

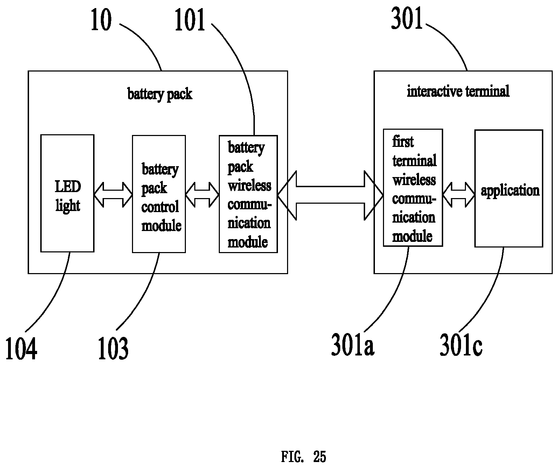

Take the battery pack finding function as an example. Referring to FIG. 25, the battery pack 10 includes a battery pack control module 103, a second wireless communication module 101, and an LED light 104. The battery pack control module 103 is electrically connected to the LED light 104 and can control the LED light 104. The battery pack control module 103 is electrically connected to the battery pack wireless communication module 101 for receiving data transmitted by other devices through the battery pack wireless communication module 101. As described above, the interactive terminal 301 includes a first terminal wireless communication module 301a, and the first terminal wireless communication module 301a of the interactive terminal 301 can establish communication with the battery pack wireless communication module 101 of the battery pack 10. Further, the interactive terminal 301 is configured with an application 301c, and the application 301c is provided with an entry for triggering a battery pack 10 finding instruction. When the user triggers the entry for triggering a battery pack 10 finding instruction through the application 301c, the interactive terminal 301 will send a battery pack 10 finding instruction to the battery pack 10 through the first terminal wireless communication module 301a. The battery pack 10, upon receiving the battery pack 10 finding instruction through the battery pack communication module, sends the finding instruction to the battery pack control module 103. The battery pack control module 103 receives and responds to the battery pack 10 finding instruction by outputting a control signal to control the LED light 104 to blink several times. Preferably, in this embodiment, the battery pack control module 103 controls the LED light 104 to blink five times. This allows the user to quickly find the target battery pack 10 based on the blinking of the LED light 104.

It should be noted that the device finding function in this embodiment, besides finding the battery pack 10, can also be applied to finding other devices.

Those skilled in the art will understand that various modifications and improvements can be made to the content disclosed in the present disclosure. For example, the various devices or assemblies described above can be implemented through hardware, software, firmware, or a combination of some or all of the three.

**In** addition, although the present disclosure makes various references to certain units in systems according to the embodiments of the present disclosure, any number of different units can be used and operated on the client and/or server. Units are merely illustrative, and different aspects of the system and method may use different units.

Flowcharts are used in the present disclosure to illustrate the steps of the methods according to the embodiments of the present disclosure. It should be understood that preceding or subsequent steps do not necessarily have to be executed in precise order. Instead, various steps may be executed in reverse order or simultaneously. Additionally, other operations may be added to these processes.

Those of ordinary skill in the art can understand that all or part of the steps in the above methods can be implemented by instructing relevant hardware through a computer program. The program can be stored in a computer-readable storage medium, such as a read-only memory. Optionally, all or part of the steps in the above embodiments can also be implemented using one or more integrated circuits. Correspondingly, the modules/units in the above embodiments can be implemented in the form of hardware or as software functional modules. The present disclosure is not limited to any specific combination of hardware and software.

Unless otherwise defined, all terms used here have the same meaning as commonly understood by those of ordinary skill in the art to which the present disclosure belongs. It should also be understood that terms such as those defined in standard dictionaries should be interpreted as having meanings consistent with their context in the related art, and should not be interpreted in an idealized or overly formalistic sense unless expressly defined here in such a manner.

The above is an explanation of the present disclosure and should not be considered as a limitation to the present disclosure. Although several exemplary embodiments of the present disclosure have been described, it will be readily understood by those skilled in the art that many modifications can be made to the exemplary embodiments without departing from the novel teachings and advantages of the present disclosure. Therefore, all such modifications are intended to be included within the scope of the present disclosure as defined by the claims. It should be understood that the above is an explanation of the present disclosure and should not be considered limited to the specific embodiments disclosed. Moreover, modifications to the disclosed embodiments and other embodiments are intended to be included within the scope of the appended claims. The present disclosure is defined by the claims and the equivalents thereof.

## Claims

1. An apparatus assembly, comprising
a battery pack and an apparatus provided with an apparatus wireless communication module, wherein the apparatus is capable of being electrically connected to the battery pack for power transmission, the battery pack is capable of communicating with the apparatus, and the battery pack is provided with a battery pack wireless communication module;
the battery pack is configured with a first battery pack communication mode and a second battery pack communication mode; in the first battery pack communication mode, data of the battery pack is directly transmitted to a user terminal through the battery pack wireless communication module; in the second battery pack communication mode, the apparatus receives the data of the battery pack and transmits the data to the user terminal through the apparatus wireless communication module;
the apparatus wireless communication module is configured to enable data transmission between the apparatus and the user terminal within a first preset communication distance, and the battery pack wireless communication module is configured to enable data transmission between the battery pack and the user terminal within a second preset communication distance, wherein the first preset communication distance is greater than the second preset communication distance.

2. The apparatus assembly according to claim 1, wherein the apparatus is configured as an energy-storage-type charging apparatus, and
the energy-storage-type charging apparatus comprises a battery module and a charging module provided with a charging interface, wherein the battery module is electrically connected to the charging module, and the charging module converts electric energy of the battery module and outputs the electric energy through the charging interface to charge the battery pack connected to the charging interface.

3. The apparatus assembly according to claim 1, wherein the apparatus is configured as a battery pack charger, and
the battery pack charger comprises a charger housing, a battery pack charging interface arranged on the charger housing, and a charging circuit arranged in the charger housing, wherein the charging circuit is electrically connected to the battery pack charging interface, and the charging circuit is at least used to connect to an external alternating current (AC) power source and convert electric energy input from the external AC power source into direct current for outputting through the battery pack charging interface, thus charging the battery pack connected to the battery pack charging interface.

4. The apparatus assembly according to claim 1, wherein in the second battery pack communication mode, the apparatus communicates with the battery pack in a wired communication mode to receive the data of the battery pack.

5. The apparatus assembly according to claim 4, wherein the data of the battery pack received by the apparatus comprises real-time data of the battery pack and historical data stored in the battery pack;
the battery pack comprises a first battery pack terminal, and the apparatus comprises a first apparatus terminal, wherein the first battery pack terminal is electrically connected to the first apparatus terminal to form a data transmission path, and both the real-time data of the battery pack and the historical data stored in the battery pack are transmitted to the apparatus through the data transmission path.

6. The apparatus assembly according to claim 5, wherein the first battery pack terminal is configured as a serial port terminal, the first apparatus terminal is configured as a serial port terminal, the first battery pack terminal is used to be electrically connected to the first apparatus terminal to form a serial port signal transmission path, and both the real-time data of the battery pack and the historical data stored in the battery pack are transmitted to the apparatus through the serial port signal transmission path.

7. The apparatus assembly according to claim 5, wherein the first battery pack terminal and the first apparatus terminal are both configured as CAN terminals, CAN terminals of the battery pack comprise a first CAN terminal and a second CAN terminal, and CAN terminals of the apparatus comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the apparatus through the differential signal transmission path.

8. The apparatus assembly according to any one of claims 5 to 7, wherein the battery pack comprises a serial port terminal and a pair of CAN terminals, and the apparatus comprises a serial port terminal and a pair of CAN terminals;
when the battery pack is connected to the apparatus, the serial port terminal of the battery pack and the serial port terminal of the apparatus are electrically connected to form a serial port signal transmission path, and the pair of CAN terminals of the battery pack and the pair of CAN terminals of the apparatus are electrically connected to form a differential signal transmission path, wherein the battery pack and the apparatus choose one of the serial port signal transmission path and the differential signal transmission path to transmit the real-time data of the battery pack and the historical data stored in the battery pack.

9. The apparatus assembly according to claim 5, wherein during the power transmission when the battery pack is connected to the apparatus, the real-time data of the battery pack and the historical data stored in the battery pack are transmitted at different time periods.

10. The apparatus assembly according to claim 1, wherein the battery pack is capable of being connected to an electric tool and supplying power to the electric tool, and the electric tool is capable of communicating with the battery pack;
the battery pack is capable of receiving data of the electric tool and transmitting the data to the user terminal through the battery pack wireless communication module.

11. The apparatus assembly according to claim 1, wherein data of the apparatus is transmitted to the user terminal through the apparatus wireless communication module;
the apparatus and/or the battery pack is capable of receiving control instruction data sent by the user terminal;
wherein the apparatus receives apparatus control instruction data sent by the user terminal through the apparatus wireless communication module;
the battery pack receives battery pack control instruction data sent by the user terminal through the battery pack wireless communication module, or the apparatus receives the battery pack control instruction data sent by the user terminal through the apparatus wireless communication module and transmits the battery pack control instruction data to the battery pack.

12. A device system, comprising
a first device, a battery pack, and a hub device provided with a first wireless communication module, wherein the battery pack is capable of being connected to the first device and supplying power for the operation of the first device and the battery pack is capable of communicating with the first device, and the hub device and the first device are configured as devices that perform different work tasks;
the hub device is capable of being electrically connected to the battery pack for power transmission, and the battery pack is capable of communicating with the hub device;
both data of the first device and data of the battery pack are transmitted to a user terminal through the first wireless communication module of the hub device;
when the battery pack is connected to the first device, the battery pack receives and stores the data of the first device, and when the battery pack is in communication connection with the hub device, the hub device receives the data of the battery pack and the data of the first device stored in the battery pack and transmits the data of the battery pack and the data of the first device stored in the battery pack to the user terminal through the first wireless communication module;
the first device is configured as an electric tool.

13. The device system according to claim 12, wherein the device system further comprises a second device, and data of the second device is also transmitted to the user terminal through the first wireless communication module of the hub device;
the second device is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least used to connect to an external alternating current (AC) power source and convert alternating current input from the external AC power source into direct current for outputting through the battery pack charging interface, thus charging the battery pack connected to the battery pack charging interface;
the battery pack charger is capable of communicating with the battery pack;
when the battery pack is connected to the battery pack charger, the battery pack receives and stores data of the battery pack charger, and when the battery pack is in communication connection with the hub device, the hub device receives the data of the battery pack and the data of the battery pack charger stored in the battery pack and transmits the data of the battery pack and the data of the battery pack charger stored in the battery pack to the user terminal through the first wireless communication module.

14. The device system according to claim 13, wherein the first device and the second device communicate with the battery pack in a wired communication mode.

15. The device system according to claim 12, wherein the hub device communicates with the battery pack in a wired communication mode.

16. The device system according to claim 12, further comprising a third device, wherein the first wireless communication module comprises a short-distance wireless communication module and a long-distance wireless communication module, the third device is provided with a second wireless communication module that is matched and connected with the short-distance wireless communication module, and the third device only communicates with the hub device through the second wireless communication module and the short-distance wireless communication module;
data of the third device is transmitted to the hub device through the second wireless communication module and the short-distance wireless communication module and then transmitted to the user terminal through the long-distance wireless communication module of the hub device.

17. The device system according to claim 16, wherein the third device is configured as a battery pack charger, and
the battery pack charger comprises a charger housing, a battery pack charging interface arranged on the charger housing, and a charging circuit arranged in the charger housing, wherein the charging circuit is electrically connected to the battery pack charging interface, and the charging circuit is at least used to connect to an external AC power source and convert alternating current input from the external AC power source into direct current for outputting through the battery pack charging interface, thus charging the battery pack connected to the battery pack charging interface;
data of the battery pack charger is transmitted to the hub device through the second wireless communication module and the short-distance wireless communication module and then transmitted to the user terminal through the long-distance wireless communication module of the hub device.

18. The device system according to claim 16, wherein the third device is configured as a power manager, the power manager comprising:
a power manager housing;
an AC input end arranged on the power manager housing and used to connect to an external AC power source;
a plurality of AC output ends arranged on the power manager housing and used to connect to external electrical devices to supply alternating current to the external electrical devices; and
a control module and a switch circuit arranged in the power manager housing, wherein the control module is electrically connected to the switch circuit, and the switch circuit is used to receive control signals output by the control module and control, based on the control signals, conduction to be enabled or disabled between the AC input end and the plurality of AC output ends, separately;
data of the power manager is transmitted to the hub device through the second wireless communication module and the short-distance wireless communication module and then transmitted to the user terminal through the long-distance wireless communication module of the hub device.

19. The device system according to claim 16, wherein the third device is configured as an inverter, and
the inverter comprises an inverter housing, an inverter battery pack interface arranged on the inverter housing, an AC output interface, and an inverter circuit arranged in the inverter housing, wherein the inverter circuit is used to convert direct current (DC) electric energy of the battery pack connected to the inverter battery pack interface into AC electric energy for outputting through the AC output interface;
data of the inverter is transmitted to the hub device through the second wireless communication module and the short-distance wireless communication module and then transmitted to the user terminal through the long-distance wireless communication module of the hub device.

20. The device system according to claim 12, comprising:
a battery pack charger, wherein the battery pack charger comprises a charger housing, a battery pack charging interface arranged on the charger housing, and a charging circuit arranged in the charger housing, wherein the charging circuit is electrically connected to the battery pack charging interface and the charging circuit is at least used to connect to an external power source and convert electric energy from the external power source into direct current for outputting through the battery pack charging interface; the battery pack comprises a terminal pole seat provided with several terminals, and the terminal pole seat is electrically connected to the battery pack charging interface to obtain DC electric energy; and
an inverter, wherein the inverter comprises an inverter housing, an inverter battery pack interface arranged on the inverter housing, an AC output interface, and an inverter circuit arranged in the inverter housing, wherein the terminal pole seat of the battery pack is capable of being electrically connected to the inverter battery pack interface, and the inverter circuit is used to convert DC electric energy of the battery pack into AC electric energy for outputting through the AC output interface;
wherein the battery pack is capable of being connected to the electric tool to provide the DC electric energy for the electric tool, and the battery pack is capable of being connected to the inverter battery pack interface to provide the AC electric energy for an AC tool connected to the AC output interface.

21. The device system according to claim 12, wherein the battery pack is provided with a battery pack wireless communication module;
the electric tool is configured with a first tool communication mode and a second tool communication mode; in the first tool communication mode, the battery pack receives and stores data of the electric tool, and when the battery pack is in communication connection with the hub device, the hub device receives the data of the electric tool stored in the battery pack and transmits the data of the electric tool to the user terminal through the first wireless communication module; in the second tool communication mode, the battery pack receives the data of the electric tool and directly transmits the data of the electric tool to the user terminal through the battery pack wireless communication module;
the first wireless communication module is configured to enable data transmission between the hub device and the user terminal within a first preset communication distance, and the battery pack wireless communication module is configured to enable data transmission between the battery pack and the user terminal within a second preset communication distance, wherein the first preset communication distance is greater than the second preset communication distance.

22. The device system according to claim 13, wherein the battery pack is provided with a battery pack wireless communication module;
the battery pack charger is configured with a first charger communication mode and a second charger communication mode, wherein in the first charger communication mode, the battery pack receives and stores the data of the battery pack charger, and when the battery pack is in communication connection with the hub device, the hub device receives the data of the battery pack charger stored in the battery pack and transmits the data of the battery pack charger to the user terminal through the first wireless communication module; in the second charger communication mode, the battery pack receives the data of the battery pack charger and directly transmits the data of the battery pack charger to the user terminal through the battery pack wireless communication module;
the first wireless communication module is configured to enable data transmission between the hub device and the user terminal within a first preset communication distance, and the battery pack wireless communication module is configured to enable data transmission between the battery pack and the user terminal within a second preset communication distance, wherein the first preset communication distance is greater than the second preset communication distance.

23. The device system according to claim 17, wherein the battery pack charger is configured with a first battery pack charger communication mode and a second battery pack charger communication mode; in the first battery pack charger communication mode, the data of the battery pack charger is directly transmitted to the user terminal through the second wireless communication module; in the second battery pack charger communication mode, the data of the battery pack charger is transmitted to the hub device through the second wireless communication module and the short-distance wireless communication module and then transmitted to the user terminal through the long-distance wireless communication module of the hub device;
the long-distance wireless communication module is configured to enable data transmission between the hub device and the user terminal within a first preset communication distance, and the second wireless communication module is configured to enable data transmission between the battery pack charger and the user terminal within a charger preset communication distance, wherein the first preset communication distance is greater than the charger preset communication distance.

24. The device system according to claim 18, wherein the power manager is configured with a first manager communication mode and a second manager communication mode; in the first manager communication mode, the data of the power manager is directly transmitted to the user terminal through the second wireless communication module; in the second manager communication mode, the data of the power manager is transmitted to the hub device through the second wireless communication module and the short-distance wireless communication module and then transmitted to the user terminal through the long-distance wireless communication module of the hub device;
the long-distance wireless communication module is configured to enable data transmission between the hub device and the user terminal within a first preset communication distance, and the second wireless communication module is configured to enable data transmission between the power manager and the user terminal within a power manager preset communication distance, wherein the first preset communication distance is greater than the power manager preset communication distance.

25. The device system according to claim 19, wherein the inverter is configured with a first inverter communication mode and a second inverter communication mode; in the first inverter communication mode, the data of the inverter is directly transmitted to the user terminal through the second wireless communication module; in the second inverter communication mode, the data of the inverter is transmitted to the hub device through the second wireless communication module and the short-distance wireless communication module and then transmitted to the user terminal through the long-distance wireless communication module of the hub device;
the long-distance wireless communication module is configured to enable data transmission between the hub device and the user terminal within a first preset communication distance, and the second wireless communication module is configured to enable data transmission between the inverter and the user terminal within an inverter preset communication distance, wherein the first preset communication distance is greater than the inverter preset communication distance.

26. The device system according to any one of claims 12 to 25, wherein the hub device is configured as an energy-storage-type charging apparatus, and the energy-storage-type charging apparatus comprises a battery module and a charging module provided with a charging interface, wherein the battery module is electrically connected to the charging module, and the charging module converts electric energy of the battery module and outputs the electric energy through the charging interface.

27. The device system according to claim 12, 16, 18, 19, 20, 21, 24, or 25, wherein the hub device is configured as a battery pack charger, and the battery pack charger comprises a charger housing, a battery pack charging interface arranged on the charger housing, and a charging circuit arranged in the charger housing, wherein the charging circuit is electrically connected to the battery pack charging interface, and the charging circuit is at least used to connect to an external AC power source and convert alternating current input from the external AC power source into direct current for outputting through the battery pack charging interface, thus charging the battery pack connected to the battery pack charging interface.

28. The device system according to claim 12, wherein the hub device is configured as an inverter, and the inverter comprises an inverter housing, an inverter battery pack interface arranged on the inverter housing, an AC output interface, and an inverter circuit arranged in the inverter housing, wherein the inverter circuit is used to convert direct current of the battery pack connected to the inverter battery pack interface into alternating current for outputting through the AC output interface.

29. The device system according to claim 15, wherein the data of the battery pack received by the hub apparatus comprises real-time data of the battery pack and historical data stored in the battery pack;
the battery pack comprises a first battery pack terminal, and the hub device comprises a first apparatus terminal, wherein the first battery pack terminal is electrically connected to the first apparatus terminal to form a data transmission path, and both the real-time data of the battery pack and the historical data stored in the battery pack are transmitted to the hub device through the data transmission path.

30. The device system according to claim 29, wherein the first battery pack terminal is configured as a serial port terminal, the first apparatus terminal is configured as a serial port terminal, the first battery pack terminal is used to be electrically connected to the first apparatus terminal to form a serial port signal transmission path, and both the real-time data of the battery pack and the historical data stored in the battery pack are transmitted to the hub device through the serial port signal transmission path.

31. The device system according to claim 29, wherein the first battery pack terminal and the first apparatus terminal are both configured as CAN terminals, CAN terminals of the battery pack comprise a first CAN terminal and a second CAN terminal, and CAN terminals of the apparatus comprise a third CAN terminal and a fourth CAN terminal, wherein the first CAN terminal is electrically connected to the third CAN terminal, and the second CAN terminal is electrically connected to the fourth CAN terminal, such that a differential signal transmission path is formed, and both the real-time data of the battery pack and the historical data stored in the battery pack are transmitted to the hub device through the differential signal transmission path.

32. The device system according to any one of claims 29 to 31, wherein the battery pack comprises a serial port terminal and a pair of CAN terminals, and the hub device comprises a serial port terminal and a pair of CAN terminals;
when the battery pack is connected to the hub device, the serial port terminal of the battery pack and the serial port terminal of the hub device are electrically connected to form a serial port signal transmission path, and the pair of CAN terminals of the battery pack and the pair of CAN terminals of the hub device are electrically connected to form a differential signal transmission path, wherein the battery pack and the hub device choose one of the serial port signal transmission path and the differential signal transmission path to transmit the real-time data of the battery pack and the historical data stored in the battery pack.

33. The device system according to claim 29, wherein during the power transmission when the battery pack is connected to the hub device, the real-time data of the battery pack and the historical data stored in the battery pack are transmitted at different time periods; the hub device is configured as an inverter, and the inverter comprises an inverter housing, an inverter battery pack interface arranged on the inverter housing, an AC output interface, and an inverter circuit arranged in the inverter housing, wherein the inverter circuit is used to convert DC electric energy of the battery pack connected to the inverter battery pack interface into AC electric energy for outputting through the AC output interface.
